**Europäisches Patentamt**

**European Patent Office**

**Office européen des brevets**

(19)

(11) Veröffentlichungsnummer: **0 445 267 B1**

(12) # EUROPÄISCHE PATENTSCHRIFT

(45) Veröffentlichungstag der Patentschrift:
26.01.94 Patentblatt 94/04

(51) Int. Cl.$^5$: **G01D 5/12**, G01D 5/16, G01D 5/24, G01D 3/02

(21) Anmeldenummer: 90914389.3

(22) Anmeldetag: **10.09.90**

(86) Internationale Anmeldenummer:
**PCT/EP90/01528**

(87) Internationale Veröffentlichungsnummer:
**WO 91/05222 18.04.91 Gazette 91/09**

(54) **ANORDNUNG ZUR VERARBEITUNG VON SENSORSIGNALEN.**

(30) Priorität: **28.09.89 DE 3932479**
**07.12.89 DE 3940537**

(43) Veröffentlichungstag der Anmeldung:
**11.09.91 Patentblatt 91/37**

(45) Bekanntmachung des Hinweises auf die Patenterteilung:
**26.01.94 Patentblatt 94/04**

(84) Benannte Vertragsstaaten:
**BE CH DE DK ES FR GB IT LI NL SE**

(56) Entgegenhaltungen:
**EP-A- 0 105 120**
**VDI-Berichte, Nr. 509, Sensoren - Technologie und Anwendung, Tagung Bad Nauheim, 19-21 March 1984, pages 165-167, D. Schröder et al: "Kompensatoren der Temperaturfehler eines kapazitiven Einkammer-Differenzdrucksensors"**

(73) Patentinhaber: **ENDRESS U. HAUSER GMBH U. CO.**
**Hauptstr. 1, Postfach 1261**
**D-79689 Maulburg (DE)**

(72) Erfinder: **SCHNEIDER, Georg**
**Talstrasse 55**
**D-7860 Schopfheim-Lagenau (DE)**
Erfinder: **WAGNER, Richard**
**Hans-Thoma-Strasse 9**
**D-7864 Maulburg (DE)**

(74) Vertreter: **Morstadt, Volker, Dipl.-Ing.**
**c/o Endress + Hauser Flowtec AG**
**Kägenstrasse 7 Postfach 435**
**CH-4153 Reinach (BL) 1 (CH)**

EP 0 445 267 B1

Jouve, 18, rue Saint-Denis, 75001 PARIS

## Beschreibung

Bei praktisch allen Sensoren, die zur Messung physikalischer Meßgrößen dienen, besteht das Problem, daß der vom Sensor gelieferte Meßeffekt nicht den gewunschten Zusammenhang mit der zu erfassenden Meßgröße aufweist. Einerseits ist der Zusammenhang zwischen Meßgröße und Meßeffekt nichtlinear, und andererseits ist der Meßeffekt außer von der zu erfassenden physikalischen Meßgröße auch von physikalischen Störgrößen abhängig.

Ein Beispiel für eine sehr häufig in Erscheinung tretende physikalische Störgröße ist die Temperatur: Die meisten Sensoren sind temperaturabhängig, so daß der von ihnen erzeugte Meßeffekt, der beispielsweise ein Kapazitätsverhältnis sein kann, nicht nur von der zu messenden physikalischen Größe, z.B. Druck, Feuchte und dergleichen, sondern auch von der Temperatur abhängt.

Es ist üblich, durch eine geeignete Verarbeitung des Sensorsignals einerseits einen gewünschten, meist linearen Zusammemhang zwischen der Ausgangsgröße der Signalverarbeitung und der zu erfassenden physikalischen Meßgröße herzustellen und andererseits den Einfluß bestimmter Störgrößen zu unterdrücken.

So ist beispielsweise in "VDI-Berichte" Nr. 509, 1984, S. 165 bis 167, eine Anordnung zur Kompensation der Temperaturfehler eines kapazitiven Einkammer-Differenzdrucksensors beschrieben, bei welcher die Meßkapazitäten in Kombination mit Ladewiderständen in Meßintegratoren eingebaut sind und von einem amplitudengeregelten Sinusoszillator mit vorgegebener Frequenz gespeist werden.

Parallel zu den Meßintegratoren wird ein Referenzintegrator mit fester Zeitkonstante betrieben, der ohne Temperatursensor arbeitet. Die Ausgangsspannungen der Integratoren werden gewichtet und summiert, und die gleichgerichtete Ausgangsspannung des Summationspunktes dient zur Amplitudenregelung des Sinusoszillators in der Weise, daß sie gleich einer festen Referenzspannung gehalten wird. Durch zusätzliche Wichtung der Ausgangssignale der Integratoren, die dann zur Bildung des den Meßwert darstellenden Ausgangssignals summiert werden, erfolgt die Temperaturkompensation des Nullpunkts und die Kompensation des Nullpunktversatzes.

Eine ähnliche Anordnung ist in der EP-A 0 105 120 beschrieben. Dabei werden zur Temperaturkompensation ohne eigenen Temperatursensor aus den beiden Kapazitäten eines kapazitiven Differenzdruck-Sensors mittels eines Sinusoszillators ein Summen- und ein Differenzsignal abgeleitet. Das Differenzsignal wird durch mindestens einen Teilwert des Summensignals dividiert, was mittels entsprechender Wichtung vorgenommen wird.

Diese vorbeschriebenen Anordnungen sind auf die Verarbeitung der Sensorsignale von kapazitiven Sensoren und auf die Korrektur einer einzigen Störgröße, nämlich der Temperatur, beschränkt. Ferner läßt sich ihr Prinzip nicht auf andere Arten der analogen Signalverarbeitung übertragen, beispielsweise auf die in zunehmenden Maße angewendete Signalverarbeitung durch quantisierten Ladungstransport mit Ladungsbalance mittels Schalter-Kondensator-Strukturen ("switched-capacitor charge-balancing").

In der Zeitschrift "IEEE Transactions on Instrumentation and Measurement", Vol. IM-36, Nr. 4, Dezember 1987, Seiten 873 bis 878, ist beispielsweise beschrieben, wie das Ausgangssignal eines kapazitiven Differenzdrucksensors nach diesem Prinzip verarbeitet werden kann, und in der US-A-4 816 745, die der DE-A-3 633 791 entspricht, ist beschrieben, wie das Ausgangssignal eines Widerstandssensors in Form einer Halbbrücke mit gegensinnig veränderlichen Widerständen nach dem gleichen Prinzip verarbeitet werden kann. In diesen beiden Veröffentlichungen sind jedoch keine Maßnahmen zur Korrektur des Einflusses von Störgrößen oder von Fehlern im Zusammenhang zwischen Meßgröße und Meßeffekt beschrieben.

Ausgehend von diesem Stand der Technik ist es Aufgabe der Erfindung, Anordnungen zu schaffen, die die Korrektur des Einflusses beliebig vieler Störgrößen beliebiger Art auf den Meßeffekt sowie die Korrektur von Fehlern im Zusammenhang zwischen der Meßgröße und dem Meßeffekt bei einem Meßsensor beliebiger Art ermöglichen, der Meßeffekte der eingangs angegebenen Art erzeugt, und die insb. auch für die Signalverarbeitung durch quantisierte Ladungsübertragung mit Ladungsbalance mittels Schalter-Kondensator-Strukturen geeignet sind.

Diese Aufgabe wird durch die Anordnung nach Anspruch 1 oder die Anordnung nach Anspruch 5 gelöst. Mit der darin angegebenen Übertragungsfunktion der Signalverarbeitungsschaltung können alle wichtigen Kenndaten eines Meßsensors so korrigiert werden, daß der gewünschte Zusammenhang zwischen der auf ihn wirkenden Meßgröße und der Ausgangsgröße der Signalverarbeitungsschaltung erhalten wird und der Einfluß aller von Störgrößen stammenden Meßeffekte korrigiert wird. Hierzu ist es lediglich erforderlich, die Kenndaten des Meßsensors auszumessen und die Koeffizienten der Übertragungsfunktion in der Signalverarbeitungsschaltung, je nach deren Aufbau, entsprechend einzustellen.

Wenn die Signalverarbeitungsschaltung mit Wichtungsschaltungen zur Wichtung der Meßeffekte entsprechend Anspruch 1 ausgebildet ist, werden die Wichtungsfaktoren der Wichtungsschaltungen entsprechend den erforderlichen Koeffizienten der Übertragungsfunktion eingestellt.

Wenn die Signalverarbeitungsschaltung mit quantisierter Ladungsübertragung und Ladungsbalance mittels Schalter-Kondensator-Strukturen entsprechend Anspruch 5 arbeitet, wird die Übertragungsfunktion durch die Erzeugung zusätzlicher Korrektur-Ladungspakete realisiert, die in die Ladungsbalance einbezogen werden. In diesem Fall können die Koeffizienten der Übertragungsfunktion durch Einstellung der die Korrekturladungspakete bestimmenden Kapazitäten, Widerstände und/oder Spannungen auf die erforderlichen Werte eingestellt werden.

Die Signalverarbeitungsschaltung kann so aufgebaut sein, daß sie sowohl ein analoges als auch verschiedene Arten von digitalen Ausgangssignalen abgibt. Die Erfindung ist bei allen Arten von Meßsensoren anwendbar, die Meßeffekte der angegebenen Art erzeugen; der übliche Einsatz der Meßsensoren wird durch die Anwendung der Erfindung in keiner Weise beeinträchtigt.

Vorteilhafte Ausgestaltungen und Weiterbildungen der Erfindung sind in den abhängigen Ansprüchen gekennzeichnet.

Weitere Merkmale und Vorteile der Erfindung ergeben sich aus der folgenden Beschreibung von Ausführungsbeispielen, die in der Zeichnung dargestellt sind.

Fig. 1 zeigt ein Prinzipschema zur Erläuterung des der Erfindung zugrundeliegenden Problems,

Fig. 2 zeigt eine Schnittansicht eines kapazitiven Sensors,

Fig. 3 zeigt eine schematische Darstellung eines Widerstandssensors mit Dehnmeßstreifen in unbelastetem Zustand,

Fig. 4 zeigt den Widerstandssensor von Fig. 3 in belastetem Zustand,

Fig. 5 zeigt das Blockschaltbild einer Ausführungsform der erfindungsgemäßen Anordnung, bei welcher die Signalverarbeitungsschaltung mit Wichtungsschaltungen und einem Analog-Digital-Wandler ausgebildet ist,

Fig. 6 zeigt das Schaltbild eines Ausführungsbeispiels des Analog-Digital-Wandlers von Fig. 5,

Fig. 7 zeigt eine abgeänderte Ausführungsform der Anordnung von Fig. 5,

Fig. 8 zeigt das Schaltbild einer mit quantisiertem Ladungstransport und Ladungsbalance mittels Schalter-Kondensator-Strukturen arbeitenden Signalverarbeitungsschaltung für die Verarbeitung der von einem kapazitiven Sensor gelieferten Sensorsignale, die ein digitales Ausgangssignal erzeugt,

Fig. 9 zeigt Zeitdiagramme von Signalen, die in der Signalverarbeitungsschaltung von Fig. 8 vorkommen,

Fig. 10 zeigt eine abgeänderte Ausführungsform der in der Anordnung von Fig. 8 enthaltenen Korrekturschaltung,

Fig. 11 zeigt das Schaltbild einer mit quantisiertem Ladungstransport und Ladungsbalance mittels Schalter-Kondensator-Strukturen arbeitenden Signalverarbeitungsschaltung für die Verarbeitung des von einer Widerstands-Halbbrücke gelieferten Sensorsignals,

Fig. 12 zeigt Zeitdiagramme von Signalen, die in der Signalverarbeitungsschaltung von Fig. 11 vorkommen,

Fig. 13 zeigt einen Teil einer abgeänderten Ausführungsform der Anordnung von Fig. 11 für die Verarbeitung des von einer Widerstands-Vollbrücke gelieferten Sensorsignals,

Fig. 14 zeigt das Schaltbild einer mit quantisierten Ladungstransport und Ladungsbalance mittels Schalter-Kondensator-Strukturen arbeitenden Signalverarbeitungsschaltung für die Verarbeitung der von einem kapazitiven Meßsensor gelieferten Sensorsignale, die ein analoges Ausgangssignal erzeugt, das auf den Meßsensor zurückgekoppelt ist,

Fig. 15 zeigt Zeitdiagramme von Signalen, die in der Signalverarbeitungsschaltung von Fig. 14 vorkommen, für den Fall, daß der Meßeffekt $(C_x-C_{ref})/C_{ref}$ entspricht und $C_x > C_{ref}$ ist,

Fig. 16 zeigt denen der Fig. 14 entsprechende Zeitdiagramme für den Fall, daß der Meßeffekt $-(C_x-C_{ref})/C_{ref}$ entspricht und $C_x < C_{ref}$ ist,

Fig. 17 zeigt denen der Fig.14 entsprechende Zeitdiagramme für den Meßeffekt $(C_x-C_{ref})/C_x$, wobei $C_x > C_{ref}$ ist,

Fig. 18 zeigt denen der Fig. 14 entsprechende Zeitdiagramme für den Fall, daß der Meßeffekt $C_x/C_{ref}$ entspricht und $C_x > C_{ref}$ oder $C_x \leqq C_{ref}$ sein kann,

Fig. 19 zeigt das Schaltbild einer mit quantisiertem Ladungstransport und Ladungsbalance mittels Schalter-Kondensator-Strukturen arbeitenden Signalverarbeitungsschaltung für die Verarbeitung des von einer Widerstands-Halbbrücke gelieferten Sensorsignals, wobei ein analoges Ausgangssignal erzeugt wird, das auf den Meßsensor zurückgekoppelt ist,

Fig. 20 zeigt Zeitdiagramme von Signalen, die in der Signalverarbeitungsschaltung von Fig. 19 vorkommen, und

Fig. 21 zeigt einen Teil einer abgeänderten Ausführungsform der Anordnung von Fig. 19 für die Ver-

3

arbeitung des von einer Widerstands-Vollbrücke gelieferten Sensorsignals.

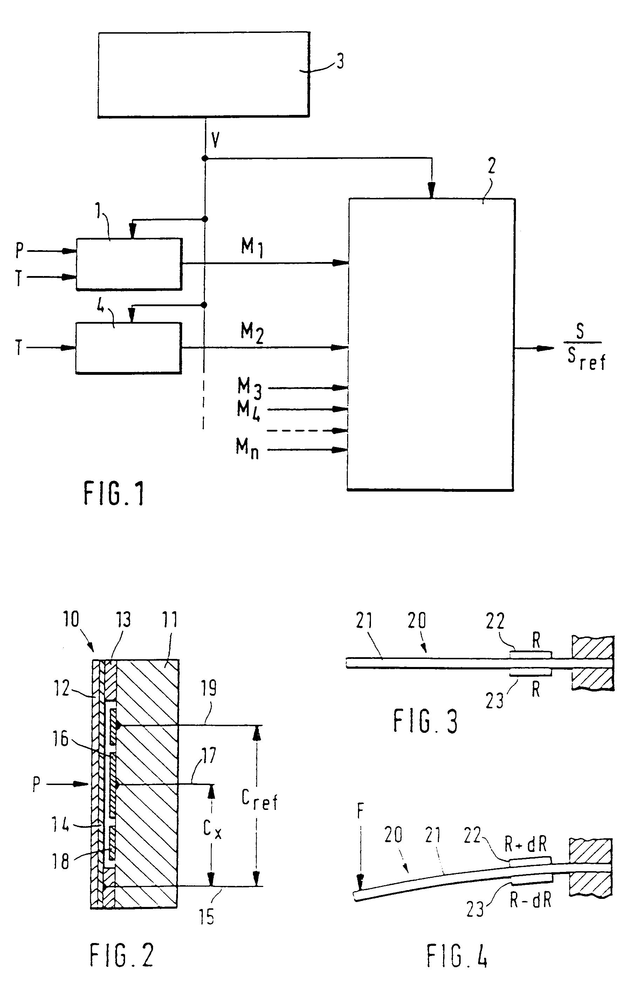

Anhand der schematischen Darstellung von Fig. 1 soll das der Erfindung zugrundeliegende Problem erläutert werden. Fig. 1 zeigt einen Meßsensor 1, mit dessen Hilfe eine physikalische Größe gemessen werden soll. Der Meßsensor 1 ist so ausgebildet, daß er eine elektrische Kenngröße aufweist, die in Abhängigkeit von der zu messenden physikalischen Größe verändert wird. Der Meßsensor 1 ist mit einer Signalverarbeitungsschaltung 2 verbunden, die den Wert der elektrischen Kenngröße des Meßsensors in ein auf ein Referenzsignal $S_{ref}$ bezogenes Ausgangssignal S umwandelt, das somit gleichfalls von der zu messenden physikalischen Größe abhängt. Die veränderliche elektrische Kenngröße des Meßsensors 1 kann beispielsweise eine Kapazität oder ein Widerstand sein. Das Ausgangssignal S kann beispielsweise ein Analogsignal, ein digitales Signal oder eine Frequenz sein. Eine Versorgungsspannungsquelle 3 liefert an den Meßsensor 1 ein Versorgungssignal V, das es ermöglicht, die Änderung der Kapazität, des Widerstands oder der sonstigen elektrischen Kenngröße in ein elektrisches Signal umzuwandeln, das der Signalverarbeitungsschaltung 2 zugeführt wird. Die Versorgungssignalquelle 3 ist in Fig. 1 zur Verdeutlichung getrennt dargestellt; in der Praxis ist sie meist in der Signalverarbeitungsschaltung 2 enthalten, die das erforderliche Versorgungssignal zum Meßsensor 1 liefert. In Fig. 1 ist ein weiterer Sensor 4 dargestellt, dessen Zweck später erläutert wird.

Wenn beispielsweise angenommen wird, daß die zu messende physikalische Größe ein Druck ist, kann für den Meßsensor 1 ein kapazitiver Drucksensor verwendet werden, bei welchem die vom Druck abhängige elektrische Kenngröße eine Kapazität oder ein Kapazitätsverhältnis ist. Fig. 2 zeigt eine Schnittansicht eines kapazitiven Drucksensors 10, der für diesen Zweck geeignet ist. Der Drucksensor 10 hat einen Grundkörper 11 und eine Membran 12, die am Umfang durch einen Abstandsring 13 miteinander verbunden sind. Die dem Grundkörper 11 zugewandte Fläche der Menbran 12 ist mit einer Metallisierung 14 versehen, die mit einem durch den Abstandsring 13 und durch den Grundkörper 11 hindurchgeführten Anschlußleiter 15 verbunden ist. Die der Membran 12 zugewandte Fläche des Grundkörpers 11 trägt eine zentrale kreisrunde Metallisierung 16, die mit einem durch den Grundkörper 11 hindurchgeführten Anschlußleiter 17 verbunden ist, und eine die Metallisierung 16 umgebende ringförmige Metallisierung 18, die mit einem durch den Grundkörper 11 hindurchgeführten Anschlußleiter 19 verbunden ist.

Wenn auf die Außenfläche der Membran 12 ein Druck P einwirkt, wird die Membran verformt, so daß sich der Abstand zwischen dem mittleren Bereich der Metallisierung 14 und der gegenüberliegenden zentralen Metallisierung 16 in Abhängigkeit von diesem Druck ändert. Die beiden Metallisierungen 14 und 16 bilden daher die Elektroden eines Meßkondensators, dessen Kapazität $C_x$ vom Druck P abhängt und zwischen den Anschlußleitern 15 und 17 gemessen werden kann. Dagegen bleibt der Abstand zwischen dem Randbereich der Metallisierung 14 und der gegenüberliegenden ringförmigen Elektrode 18 bei der druckabhängigen Verformung der Membran 12 im wesentlichen unverändert, da dieser Abstand durch den Abstandsring 13 festgelegt ist. Die beiden Metallisierungen 14 und 18 bilden daher die Elektroden eines Referenzkondensators, dessen Kapazität $C_{ref}$ vom Druck P unabhängig ist und zwischen den Anschlußleitern 15 und 19 gemessen werden kann.

Der vom Druck abhängige Meßeffekt ist bei einem solchen kapazitiven Drucksensor also die Änderung der Meßkapazität $C_x$ relativ zur Referenzkapazität $C_{ref}$. Der Meßeffekt kann, je nach dem Anwendungsfall, unterschiedlich dargestellt werden. Beispielsweise kann der Meßeffekt dem Kapazitätsverhältnis $C_x/C_{ref}$ zwischen der Meßkapazität und der Referenzkapazität entsprechen, doch wird vorzugsweise das Kapazitätsverhältnis $(C_x - C_{ref})/C_{ref}$ verwendet, weil man durch die Differenzbildung größere relative Änderungen erhält. Eine weitere Möglichkeit wäre das Kapazitätsverhältnis $(C_x - C_{ref})/C_x$. Natürlich könnte auch die druckabhängige Meßkapazität $C_x$ allein als Meßeffekt verwendet werden, doch ergibt die Quotientenbildung den Vorteil, daß der Meßeffekt von störenden Einwirkungen, die sich auf die beiden Kapazitäten $C_x$ und $C_{ref}$ in gleicher Weise auswirken, weitgehend unbeeinflußt bleibt.

Wenn die zu messende physikalische Größe eine Kraft ist, kann für den Meßsensor 1 ein Kraftsensor verwendet werden, wie er in Fig. 3 und 4 dargestellt ist. Der Kraftsensor 20 weist einen elastischen Träger 21 auf, der an einem Ende fest eingespannt ist und durch eine auf sein freies Ende einwirkende Kraft F verformbar ist. Auf zwei entgegengesetzten Seiten des Trägers 21 sind zwei Dehnmeßstreifen 22 und 23 so befestigt, daß sie bei einer Verformung des Trägers 21 gegensinnig verformt werden. Beispielsweise ist bei der in Fig. 4 dargestellten Verformung des Trägers 21 der Dehnmeßstreifen 22 gedehnt und der Dehnmeßstreifen 23 verkürzt. Bekanntlich hängt bei Dehnmeßstreifen der ohmsche Widerstand von der Längenänderung ab. Im unverformten Zustand (Fig. 3) haben die beiden Dehnmeßstreifen 22 und 23 den gleichen ohmschen Widerstand R. Bei der in Fig. 4 dargestellten gegensinnigen Verformung hat der Dehnmeßstreifen 22 den ohmschen Widerstand R + dR und der Dehnmeßstreifen 23 den ohmschen Widerstand R - dR. Der Kraftsensor 20 von Fig. 3 und 4 ist somit ein Beispiel für einen Sensor, bei dem die elektrische Kenngröße, die von der zu messenden physikalischen Größe abhängt, ein Widerstand ist. Der Meßeffekt, der zur Messung der Kraft F verwendet wird, ist vorzugsweise das Widerstandsverhältnis dR/R. Zur Gewinnung eines diesem Widerstandsverhältnis proportionalen Sensorsignals ist es bekannt, die beiden gegensinnig verformbaren Dehnmeßstreifen 22, 23 elektrisch zu einer Widerstands-Halbbrücke zu verbinden. Es sind auch Dehnmeßstreifen-Sensoren bekannt, bei denen zwei Paare von gegensinnig verformbaren Dehnmeßstreifen vorhanden sind, die zu einer Widerstands-Vollbrücke zusammengeschaltet sind.

Es sind noch zahlreiche andere Sensoren bekannt, die je nach der Art der zu messenden physikalischen Größe für den Meßsensor 1 von Fig. 1 verwendet werden können.

Im Idealfall würde der vom Meßsensor 1 gelieferte Meßeffekt $M_1$, der in der Signalverarbeitungsschaltung 2 zur Erzeugung des Ausgangssignals $S/S_{ref}$ verwendet wird, dem gewünschten Meßeffekt entsprechen, also beispielsweise dem Meßeffekt $(C_x - C_{ref})/C_{ref}$ im Fall des kapazitiven Drucksensors von Fig. 1 oder dem Verhältnis $dR/R$ im Fall des Kraftsensors von Fig. 3 und 4. Bei den üblichen Sensoren wird dieser Idealfall aus verschiedenen Gründen nicht erreicht. So ist beispielsweise bei dem kapazitiven Drucksensor 10 von Fig. 2 die Meßkapazität $C_x$ dem auf die Membran 12 einwirkenden Druck P nicht notwendigerweise proportional. Ferner besteht ein Nullpunktversatz, d.h. der Wert Null des Meßeffekts entspricht nicht dem Wert Null des zu messenden Drucks. Schließlich ist in den meisten Fällen der vom Meßsensor 1 gelieferte Meßeffekt $M_1$ außer von der zu messenden physikalischen Größe auch von Störgrößen abhängig. Beispielsweise ist bei dem kapazitiven Drucksensor 10 von Fig. 2 die Meßkapazität $C_x$ nicht nur von dem auf die Membran 12 einwirkenden Druck P, sondern auch von der Temperatur abhängig. Dementsprechend ist auch der vom Drucksensor 10 gelieferte Meßeffekt $M_1$ außer von dem gesuchten Kapazitätsverhältnis $(C_x - C_{ref})/C_{ref}$ auch von der Temperatur T abhängig, die in diesem Fall eine Störgröße darstellt.

Zur Korrektur der Einwirkung solcher Störgrößen ist es bekannt, weitere Sensoren vorzusehen, die jeweils Meßeffekte liefern, die nur durch die Störung und nicht durch die messende Größe beeinflußt werden. Für den zuvor als Beispiel angegebenen Fall, daß die Temperatur T eine Störgröße darstellt, ist in Fig. 1 der weitere Sensor 4 vorgesehen, der einen Meßeffekt $M_2$ liefert, der nur von der Temperatur T, aber nicht von dem zu messenden Druck P abhängt. Der Sensor 4 kann beispielsweise einen temperaturabhängigen Widerstand enthalten, der in Reihe mit einem temperaturunabhängigen Widerstand geschaltet ist, so daß ein Spannungsteiler gebildet wird, dessen Spannungsteilerverhältnis temperaturabhängig ist. Der Meßeffekt $M_2$ ist dann das temperaturabhängige Spannungsteilerverhältnis. Er kann in der Signalverarbeitungsschaltung 2 zur Korrektur der Temperaturabhängigkeit des Meßeffekts $M_1$ verwendet werden. Entsprechende weitere Sensoren, die Meßeffekte $M_3$, $M_4$ ... $M_n$ liefern, können zur Korrektur der Einwirkung anderer Störgrößen vorgesehen werden, wie in Fig. 1 durch weitere Eingänge der Signalverarbeitungsschaltung 2 angedeutet ist.

Der Einfluß der Störgrößen auf den Meßeffekt $M_1$ kann dann durch die Meßeffekte $M_2$, $M_3$ ... $M_n$ der weiteren Sensoren ausgedrückt werden, so daß der fehlerhafte Meßeffekt $M_1$ näherungsweise in der folgenden Form darstellbar ist:

$$M_1 = f(E_1, E_1^2, M_2 \ldots M_n)$$

$$= (a_{11} + a_{12} \cdot M_2 + \ldots + a_{1n} \cdot M_n) +$$
$$(a_{21} + a_{22} \cdot M_2 + \ldots + a_{2n} \cdot M_n) \cdot E_1 + a_{31} \cdot E_1^2 \qquad (1)$$

Dabei steht $E_1$ für die gesuchte fehlerfreie Einwirkung, bei dem Sensor von Fig. 2 also beispielsweise für einen linearen Zusammenhang zwischen dem Kapazitätsverhältnis $(C_x - C_{ref})/C_{ref}$ und dem zu messenden Druck P, und bei dem Sensor von Fig. 3 und 4 für einen linearen Zusammenhang zwischen dem Widerstandsverhältnis $dR/R$ und der zu messenden Kraft F. Die Koeffizienten $a_{11}$ ... $a_{2n}$ beschreiben die Abhängigkeit des Meßeffekts $M_1$ von den Meßeffekten $M_2$ ... $M_n$ der weiteren Sensoren, und der Koeffizient $a_{31}$ beschreibt die Nichtlinearität des Zusammenhangs zwischen dem Meßeffekt $M_1$ und der Einwirkung $E_1$ (unter Vernachlässigung von Gliedern höherer Ordnung).

Die Signalverarbeitungsschaltung 2 ist zur Korrektur eines fehlerhaften Meßeffektes $M_1$ so ausgebildet, daß der folgende Zusammenhang zwischen den verschiedenen Eingangsgrößen $M_1$, $M_2$... $M_n$ und der Ausgangsgröße $S/S_{ref}$ besteht:

$$\frac{S}{S_{ref}} = \frac{b_{11} + b_{12} \cdot M_2 + \ldots + b_{1n} \cdot M_n + (b_{21} + b_{22} \cdot M_2 + \ldots + b_{2n} \cdot M_n) \cdot M_1}{c_{11} + c_{12} \cdot M_2 + \ldots + c_{1n} \cdot M_n + (c_{21} + c_{22} \cdot M_2 + \ldots + c_{2n} \cdot M_n) \cdot M_1} \qquad (2)$$

Die vorstehende Gleichung soll nachfolgend als "Übertragungsfunktion" bezeichnet werden. Mit einer solchen Übertragungsfunktion kann innerhalb bestimmter Bereiche ein fehlerhafter Meßeffekt $M_1$ vom Typ der obigen Gleichung (1) korrigiert werden.

Nachfolgend werden Ausführungsbeispiele der Signalverarbeitungsschaltung beschrieben, bei denen zur Vereinfachung angenommen ist, daß nur ein Störeffekt $M_2$ auftritt. Der fehlerhafte Meßeffekt $M_1$ hat dann die Form

$$M_1 = f(E_1, E_1{}^2, M_2)$$
$$= (a_{11} + a_{12} \cdot M_2) + (a_{21} + a_{22} \cdot M_2) \cdot E_1 + a_{31} \cdot E_1{}^2 \qquad (3)$$

und die Signalverarbeitungsschaltung weist zur Korrektur dieser fehlerhaften Meßgröße $M_1$ die folgende Übertragungsfunktion auf:

$$\frac{S}{S_{ref}} = \frac{b_{11} + b_{12} \cdot M_2 + (b_{21} + b_{22} \cdot M_2) \cdot M_1}{c_{11} + c_{12} \cdot M_2 + (c_{21} + c_{22} \cdot M_2) \cdot M_1} \qquad (4)$$

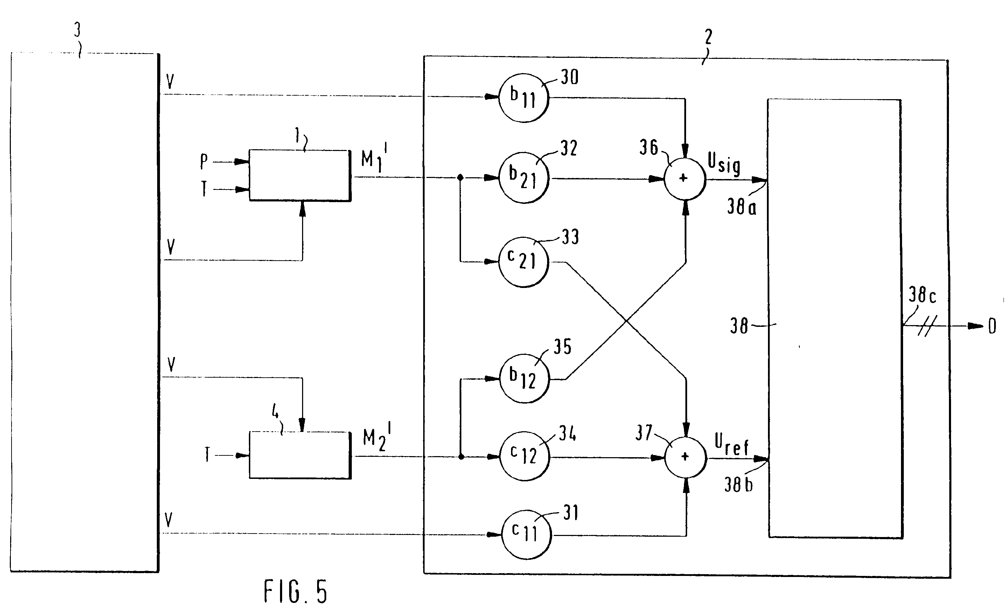

Fig. 5 zeigt sehr schematisch den prinzipiellen Aufbau einer nach diesem Prinzip ausgebildeten Signalverarbeitungsschaltung 2, wobei als Beispiel angenommen ist, daß das Ausgangssignal ein durch ein mehrstelliges Digitalwort D gebildetes digitales Signal ist, das durch Analog-Digital-Umsetzung aus den analogen Ausgangssignalen der Sensoren 1 und 4 gebildet wird. In Fig. 5 ist auch wieder die Versorgungssignalquelle 3 dargestellt, die das Versorgungssignal V zu den Sensoren 1 und 4 liefert.

Als Beispiel ist angenommen, daß die zu messende physikalische Größe ein Druck P ist und daß die Temperatur T eine Störgröße darstellt. Der Sensor 1 kann also beispielsweise dem Sensor 10 von Fig. 2 entsprechen und den dort dargestellten Aufbau haben. Sein Ausgangssignal wird durch den Meßeffekt $M_1'$ beschrieben, der sich aus dem Produkt des Versorgungssignals V und der von den physikalischen Einwirkungen abhängigen Funktion $M_1(P,T)$ ergibt:

$$M_1' = M_1 \cdot V \qquad (5)$$

Das Versorgungssignal V wird außerdem zu cem zweiten Sensor 4 geliefert, der nur auf die Störgröße, im vorliegenden Fall also auf die Temperatur T anspricht. Sein Ausgangssignal wird durch den Meßeffekt $M_2'$ beschrieben, der sich aus dem Produkt des Versorgungssignals V und der von der Einwirkung der Temperatur T abhängigen Funktion $M_2(T)$ ergibt:

$$M_2' = M_2 \cdot V \qquad (6)$$

Das Versorgungssignal V wird in einer symbolisch dargestellten Wichtungsschaltung 30 mit einem Koeffizienten $b_{11}$ und in einer Wichtungsschaltung 31 mit einem Koeffizienten $c_{11}$ gewichtet. Die Wichtungsschaltungen können in an sich bekannter Weise durch Analogmultiplizierer, beispielsweise durch Operationsverstärker mit dem Verstärkungsfaktor $b_{11}$ bzw. $c_{11}'$ gebildet sein. In entsprechender Weise wird das Ausgangssignal $M_1'$ des Sensors 1 in einer Wichtungsschaltung 32 mit einem Koeffizienten $b_{21}$ und in einer Wichtungsschaltung 33 mit einem Koeffizienten $c_{21}$ gewichtet, und das Ausgangssignal $M_2'$ des Sensors 4 wird in einer Wichtungsschaltung 34 mit dem Koeffizienten $c_{12}$ und in einer Wichtungsschaltung 35 mit dem Koeffizienten $b_{12}$ gewichtet.

Die gewichteten Ausgangssignale der Wichtungsschaltungen 30, 32 und 35 werden in einer Summierschaltung 36 summiert, und die gewichteten Ausgangssignale der Wichtungsschaltungen 31, 34 und 33 werden in einer Summierschaltung 37 summiert. Die Ausgangsspannung $U_{sig}$ der Summierschaltung 36 wird dem Signaleingang 38a eines Analog-Digital-Wandlers 38 zugeführt, und die Ausgangsspannung $U_{ref}$ der Summierschaltung 37 wird dem Referenzeingang 38b des Analog-Digital-Wandlers 38 zugeführt. Der Analog-Digital-Wandler 38 stellt an seinem Ausgang 38c das digitale Wort

$$D = (2^N - 1)U_{sig}/U_{ref} \qquad (7)$$

zur Verfügung, wobei N die Bitstellenzahl des digitalen Wortes ist.

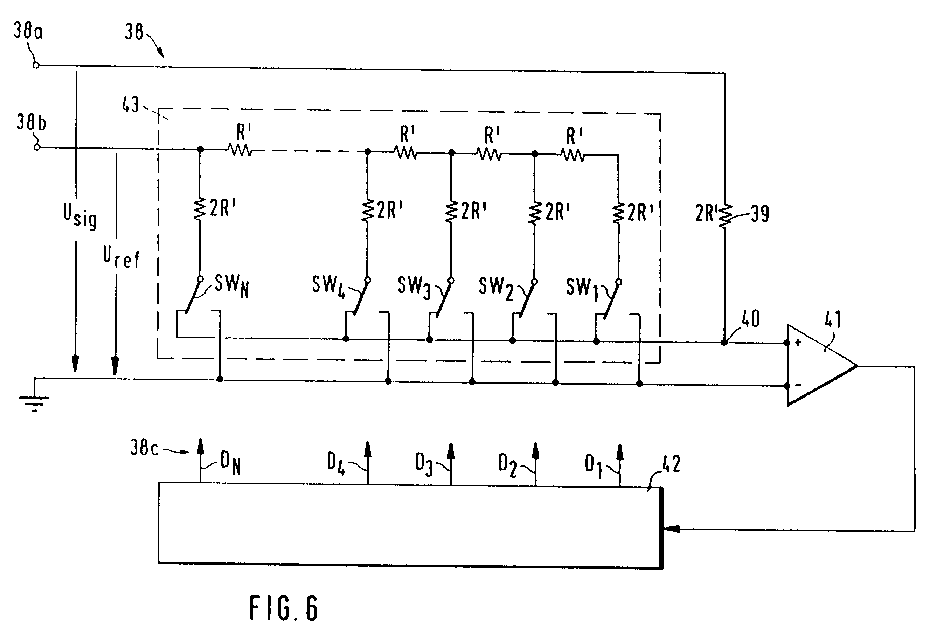

Ein an sich bekanntes, nach dem Prinzip der Strombalance arbeitendes Ausführungsbeispiel des Analog-Digital-Wandlers 38 ist in Fig. 6 dargestellt. Der Signaleingang 38a ist über einen Widerstand 39 des Wertes 2R' mit dem Summationsknoten 40 am nichtinvertierenden Eingang eines Operationsverstärkers 41 verbunden, dessen invertierender Eingang an Masse gelegt ist. Der Operationsverstärker 41 ist dadurch als Schwellenwertkomparator geschaltet, daß sein Rückkopplungskreis offen ist. Somit hat die Ausgangsspannung des Operationsverstärkers 41 einen niedrigen Wert, wenn die Spannung am nichtinvertierenden Eingang über dem am invertierenden Eingang anliegenden Massepotential liegt, und sie springt auf den hohen Signalwert, sobald die Spannung am nichtinvertierenden Eingang das Massepotential unterschreitet. Der Ausgang des Operationsverstärkers 41 ist mit einem Steuereingang eines sukzessiven Approximationsregisters ("successive approximation register") 42 verbunden.

Der Referenzeingang 38b ist mit dem Eingang eines nach Art einer Abzweigschaltung ausgebildeten Widerstands-Netzwerks 43 verbunden, dessen Langszweige jeweils einen Widerstand des Wertes R' enthalten, während in jedem Querzweig ein Widerstand des Wertes 2R' liegt. Jeder Querzweigwiderstand kann durch einen zugeordneten Schalter $SW_1$ ... $SW_N$ wahlweise mit dem Summationsknoten 43 oder mit Masse verbunden werden. Die Schalter werden durch binäre Signale gesteuert, die an zugeordneten Ausgängen $D_1$ ... $D_N$ des Approximationsregisters 42 abgegeben werden. Jeder Schalter $SW_1$ ... $SW_N$ verbindet den zugeordneten Widerstand in der dargestellten Stellung mit dem Summationsknoten 40, wenn das binäre Signal am zugeordneten Ausgang des Approximationsregisters 42 den Signalwert 0 hat; wenn dieses Signal den Signalwert 1 hat, geht der betreffende Schalter in die andere Stellung, in der er den zugeordneten Widerstand mit Masse verbindet.

In Abhängigkeit vom Signalpegel am Ausgang des Operationsverstärkers 41 stellt das Approximationsregister 42 die binären Signale an den Ausgängen $D_1$ ... $D_N$ so ein, daß im Idealfall die Spannungsdifferenz zwischen den beiden Eingängen des Operationsverstärkers 41 zu Null wird. In diesem idealen Abgleichfall fließt vom Signaleingang 38a über den Widerstand 39 zum Summationsknoten 40 der Signalstrom

$$i_{sig} = U_{sig}/2R', \qquad (8)$$

und die Schalter $SW_1$ ... $SW_N$ des Widerstandsnetzwerks 43 sind durch das Approximationsregister 42 so eingestellt, daß für den vom Widerstandsnetzwerk 43 zum Summationsknoten 40 fließenden Referenzstrom gilt:

$$i_{ref} = - i_{sig} . \qquad (9)$$

Die Einstellung des Approximationsregisters 42 und damit die Anschaltung der Widerstände des Widerstands-Netzwerks 43 wird unter dem Einfluß des Ausgangspegels des vom Operationsverstärker 41 gebildeten Komparators solange verändert, bis dieser Zustand erreicht ist. Dann besteht am Summationsknoten 40 Strombalance, und die binären Signale an den Ausgängen $D_1$ ... $D_N$ des Approximationsregisters 42 bilden das digitale Wort D gemäß der Gleichung (7). Diese Ausgänge entsprechen somit dem Ausgang 38c von Fig. 5.

Anstelle des mit sukzessiver Approximation arbeitenden Analog-Digital-Wandlers von Fig. 6 kann auch ein integrierender Analog-Digital-Wandler, z.B. ein Dual-Slope-Wandler, verwendet werden, bei dem die Strombalance im Integrationskondensator stattfindet. Dies ist dem Fachmann bekannt und wird nicht gesondert dargestellt.

Aus der Gleichung (7) und der Struktur von Fig. 5 ergibt sich die Ausgangsgröße des Analog-Digital-Wandlers 38 zu

$$\frac{D}{2^N - 1} = \frac{U_{sig}}{U_{ref}} = \frac{b_{11} \cdot V + b_{12} \cdot M_2' + b_{21} \cdot M_1'}{c_{11} \cdot V + c_{12} \cdot M_2' + c_{21} \cdot M_1'} \qquad (10)$$

und aus den Gleichungen (5) und (6) folgt:

$$\frac{D}{2^N - 1} = \frac{b_{11} + b_{12} \cdot M_2 + b_{21} \cdot M_1}{c_{11} + c_{12} \cdot M_2 + c_{21} \cdot M_1} \qquad (11)$$

Die Gleichung (11) stellt die Übertragungsfunktion der Signalverarbeitungsschaltung von Fig. 5 dar, mit der die wichtigsten Kenndaten eines Sensors vom Typ gemäß Gleichung (1) mit den folgenden Korrekturkoeffizienten korrigierbar sind:

Nullpunkt : $b_{11}$
TK-Nullpunkt : $b_{12}$
Empfindlichkeit : $b_{21}, c_{11}$
TK-Empfindlichkeit : $c_{12}$
Nichtlinearität : $c_{21}$

Dabei ist "TK" die Abkürzung für "Temperaturkoeffizient".

Die Gleichungen (10) und (11) lassen erkennen, warum in der Signalverarbeitungsschaltung 2 von Fig. 5 auch das Versorgungssignal V mit den Koeffizienten $b_{11}$ und $c_{11}$ gewichtet wird: Auf diese Weise kürzt sich das Versorgungssignal aus allen Termen der Übertragungsfunktion heraus, sodaß es nicht in das Ausgangssignal eingeht.

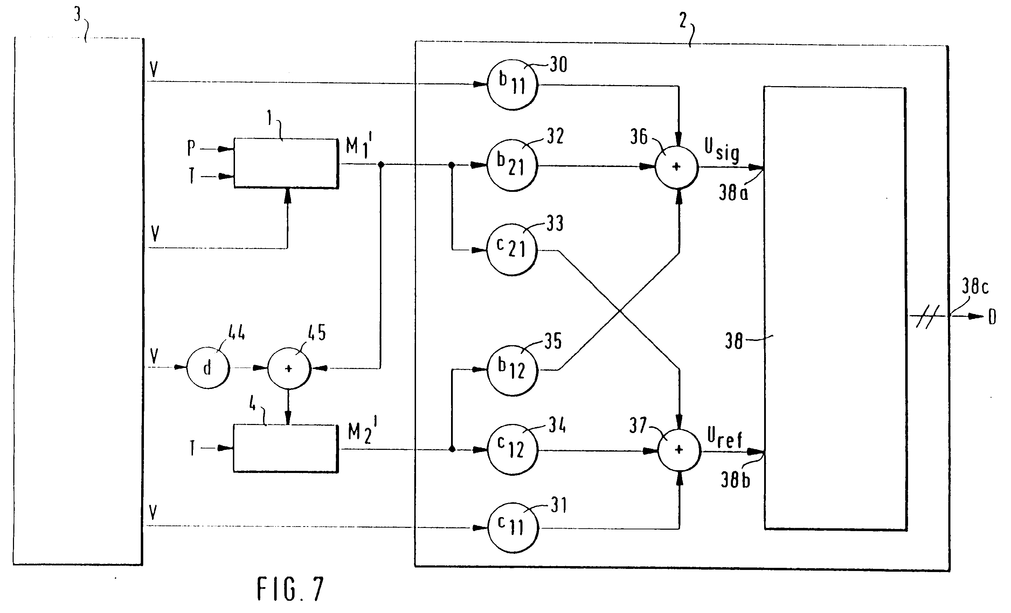

Es ist keineswegs erforderlich, daß alle Sensoren das gleiche Versorgungssignal erhalten. Die in Fig. 7 dargestellte Schaltung unterscheidet sich von derjenigen von Fig. 5 dadurch, daß zur Versorgung des Sensors 4 das Versorgungssignal V in einer Wichtungsschaltung 44 mit einem Faktor d gewichtet wird und daß zu dem so gewichteten Signal in einer Summierschaltung 45 das Ausgangssignal $M_1'$ des Meßsensors 1 addiert wird. Demnach ergibt sich die Ausgangsgröße des Digital-Wandlers 38 nach folgenden Übertragungsfunktionen:

$$\frac{D}{2^N - 1} = \frac{U_{sig}}{U_{ref}} = \frac{b_{11} \cdot V + b_{12} \cdot M_2' + b_{21} \cdot M_1'}{c_{11} \cdot V + c_{12} \cdot M_2' + c_{21} \cdot M_1'} \qquad (12)$$

$$\frac{D}{2^N - 1} = \frac{b_{11} + d \cdot b_{12} \cdot M_2 + (b_{21} + b_{12} \cdot M_2) \cdot M_1}{c_{11} + d \cdot c_{12} \cdot M_2 + (c_{12} + c_{12} \cdot M_2) \cdot M_1} \qquad (13)$$

Mit dieser Übertragungsfunktion sind die wichtigsten Kenndaten eines Meßsensors vom Typ gemäß Gleichung (1) mit folgenden Korrekturkoeffizienten korrigierbar:

| Nullpunkt | : $b_{11}$ |
|---|---|
| TK-Punkt | : $d \cdot b_{12}$ |
| Empfindlichkeit | : $d_{21}$, $c_{11}$ |
| TK-Empfindlichkeit | : $b_{12}$, $d \cdot c_{12}$ |
| Nichtliniarität | : $c_{21}$ |
| TK-Nichtliniarität | : $c_{12}$ |

Nachfolgend wird anhand verschiedener Ausführungsbeispiele beschrieben, wie die zuvor erläuterte Fehlerkorrektur bei Signalverarbeitungsschaltungen realisiert werden kann, die nach dem Prinzip der Ladungsbalance mit Schalter-Kondensator-Kombinationen arbeiten.

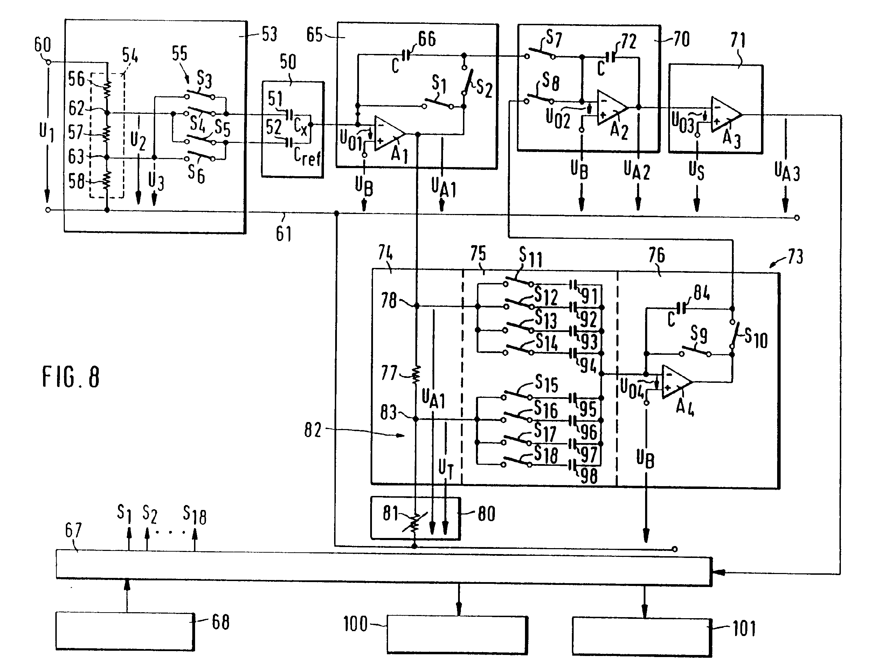

Fig. 8 zeigt ein Ausführungsbeispiel der Signalverarbeitungsschaltung 2 von Fig. 1 für die Signalaufbereitung mit Fehlerkorrektur des von einem kapazitiven Sensor 50 gelieferten Sensorsignals. Der Sensor 50 enthält einen Meßkondensator 51 der Kapazität $C_x$ und einen Referenzkondensator 52 der Kapazität $C_{ref}$; er kann beispielsweise die in Fig. 2 dargestellte Struktur haben. Der interessierende Meßeffekt $M_1$ ist das Kapazitätsverhältnis $(C_x - C_{ref})/C_{ref}$. Zum besseren Verständnis der Funktionsabläufe ist der Sensor 50 in Fig. 8 zwischen zwei Schaltungsblöcke der Signalverarbeitungsschaltung eingefügt, doch ist er in Wirklichkeit von der Signalverarbeitungsschaltung, die als integrierte Schaltung ausgeführt sein kann, räumlich getrennt und mit dieser über abgeschirmte Leitungen verbunden. Die Signalverarbeitungsschaltung arbeitet nach dem Prinzip der Ladungsbalance mit Schalter-Kondensator-Kombinationen und setzt das analoge Sensorsignal in ein digitales Ausgangssignal um, dessen Frequenz den korrigierten Meßwert darstellt.

Der Sensor 50 ist einerseits mit einem Funktionsblock 53 verbunden, der einen ohmschen Spannungsteiler 54 und eine Schaltergruppe 55 enthält. Der ohmsche Spannungsteiler 54 besteht aus drei in Serie geschalteten Widerständen 56, 57, 58 und ist zwischen einer Eingangsklemme 60 und einem das Bezugspotential der ganzen Schaltung führenden Bezugsleiter 61 angeschlossen. Der Spannungsteiler 54 hat einen ersten Abgriff 62 zwischen den Widerständen 56 und 57 und einen zweiten Abgriff 63 zwischen den Widerständen 57 und 58. Wenn im Betrieb der Schaltung zwischen der Eingangsklemme 60 und dem Bezugsleiter 61 eine Versorgungsspannung $U_1$ anliegt, besteht am Abgriff 62 eine Spannung $U_2$ und am Abgriff 63 eine Spannung $U_3$ entsprechend den durch die Widerstandswerte der Widerstände 56, 57 und 58 gegebenen Spannungsteilerverhältnissen.

Der Sensor 50 ist andrerseits mit einem Zwischenspeicher 65 verbunden, der einen Operationsverstärker $A_1$, einen Speicherkondensator 66 der Kapazität C und zwei Schalter $S_1$ und $S_2$ enthält. Wenn der Schalter $S_1$ geschlossen ist, verbindet er den Ausgang des Operationsverstärkers $A_1$ mit dessen invertierendem Eingang. Wenn der Schalter $S_2$ geschlossen ist, verbindet er den Ausgang des Operationsverstärkers $A_1$ mit der einen Elektrode des Speicherkondensators 66, dessen andere Elektrode mit dem invertierenden Eingang des Operationsverstärkers $A_1$ verbunden ist, so daß dann der Speicherkondensator 66 im Rückkopplungskreis des Operationsverstärkers $A_1$ liegt. Die Ausgangsspannung des Operationsverstärkers $A_1$, bezogen auf das Bezugspotential am Bezugsleiter 61, ist mit $U_{A1}$ bezeichnet.

Die Schaltergruppe 55 enthält vier Schalter $S_3$, $S_4$, $S_5$, $S_6$. Wenn der Schalter $S_3$ geschlossen ist, verbindet er die eine Elektrode des Meßkondensators 51 mit dem Abgriff 63 des Spannungsteilers 54, und wenn der Schalter $S_4$ geschlossen ist, verbindet er die gleiche Elektrode des Meßkondensators 51 mit dem Abgriff 62. Wenn der Schalter $S_5$ geschlossen ist, verbindet er die eine Elektrode des Referenzkondensators 52 mit dem Abgriff 62, und wenn der Schalter $S_6$ geschlossen ist, verbindet er die gleiche Klemme des Referenzkondensators 52 mit dem Abgriff 63. Die anderen Elektroden der Kondensatoren 51 und 52 sind mit dem invertierenden Eingang des Operationsverstärkers $A_1$ verbunden, dessen nichtinvertierender Eingang an einem festen Potential liegt, das sich um eine Spannung $U_B$ vom Bezugspotential am Bezugsleiter 61 unterscheidet. Das Potential am invertierenden Eingang unterscheidet sich nur um die Offsetspannung $U_{01}$ des Operationsverstärkers $A_1$ vom festen Potential des nichtinvertierenden Eingangs.

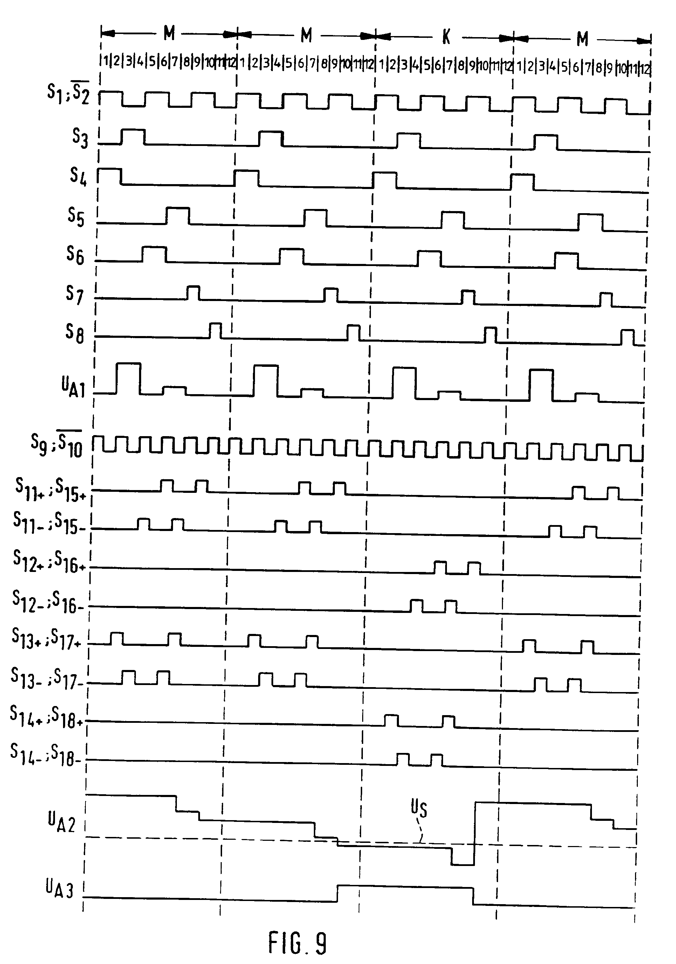

Die Schalter $S_1$ bis $S_6$, wie auch alle anderen Schalter in der dargestellten Schaltung, werden durch Steuersignale betätigt, die von einer Steuerschaltung 67 geliefert werden, die durch ein von einem Taktgeber 68 geliefertes Taktsignal synchronisiert wird. Zur Vereinfachung sind die Steuersignale mit den gleichen Bezugszeichen $S_1$, $S_2$, $S_3$ ... wie die von ihnen gesteuerten Schalter bezeichnet. Der zeitliche Verlauf der Steuersignale ist in den Diagrammen von Fig. 9 dargestellt. Jeder Schalter $S_1$, $S_2$ ... ist offen, wenn das ihn steuernde Signal den niedrigen Signalwert hat, und er ist geschlossen, wenn das ihn steuernde Signal den hohen Signalwert hat.

Die Schalter $S_1$, $S_2$ ... sind symbolisch als mechanische Schalterkontakte dargestellt, doch sind sie in Wirklichkeit natürlich durch schnelle elektronische Schalter, beispielsweise Feldeffekttransistoren, gebildet.

Dem Zwischenspeicher 65 ist ein Integrator 70 nachgeschaltet, auf den ein Komparator 71 folgt. Der Integrator 70 enthält einen Operationsverstärker $A_2$, einen im Rückkopplungskreis des Operationsverstärkers $A_2$ liegenden Integrationskondensator 72 der Kapazität C und zwei Schalter $S_7$, $S_8$. Wenn der Schalter $S_7$ ge-

schlossen ist, verbindet er den invertierenden Eingang des Operationsverstärkers $A_2$ mit dem Speicherkondensator 66 im Zwischenspeicher 65. Wenn der Schalter $S_8$ geschlossen ist, verbindet er den invertierenden Eingang des Operationsverstärkers $A_2$ mit dem Ausgang einer Korrekturschaltung 73. Der nichtinvertierende Eingang des Operationsverstärkers $A_2$ liegt an dem gleichen festen Potential wie der nichtinvertierende Eingang des Operationsverstärkers $A_1$. Das Potential am invertierenden Eingang unterscheidet sich nur um die Offsetspannung $U_{02}$ des Operationsverstärkers $A_2$ von diesem festen Potential.

Der Komparator 71 enthält einen Operationsverstärker $A_3$, der in bekannter Weise dadurch als Schwellenwertkomparator geschaltet ist, daß sein Rückkopplungskreis offen ist. Der invertierende Eingang des Operationsverstärkers $A_3$ ist mit dem Ausgang des Operationsverstärkers $A_2$ im Integrator 70 verbunden, und an den nichtinvertierenden Eingang des Operationsverstärkers $A_3$ ist eine Schwellenspannung $U_S$ angelegt. Zwischen den beiden Eingängen des Operationsverstärkers $A_3$ besteht die Offsetspannung $U_{03}$. Entsprechend der bekannten Funktion eines solchen Schwellenwertkomparators hat die Ausgangsspannung $U_{A3}$ des Operationsverstärkers $A_3$ einen niedrigen Wert, wenn die Spannung $U_{A2}$ über der Schwellenspannung $U_S$ liegt, und sie nimmt einen hohen Wert an, wenn die Spannung $U_{A2}$ den Schwellenwert $U_S$ unterschreitet. Der Ausgang des Komparators 71 ist mit einem Eingang der Steuerschaltung 67 verbunden.

Die Korrekturschaltung 73 enthält einen Eingangsblock 74, eine Schalter-Kondensator-Gruppe 75 und einen Korrekturspeicher 76. Der Eingangsblock 74 enthält einen Widerstand 77, dessen eine Klemme mit dem Ausgang des Operationsverstärkers $A_1$ im Zwischenspeicher 65 verbunden ist, so daß an dem Schaltungspunkt 78 die Ausgangsspannung $U_{A1}$ des Operationsverstärkers $A_1$ liegt. Die andere Klemme des Widerstands 77 ist mit einem Temperatursensor 80 verbunden, der dem zweiten Sensor 4 von Fig. 1 entspricht und zur Erzeugung eines zweiten Meßeffekts $M_2$ dient, der von der Temperatur T abhängig ist. Der Temperatursensor 80 ist natürlich ebenso wie der kapazitive Sensor 50 von der Signalverarbeitungsschaltung räumlich getrennt. Der Temperatursensor 80 enthält einen temperaturabhängigen Widerstand 81 mit dem Widerstandswert $R_T$. Der temperaturabhängige Widerstand 81 liegt in Reihe mit dem Widerstand 77 zwischen dem Ausgang des Operationsverstärkers $A_1$ und dem Bezugsleiter 61, so daß die Widerstände 77 und 81 einen Spannungsteiler 82 bilden, an dem die Spannung $U_{A1}$ liegt. Der Widerstandswert des Widerstandes 77 ist temperaturunabhängig und wird mit $R_V$ bezeichnet. Somit hat der Spannungsteiler 82 ein temperaturabhägiges Spannungsteilerverhältnis $V_T$ des Wertes

$$V_T = \frac{R_T}{R_V + R_T} \quad (14)$$

und am Abgriff 83 des Spannungsteilers 82 besteht die temperaturabhängige Spannung

$$U_T = V_T \cdot U_{A1}. \quad (15)$$

Das temperaturabhängige Spannungsteilerverhältnis bildet den Meßeffekt $M_2$.

Der Korrekturspeicher 76 hat den gleichen Aufbau wie der Zwischenspeicher 65 mit einem Operationsverstärker $A_4$, zwei Schaltern $S_9$, $S_{10}$ und einem Speicherkondensator 84 der Kapazität C. Wenn der Schalter $S_9$ geschlossen ist, verbindet er den Ausgang des Operationsverstärkers $A_4$ mit dessen invertierendem Eingang, an den auch die erste Elektrode des Speicherkondensators 84 angeschlossen ist. Wenn der Schalter $S_{10}$ geschlossen ist, verbindet er die zweite Elektrode des Speicherkondensators 84 mit dem Ausgang des Operationsverstärkers $A_4$, so daß dann der Speicherkondensator 84 im Rückkopplungskreis des Operationsverstärkers $A_4$ liegt. Diese zweite Elektrode des Speicherkondensators 84 bildet zugleich den Ausgang der Korrekturschaltung, der mit dem invertierenden Eingang des Operationsverstärkers $A_2$ im Integrator 70 verbunden ist, wenn der Schalter $S_8$ geschlossen ist.

Die Schalter-Kondensator-Gruppe 75 enthält acht Schalter $S_{11}$, $S_{12}$, $S_{13}$, $S_{14}$, $S_{15}$, $S_{16}$, $S_{17}$, $S_{18}$ und acht Kondensatoren 91, 92, 93, 94, 95, 96, 97, 98. Wenn der Schalter $S_{11}$ geschlossen ist, verbindet er die erste Elektrode des Kondensators 91 mit dem Schaltungspunkt 78. In entsprechender Weise verbinden die Schalter $S_{12}$, $S_{13}$, $S_{14}$, wenn sie geschlossen sind, jeweils die erste Elektrode der Kondensatoren 92, 93, 94 mit dem Schaltungspunkt 78. Wenn der Schalter $S_{15}$ geschlossen ist, verbindet er die erste Elektrode des Kondensators 95 mit dem Abgriff 83 des Spannungsteilers 82. In entsprechender Weise verbinden die Schalter $S_6$, $S_7$, $S_8$, wenn sie geschlossen sind, die ersten Elektroden der Kondensatoren 96, 97, 98 mit dem Abgriff 83. Die zweiten Elektroden der Kondensatoren 91 bis 98 sind mit dem invertierenden Eingang des Operationsverstärkers $A_4$ verbunden, dessen nichtinvertierender Eingang an dem gleichen festen Postential wie die nichtinvertierenden Eingänge der Operationsverstärker $A_1$ und $A_2$ liegt. Von diesem festen Potential unterscheidet sich das Potential am invertierenden Eingang nur um die Offsetspannung $U_{04}$ des Operationsverstärkers $A_4$.

Die Steuerschaltung 67 hat einen Ausgang, an den ein Zykluszähler 100 angeschlossen ist, und einen weiteren Ausgang, an den ein Kompensationszykluszähler 101 angeschlossen ist.

Die Schaltung arbeitet nach dem Prinzip der Ladungsbalance. Gesteuert durch die Schalter $S_1$, $S_2$, $S_3$, $S_4$, $S_5$, $S_6$ werden in aufeinanderfolgenden Zyklen auf die Kondensatoren 51 und 52 des Sensors 50 Ladungspakete aufgebracht, die von den Spannungen $U_2$, $U_3$ und von den Kapazitäten $C_x$, $C_{ref}$ dieser Kondensatoren abhängen. Der Spannungsteiler 54 hat den Zweck, die maximale Größe der Ladungspakete innerhalb der Schaltung bei gegebenen Kapazitätswerten des Sensors 50 festzulegen. Die Ladungspakete werden im Speicherkondensator 66 zwischengespeichert und durch Schließen des Schalters $S_7$ auf den Integrationskondensator 72 übertragen, in dem sie aufsummiert werden. Mit Hilfe der Korrekturschaltung 73 werden zusätzliche Ladungspakete erzeugt, die im Speicherkondensator 84 zwischengespeichert und am Ende jedes Zyklus durch Schließen des Schalters $S_8$ ebenfalls auf den Integrationskondensator 72 übertragen werden. Die Spannung $U_{A2}$ entspricht der Spannung am Integrationskondensator 72, die wiederum von der auf dem Integrationskondensator integrierten Ladung abhängt. Der Ablauf der Schaltung wird so gesteuert, daß für $C_x > C_{ref}$ die Spannung $U_{A2}$ fortschreitend kleiner wird. Unterschreitet die Spannung $U_{A2}$ die vorgegebene Schwellenspannung $U_S$ des Komparators 71, so kippt dessen Ausgangsspannung $U_{A3}$ auf ihren maximalen Wert, wodurch die Steuerschaltung 67 zur Durchführung eines Kompensationszyklus veranlaßt wird. Im Kompensationszyklus wird die Korrekturschaltung 73 so gesteuert, daß sie beim nächsten Schließen des Schalters $S_8$ auf den Integrationskondensator 72 ein Ladungspaket, das im wesentlichen der Kapazität $C_{ref}$ des Referenzkondensators 52 proportional ist, mit solchem Vorzeichen überträgt, daß die Spannung $U_{A2}$ wieder über die Schwellenspannung $U_S$ angehoben wird. Dadurch findet im Integrationskondensator 72 eine Ladungsbalance statt, denn im zeitlichen Mittel ist die Summe aller integrierten Ladungspakete gleich Null. Dieses Gleichgewicht ist immer zu den Zeitpunkten vorhanden, in denen die Spannung $U_{A2}$ die Schaltschwelle des Komparators 71 unterschreitet.

Der Ablauf der zuvor allgemein beschriebenen Funktion soll nun anhand der Diagramme von Fig. 9 im einzelnen erläutert werden. Die Diagramme von Fig. 9 zeigen außer dem bereits erwähnten zeitlichen Verlauf der Schalter-Steuersignale $S_1$ bis $S_{18}$ auch den zeitlichen Verlauf der Spannungen $U_{A1}$, $U_{A2}$ und $U_{A3}$ in mehreren Zyklen, von denen einer ein Kompensationszyklus K ist. Die anderen Zyklen, die keine Kompensationszyklen sind, werden als Meßzyklen M bezeichnet. Jeder Zyklus besteht aus zwölf Phasen, die mit 1 bis 12 numeriert sind.

Die Schalter $S_1$ und $S_2$ werden durch ein periodisches Rechtecksignal im Gegentakt gesteuert, so daß der Schalter $S_1$ offen ist, wenn der Schalter $S_2$ geschlossen ist, und umgekehrt. Wenn der Schalter $S_1$ geschlossen und der Schalter $S_2$ offen ist, können die im Eingangskreis des Operationsverstärkers $A_1$ liegenden Kondensatoren 51 und 52 durch die Schalter $S_3$ bis $S_6$ an die Spannungen $U_2$ oder $U_3$ gelegt und entsprechend aufgeladen werden, ohne daß dadurch die Ladung im Speicherkondensator 66 beeinflußt wird. Dieser Zustand wird als "Konditionierphase" bezeichnet.

In gleicher Weise werden die Schalter $S_9$ und $S_{10}$ durch ein periodisches Rechtecksignal der doppelten Frequenz im Gegentakt gesteuert, so daß der Schalter $S_9$ offen ist, wenn der Schalter $S_{10}$ geschlossen ist, und umgekehrt. Wenn der Schalter $S_9$ geschlossen und der Schalter $S_{10}$ offen ist, können die im Eingangskreis des Operationsverstärkers $A_4$ liegenden Kondensatoren 91 bis 98 durch die Schalter $S_{11}$ bis $S_{18}$ an die Spannung $U_{A1}$ bzw. $U_T$ gelegt und entsprechend aufgeladen werden, ohne daß dadurch die Ladung im Speicherkondensator 84 beeinflußt wird. Dieser Zustand wird wieder als "Konditionierphase" bezeichnet.

Zum leichteren Verständnis wird zunächst das Grundprinzip der Schaltung und erst anschließend die Funktion der Korrekturschaltung 73 beschrieben.

## 1. Grundprinzip:

### Phasen 1 und 2:

Am Beginn der Phase 1 jedes Zyklus befindet sich die Schaltung im Ausgangszustand, in welchem der Speicherkondensator 66 nach durch Schließen des Schalters 7 im vorhergehenden Zyklus bewirktem Entladevorgang auf eine Restladung

$$Q_{66R} = (U_{02} - U_{01}) \cdot C \quad (16)$$

geladen ist, die durch die Differenz der Offsetspannungen der beiden Operationsverstärker $A_1$ und $A_2$ bestimmt ist.

Für die Dauer der Phasen 1 und 2 ist der Schalter $S_1$ geschlossen und der Schalter $S_2$ offen. Zugleich ist der Schalter $S_4$ geschlossen, so daß der Meßkondensator 51 zur Konditionierung mit dem Abgriff 62 verbunden ist und durch die dort liegende Spannung auf die Ladung

$$Q_{Cx(1,2)} = (U_{01} + U_B - U_2) \cdot C_x \quad (17)$$

aufgeladen wird. Die Spannung $U_{A1}$ hat während der Phasen 1 und 2 den Wert

$$U_{A1(1,2)} = U_B + U_{01} \quad (18)$$

Phasen 3 und 4:

In den Phasen 3 und 4 ist der Schalter $S_1$ offen und der Schalter $S_2$ geschlossen, so daß der Zwischenspeicher 65 bereit ist, Ladung auf den Speicherkondensator 66 zu übernehmen. Zugleich wird der Schalter $S_3$ geschlossen, wodurch der Meßkondensator 51 mit dem Abgriff 63 verbunden wird. Durch die dort anliegende Spannung $U_3$ wird der Meßkondensator 51 auf die Ladung

$$Q_{Cx(3,4)} = (U_{01} - U_3) \cdot C_x \quad (19)$$

umgeladen. Die Umlademenge

$$dQ_{Cx} = Q_{Cx(3,4)} - Q_{Cx(1,2)} = (U_2 - U_3) \cdot C_x \quad (20)$$

fließt auf den Kondensator 66, der somit die folgende Ladung hat:

$$Q_{66(3,4)} = Q_{66R} + dQ_{Cx} = Q_{66R} + (U_2 - U_3) \cdot C_x \quad (21)$$

Die Spannung $U_{A1}$ hat während der Phasen 3 und 4 den Wert

$$U_{A1} = U_{66} + U_{01} + U_B = Q_{66(3,4)}/C + U_{01} + U_B \quad (22)$$

Wenn man die Restladung $Q_{66R}$ vernachlässigt, hat die Spannung $U_{A1}$ während der Phasen 3 und 4 somit den Wert

$$U_{A1(3,4)} = (U_2 - U_3) \cdot C_x/C + U_{01} + U_B \quad (23)$$

Phasen 5 bis 8:

Die Phasen 5 bis 8 entsprechen den Phasen 1 bis 4 mit dem Unterschied, daß anstelle des Meßkondensators 51 der Kapazität $C_x$ nun der Referenzkondensator 52 der Kapazität $C_{ref}$ verwendet wird.

In den Phasen 5 und 6 erfolgt die Konditionierung des Referenzkondensators 52, der durch den Schalter $S_6$ mit dem Abgriff 63 verbunden ist und daher durch die Spannung $U_3$ auf die Ladung

$$Q_{Cref(5,6)} = (U_{01} + U_B - U_3) \cdot C_{ref} \quad (24)$$

aufgeladen wird. Die Spannung $U_{A1}$ hat während der Phasen 5 und 6 wieder den Wert

$$U_{A1(5,6)} = U_B + U_{01} \quad (25)$$

In den Phasen 7 und 8 ist der Zwischenspeicher 65 zur Ladungsübernahme bereit und der Referenzkondensator 52 durch den Schalter $S_5$ mit dem Abgriff 62 verbunden, so daß er durch die Spannung $U_2$ auf die Ladung

$$Q_{Cref(7,8)} = (U_{01} + U_B - U_2) \cdot C_{ref} \quad (26)$$

umgeladen wird. Die Umlademenge

$$dQ_{Cref} = Q_{Cref(7,8)} - Q_{Cref(5,6)} = - (U_2 - U_3) \cdot C_{ref} \quad (27)$$

wird auf den Speicherkondensator 66 übertragen. Die Gesamtladung im Speicherkondensator 66 beträgt dann

$$\begin{aligned} Q_{66(7,8)} &= Q_{66R} + dQ_{Cx} + dQ_{Cref} \\ &= Q_{66R} + (U_2 - U_3) \cdot (C_x - C_{ref}) \end{aligned} \quad (28)$$

Wenn man wieder die Restladung $Q_{66R}$ vernachlässigt, hat die Spannung $U_{A1}$ während der Phasen 7 und 8 den Wert

$$U_{A1(7,8)} = Q_{66(7,8)}/C + U_{01} + U_B = (U_2 - U_3) \cdot (C_x - C_{ref})/C + U_{01} + U_B \quad (29)$$

Phase 9:

In der Phase 9 ist der Schalter $S_2$ offen, so daß der Speicherkondensator 66 vom Ausgang des Operationsverstärkers $A_1$ abgetrennt ist. Dagegen ist der Schalter $S_7$ geschlossen, so daß die beiden Elektroden des Speicherkondensators 66 mit den invertierenden Eingängen der beiden Operationsverstärker $A_1$ und $A_2$ verbunden sind, die praktisch auf gleichem Potential liegen, das sich nur durch die Offsetspannung $U_{01}$ bzw. $U_{02}$ vom Bezugspotential unterscheidet. Daher wird der Speicherkondentator 66 bis auf die Restladung

$$Q_{66R} = (U_{02} - U_{01}) \cdot C \quad (30)$$

entladen. Die Entladung erfolgt auf den Integrationskondensator 72, dem dadurch die Ladungsmenge

$$dQ_M = Q_{66R} - Q_{66(7,8)} = - (C_x - C_{ref}) \cdot (U_2 - U_3) \quad (31)$$

zugeführt wird. Im folgenden wird $dQ_M$ als Meßladungspaket bezeichnet. Mit $C_x > C_{ref}$ und $U_2 > U_3$ ist $dQ_M < 0$. Die Spannung $U_{A2}$ wird daher bei jeder Entladung vom Speicherkondensator 66 zum Integrationskondensator 72 kleiner.

Mit der Phase 9 ist der Ablauf nach dem Grundprinzip abgeschlossen, der sich in jedem Zyklus wiederholt.

Die restlichen drei Phasen des Zyklus werden nur für die nachfolgend erläuterten Korrektur- und Kompensationsvorgänge benötigt.

Unterschreitet die Spannung $U_{A2}$ bei diesem stufenweisen Absinken die vorgegebene Schwellenspannung $U_S$, so kippt die Ausgangsspannung $U_{A3}$ des Komparators 71 auf ihren maximalen Wert, wodurch die Steuerschaltung 67 einen Kompensationszyklus K auslöst, in dessen Verlauf sie die Korrekturschaltung 73 so steuert, daß diese bei der nächsten Ladungsübertragung auf den Integrationskondensator 72 ein Kompensationsladungspaket $dQ_K$ überträgt, das (gemessen in $C_{72}$) im wesentlichen den Wert

$$dQ_K = (U_2 - U_3) \cdot C_{ref} \quad (32)$$

hat. Dadurch wird die Spannung $U_{A2}$ wieder auf einen Wert angehoben, der über der Schwellenspannung $U_S$ liegt und von dem aus die Spannung $U_{A2}$ in den folgenden Zyklen wieder absinkt. Die Erzeugung des Kompensationsladungspakets $dQ_K$ in der Korrekturschaltung 73 wird im Zusammenhang mit dem Korrekturvorgang nachfolgend beschrieben.

Es ist zu beachten, daß auch im Kompensationszyklus K ein Meßladungspaket $dQ_M$ auf den Integrationskondensator 72 übertragen wird. Wenn zunächst die von der Korrekturschaltung 73 zusätzlich bewirkte Korrektur nicht berücksichtigt wird, ergibt die beschriebene Funktionsweise eine Ladungsbalance im Integrationskondensator 72, indem sie im Verlauf von n aufeinanderfolgenden Zyklen k Kompensationszyklen in der Weise erzwingt, daß die Summe der in diesen n Zyklen zugeführten n Meßladungspakete gleich der Summe der in den n Zyklen zugeführten k Kompensationsladungspakete ist. Somit gilt

$$n \cdot dQ_M = k \cdot dQ_K \quad (33)$$

$$n \cdot (U_2 - U_3) \cdot (C_x - C_{ref}) = k \cdot (U_2 - U_3) \cdot C_{ref} \quad (34)$$

$$\frac{k}{n} = \frac{C_x - C_{ref}}{C_{ref}} \quad (35)$$

Die Steuerschaltung 67 schickt bei jeder Auslösung eines Zyklus einen Zählimpuls zu dem Zykluszähler 100 und bei jeder Auslösung eines Kompensationszyklus K einen Zählimpuls zu dem Kompensationszykluszähler 101. Ausgehend vom gleichen Anfangszählerstand Null zeigt daher der Zykluszähler 100 die Gesamtzahl n der durchgeführten Zyklen und der Kompensationszykluszähler 101 die Anzahl k der Kompensationszyklen an. Der Quotient der beiden Zählerstände entspricht unmittelbar dem gesuchten Meßergebnis, allerdings noch ohne Korrektur von Störeffekten.

Während die Zyklen, gesteuert durch den Taktgeber 68, mit einer festen Frequenz aufeinanderfolgen, ändert sich die Frequenz der Zählimpulse, die zum Kompensationszykluszähler 101 geschickt werden, in Abhängigkeit von dem Verhältnis $(C_x - C_{ref})/C_{ref}$. Anstelle des Verhältnisses k/n von zwei Zählerständen, die nach einer bestimmten Meßzeit abgelesen werden, kann daher unmittelbar die Frequenz der Kompensations-Zählimpulse zur kontinuierlichen Anzeige des Meßwerts verwendet werden.

## 2. Funktion der Korrekturschaltung:

Die Korrekturschaltung 73 arbeitet nach dem gleichen Prinzip wie die zuvor beschriebenen Schaltungsblöcke 53 und 65. Wenn der Schalter $S_9$ geschlossen und der Schalter $S_{10}$ offen ist, können die Kondensatoren 91 bis 98 durch Schließen der zugeordneten Schalter $S_{11}$ bis bis $S_{18}$ wahlweise auf die im Eingangsblock 74 verfügbaren Spannungen $U_{A1}$ oder $U_T$ konditioniert werden, und wenn der Schalter $S_9$ offen und der Schalter $S_{10}$ geschlossen ist und einer oder mehrere der Kondensatoren 91 bis 98 durch Schließen des zugeordneten Schalters $S_{11}$ bis $S_{18}$ umgeladen werden, wird die gesamte Umlademenge im Speicherkondensator 84 integriert. Die Werte der auf diese Weise realisierbaren Ladungspakete hängen einerseits von den Kapazitätswerten der Kondensatoren 91 bis 98 und andererseits von den verfügbaren Spannungswerten am Schaltungspunkt 78 und am Abgriff 83 ab. Dabei ist zu beachten, daß die Spannung $U_{A1}$ am Schaltungspunkt 78 im Verlauf jedes Zyklus verschiedene Werte annimmt und daß die Spannung $U_T$ am Abgriff 83 sowohl von der Spannung $U_{A1}$ als auch von der Temperatur T abhängt. Durch geeignete Wahl der Phasen, in denen die Schalter S bis $S_{18}$ geschlossen werden, können daher unterschiedliche Spannungen an die Kondensatoren 91 bis 98 angelegt werden. Ferner können durch geeignete Wahl der Schalterphasen wahlweise positive oder negative Ladungspakete erzeugt werden.

Am Ende jedes Zyklus wird die auf dem Speicherkondensator 84 integrierte Ladungsmenge bei geschlossenem Schalter $S_9$ und offenem Schalter $S_{10}$ durch Schließen des Schalters $S_8$ auf den Integrationskondensator 72 übertragen. Die im Verlauf der Meßzyklen M von der Korrekturschaltung 73 zum Integrator 70 übertragenen Ladungspakete bilden Korrekturladungspakete, die der Korrektur der Störeffekte dienen. Die im Verlauf der Kompensationszyklen K übertragenen Ladungspakete bilden die zuvor erläuterten Kompensationsladungspakete $dQ_K$ und zusätzlich Korrekturladungspakete.

Die Bildung der Korrektur- und Kompensationsladungspakete durch die Korrekturschaltung 73 soll anhand der Diagramme von Fig. 9 erläutert werden. In Fig. 9 sind für jeden der Schalter $S_{11}$ bis $S_{18}$ zwei verschiedene Steuersignale dargestellt, die durch die hinzugefügten Zeichen "+" und "-" voneinander unterschieden sind. Die mit dem Zeichen "+" versehenen Steuersignale dienen der Erzeugung von positiven Ladungspaketen, und die mit dem Zeichen "-" versehenen Steuersignale dienen der Erzeugung von negativen Ladungspaketen jeweils mit Hilfe der gleichen Schalter und Kondensatoren. Die Vorzeichen dieser erzeugten Ladungspakete beziehen sich auf die Ladung $Q_{84}$ des Speicherkondensators 84. Zu beachten ist, daß bei der Umladung vom Speicherkondensator 84 auf den Integrationskondensator 72 das Vorzeichen des transportierten Ladungspakets invertiert wird. So wird beispielsweise mit Hilfe des Kondensators 91 ein positives Ladungspaket erzeugt, wenn der zugehörige Schalter $S_{11}$ durch das Steuersignal $S_{11+}$ gesteuert wird, und ein negatives Ladungspaket, wenn der Schalter $S_{11}$ durch das Steuersignal $S_{11-}$ gesteuert wird. Entsprechendes gilt für die übrigen Schalter-Kondensator-Kombinationen.

Weiterhin ist aus Fig. 9 zu erkennen, daß die Schalter $S_{11}$, $S_{13}$, $S_{15}$ und $S_{17}$ nur während der Meßzyklen M und die Schalter $S_{12}$, $S_{14}$, $S_{16}$ und $S_{18}$ nur während der Kompensationszyklen K betätigt werden. Somit dienen die Schalter $S_{11}$, $S_{13}$, $S_{15}$, $S_{17}$ in Verbindung mit den Kondensatoren 91, 93, 95, 97 zur Erzeugung von Korrekturladungspaketen, und die Schalter $S_{12}$, $S_{14}$, $S_{16}$, $S_{18}$ dienen in Verbindung mit den Kondensatoren 92, 94, 96, 98 zur Erzeugung von Ladungspaketen, die jeweils ein Kompensationsladungspaket und ein Korrekturladungspaket enthalten. Dabei ist unter einem Kompensationsladungspaket ein Ladungspaket zu verstehen, das der Gleichung (32) entspricht. Alle übrigen während der Kompensationszyklen K erzeugten Ladungspakete sowie alle während der Meßzyklen M erzeugten Ladungspakete sind Korrekturladungspakete.

Hinsichtlich der Wahl der Phasen für die Betätigung der Schalter $S_{11}$ bis $S_{18}$ ist folgendes zu beachten: Wenn einer der Schalter $S_{11}$ bis $S_{18}$ in einer Phase geschlossen wird, in der der Schalter $S_9$ geschlossen und der Schalter $S_{10}$ offen ist, befindet sich die Schaltung in der "Konditionierphase", und der zugehörige Kondensator wird durch die gerade anliegende Spannung aufgeladen, ohne daß die Ladung auf dem Speicherkondensator 84 davon beeinflußt wird. Wenn dagegen einer der Schalter $S_{11}$ bis $S_{18}$ in einer Phase geschlossen wird, in der der Schalter $S_9$ offen und der Schalter $S_{10}$ geschlossen ist, wird der zugehörige Kondensator durch die gerade anliegende Spannung umgeladen, und die Umlademenge wird auf den Speicherkondensator 84 übertragen.

Es soll beispielsweise der Fall betrachtet werden, daß mit Hilfe des Kondensators 91 ein positives Ladungspaket erzeugt werden soll. Das von der Steuerschaltung 67 zum Schalter $S_{11}$ geschickte Steuersignal $S_{11}$ hat dann den zeitlichen Verlauf, der in Fig. 9 mit $S_{11+}$ bezeichnet ist. In jedem Meßzyklus M wird der Schalter $S_{11}$ zum ersten Mal in der Phase 7 geschlossen. In dieser Phase hat das Signal $S_9$ den hohen Wert, so daß der Schalter $S_9$ geschlossen und der Schalter $S_{10}$ offen ist. Die Anordnung befindet sich also in der Konditionierphase für den Kondensator 91. Dies bedeutet, daß auf den Kondensator 91 eine Ladung $Q_{91}(7)$ aufgebracht wird, die durch die am Schaltungspunkt 78 liegende Spannung $U_{A1(7,8)}$ bestimmt ist:

$$Q_{91(7)} = (U_{04} + U_B - U_{A1(7,8)}) \cdot C_{91} \quad (36)$$

Nun hat die Spannung $U_{A1}$ in den Phasen 7 und 8 gemäß der Gleichung (29) den Wert

$$U_{A1(7,8)} = (U_2 - U_3) \cdot (C_x - C_{ref})/C + U_{01} + U_B \quad (37)$$

Somit gilt für die Ladung $Q_{91(7)}$:

$$
\begin{aligned}
Q_{91(7)} &= [U_{04} + U_B - (U_2 - U_3) \cdot (C_x - C_{ref})/C - U_{01} - U_B] \cdot C_{91} \\
&= [U_{04} - U_{01} - (U_2 - U_3) \cdot (C_x - C_{ref})/C] \cdot C_{91}
\end{aligned}
\quad (38)
$$

Der Schalter $S_{11}$ wird dann in der Phase 10 des gleichen Meßzyklus M erneut geschlossen. In der Phase 10 ist der Schalter $S_9$ offen und der Schalter $S_{10}$ geschlossen und somit der Korrekturspeicher 76 für die Übernahme von Ladungen auf den Speicherkondensator 84 bereit. Da in dieser Phase die Spannung $U_{A1}$ am Schaltungspunkt 78 den Wert

$$U_{A1(10)} = U_B + U_{01} \quad (39)$$

hat, wird der Kondensator 91 auf die Ladung $Q_{91(10)}$ umgeladen:

$$Q_{91(10)} = [U_{04} + U_B - U_{A1(10)}] \cdot C_{91} = (U_{04} - U_{01}) \cdot C_{91} \quad (40)$$

Das Umladungspaket

$$dQ_{91+} = Q_{91(10)} - Q_{91(7)} = (U_2 - U_3) \cdot (C_x - C_{ref}) \cdot C_{91}/C \quad (41)$$

wird auf den Speicherkondensator 84 übertragen und dort zu den übrigen im gleichen Meßzyklus M erzeugten Ladungspaketen addiert.

Wenn dagegen auf den Kondensator 91 ein negatives Ladungspa-ket aufgebracht werden soll, wird der

EP 0 445 267 B1

Schalter $S_{11}$ durch das Steuersignal $S_{11-}$ von Fig. 9 gesteuert. Das erste Schließen erfolgt dann in der Phase 5 des Meßzyklus M. In dieser Phase ist der Schalter $S_9$ geschlossen und der Schalter $S_{10}$ offen, so daß der Kondensator 91 durch die am Schaltungspunkt 78 liegende Spannung $U_{A1}$ konditioniert wird, die in der Phase 5 den Wert

$$U_{A1(5)} = U_B + U_{01} \quad (42)$$

hat. Somit erhält der Kondensator 91 die Ladung

$$Q_{91(5)} = (U_{04} + U_B - U_{A1(5)}) \cdot C_{91} = (U_{04} - U_{01}) \cdot C_{91} \quad (43)$$

Das nächste Schließen des Schalters $S_{11}$ erfolgt in der Phase 8 des gleichen Meßzyklus, in der die Spannung am Schaltungspunkt 78 den Wert

$$U_{A1(7,8)} = (U_2 - U_3) \cdot (C_x - C_{ref})/C + U_{01} + U_B \quad (44)$$

hat, so daß der Kondensator 91 auf die Ladung

$$
\begin{aligned}
Q_{91(8)} &= [U_{04} + U_B - (U_2 - U_3) \cdot (C_x - C_{ref})/C_{ref} - U_{01} - U_B] \cdot C_{91} \\
&= [U_{04} + U_{01} - (U_2 - U_3) \cdot (C_x - C_{ref})/C_{ref}] \cdot C_{91}
\end{aligned}
\quad (45)
$$

umgeladen wird. Das Umladungspaket

$$dQ_{91-} = Q_{91(8)} - Q_{91(5)} = -(U_2 - U_3) \cdot (C_x - C_{ref}) \cdot C_{91}/C \quad (46)$$

wird auf den Speicherkondensator 84 übertragen und dort zu den übrigen im gleichen Meßzyklus erzeugten Korrekturladungspaketen addiert.

Wie zu erkennen ist, haben die Ladungspakete $dQ_{91+}$ und $dQ_{91-}$ den gleichen Betrag; sie unterscheiden sich nur durch das Vorzeichen.

Die Diagramme von Fig. 9 lassen erkennen, daß die Steuersignale $S_{15+}$ und $S_{15-}$ mit den Steuersignalen $S_{11+}$ bzw. $S_{11-}$ identisch sind. Die Vorgänge bei der Konditionierung und Umladung des Kondensators 95 laufen daher in der zuvor beschriebenen Weise ab, jedoch mit dem Unterschied, daß anstelle der am Schaltungspunkt 78 liegenden Spannung $U_{A1}$ die am Abgriff 83 liegende Spannung $U_T$ für die Auf- bzw. Umladung des Kondensators 95 maßgeblich ist. Da gemäß Gleichung (15) für die Spannung $U_T$ gilt:

$$U_T = V_T \cdot U_{A1} \quad (47)$$

können mit Hilfe des Kondensators 95 die folgenden Ladungspakete erzeugt und auf den Speicherkondensator 84 übertragen werden:

$$dQ_{95+} = V_T \cdot (U_2 - U_3) \cdot (C_x - C_{ref}) \cdot C_{95}/C \quad (48)$$
$$dQ_{95-} = -V_T \cdot (U_2 - U_3) \cdot (C_x - C_{ref}) \cdot C_{95}/C \quad (49)$$

Die Steuersignale $S_{12+}$, $S_{16+}$ und $S_{12-}$, $S_{16-}$ haben den gleichen zeitlichen Verlauf wie die zuvor erläuterten Steuersignale $S_{11+}$, $S_{15+}$ bzw. $S_{11-}$, $S_{15-}$; sie unterscheiden sich von diesen nur dadurch, daß sie nicht in den Meßzyklen M, sondern in den Kompensationszyklen K auftreten. Somit können durch diese Steuersignale in jedem Kompensationszyklus die folgenden Ladungspakete erzeugt werden:

- mit Hilfe des Kondensators 92:

$$dQ_{92+} = (U_2 - U_3) \cdot (C_x - C_{ref}) \cdot C_{92}/C \quad (50)$$
$$dQ_{92-} = -(U_2 - U_3) \cdot (C_x - C_{ref}) \cdot C_{92}/C \quad (51)$$

- mit Hilfe des Kondensators 96:

$$dQ_{96+} = V_T \cdot (U_2 - U_3) \cdot (C_x - C_{ref}) \cdot C_{96}/C \quad (47)$$
$$dQ_{96-} = -V_T \cdot (U_2 - U_3) \cdot (C_x - C_{ref}) \cdot C_{96}/C \quad (48)$$

Wenn mit dem Kondensator 93 ein positives Ladungspaket erzeugt werden soll, wird der Schalter $S_{13}$ durch das Steuersignal $S_{13+}$ von Fig. 9 gesteuert. Durch dieses Steuersignal wird der Schalter $S_{13}$ in jedem Meßzyklus M zum ersten Mal in der Phase 3 geschlossen. In dieser Phase ist der Schalter $S_9$ geschlossen und der Schalter $S_{10}$ offen, so daß der Kondensator 93 durch die am Schaltungspunkt 78 liegende Spannung $U_{A1}$ konditioniert wird, die gemäß Gleichung (23) in der Phase 3 den folgenden Wert hat:

$$U_{A1(3,4)} = (U_2 - U_3) \cdot C_x/C + U_{01} + U_B \quad (54)$$

Demzufolge wird der Kondensator 93 auf die Ladung

$$Q_{93(3)} = [U_{04} + U_B - (U_2 - U_3) \cdot C_x/C + U_{01} + U_B] \cdot C_{93}$$
$$= [U_{04} + U_{01} - (U_2 - U_3) \cdot C_x/C] \cdot C_{93} \qquad (55)$$

aufgeladen.

Das nächste Schließen des Schalters $S_{13}$ erfolgt in der Phase 8, in der die Spannung $U_{A1}$ am Schaltungspunkt 78 gemäß Gleichung (29) den folgenden Wert hat:

$$U_{A1(7,8)} = (U_2 - U_3) \cdot (C_x - C_{ref})/C + U_{01} + U_B \qquad (56)$$

Demzufolge wird der Kondensator 93 auf die Ladung

$$Q_{93(8)} = [U_{04} - U_{01} - (U_2 - U_3) \cdot (C_x - C_{ref})/C] \cdot C_{93} \qquad (57)$$

umgeladen. Das Umladungspaket

$$dQ_{93+} = Q_{93(8)} - Q_{93(3)} = (U_2 - U_3) \cdot C_{ref} \cdot C_{93}/C \qquad (58)$$

wird auf den Speicherkondensator 84 übertragen und dort zu den übrigen im gleichen Meßzyklus erzeugten Ladungspaketen addiert.

Wenn dagegen mit dem Kondensator 93 ein negatives Ladungspaket erzeugt werden soll, erfolgt die Steuerung des Schalters $S_{13}$ durch das Steuersignal $S_{13-}$. Durch dieses Steuersignal wird der Schalter $S_{13}$ in jedem Meßzyklus M zum ersten Mal in der Phase 4 geschlossen. In dieser Phase ist der Schalter $S_9$ offen und der Schalter $S_{10}$ geschlossen; es handelt sich also nicht um eine Konditionierphase, sondern um eine Umladungsphase, in der der Kondensator 93 gegenüber der im vorhergehenden Meßzyklus erfolgten Konditionierung umgeladen wird und das Umladungspaket auf den Speicherkondensator 84 übertragen wird. Anschließend erfolgt eine Konditionierung des Kondensators 93 in der Phase 7, in der der Schalter $S_{13}$ erneut geschlossen wird und in der der Schalter $S_9$ geschlossen und der Schalter $S_{10}$ offen ist. In der Phase 7 hat die Spannung $U_{A1}$ am Schaltungspunkt 78 den Wert

$$U_{A1(7,8)} = (U_2 - U_3) \cdot (C_x - C_{ref})/C + U_{01} + U_B \qquad (59)$$

so daß der Kondensator 93 auf die Ladung

$$Q_{93(7)} = [U_{04} - U_{01} - (U_2 - U_3) \cdot (C_x - C_{ref})/C] \cdot C_{93} \qquad (60)$$

aufgeladen wird. Die Umladung des Kondensators 93 erfolgt dann in der Phase 4 des nächsten Meßzyklus M, in welcher die Spannung $U_{A1}$ den Wert

$$U_{A1(3,4)} = (U_2 - U_3) \cdot C_x/C + U_{01} + U_B \qquad (61)$$

hat, so daß der Kondensator 93 auf die Ladung

$$Q_{93(4)} = [U_{04} - U_{01} - (U_2 - U_3) \cdot C_x/C] \cdot C_{93} \qquad (62)$$

umgeladen wird. Das Umladungspaket

$$dQ_{93-} = Q_{93(4)} - Q_{93(7)} = - (U_2 - U_3) \cdot C_{ref} \cdot C_{93}/C \qquad (63)$$

wird auf den Speicherkondensator 84 übertragen und dort zu den übrigen im gleichen Meßzyklus erzeugten Ladungspaketen addiert. Die Ladungspakete $dQ_{93+}$ und $dQ_{93-}$ haben wieder den gleichen Betrag und unterscheiden sich nur durch das Vorzeichen.

Die Erzeugung von Ladungspaketen mit dem Kondensator 97 durch die Steuersignale $S_{17+}$ und $S_{17-}$ erfolgt in identischer Weise, jedoch mit der Spannung $U_T$ anstelle der Spannung $U_{A1}$, so daß die folgenden Ladungspakete erzeugt und auf den Speicherkondensator 81 übertragen werden können:

$$dQ_{97+} = V_T \cdot (U_2 - U_3) \cdot C_{ref} \cdot C_{97}/C \qquad (64)$$
$$dQ_{97-} = - V_T \cdot (U_2 - U_3) \cdot C_{ref} \cdot C_{97}/C \qquad (65)$$

Die Steuersignale $S_{14+}$, $S_{18+}$ und $S_{14-}$, $S_{18-}$ für die Erzeugung von Ladungspaketen in den Kompensationszyklen K haben wieder den gleichen zeitlichen Verlauf wie die zuvor erläuterten Steuersignale $S_{13+}$, $S_{17+}$ bzw. $S_{13-}$, $S_{17-}$, so daß in jedem Kompensationszyklus die folgenden Ladungspakete erzeugt und auf den Speicherkondensator 84 übertragen werden können:

- mit dem Kondensator 94:

$$dQ_{94+} = (U_2 - U_3) \cdot C_{ref} \cdot C_{94}/C \qquad (66)$$
$$dQ_{94-} = - (U_2 - U_3) \cdot C_{ref} \cdot C_{94}/C \qquad (67)$$

- mit dem Kondensator 98:

$$dQ_{98+} = V_T \cdot (U_2 - U_3) \cdot C_{ref} \cdot C_{93}/C \qquad (68)$$
$$dQ_{98-} = - V_T \cdot (U_2 - U_3) \cdot C_{ref} \cdot C_{93}/C \qquad (68)$$

Die vorstehende Erläuterung läßt auch erkennen, warum die Schalter $S_9$, $S_{10}$ mit der doppelten Frequenz wie die Schalter $S_1$, $S_2$ betrieben werden: Die Schalter $S_1$, $S_2$ nehmen ihre abwechselnden Stellungen jeweils für die Dauer von zwei Phasen ein, und dementsprechend ist auch jeder Wert der Spannung $U_{A1}$ für die Dauer von zwei Phasen verfugbar. Während dieser Dauer von zwei Phasen nehmen die Schalter $S_9$ und $S_{10}$ zunächst die eine und dann die andere Stellung ein, so daß der gleiche Wert der Spannung $U_{A1}$ wahlweise zur Konditionierung oder zur Umladung verwendet werden kann.

Auf die geschilderte Weise können mit Hilfe der acht Schalter-Kondensator-Kombinationen durch geeignete Wahl der Schaltphasen der Steuersignale $S_{11}$ bis $S_{18}$ Ladungspakete mit acht verschiedenen Beträgen, die jeweils durch die Kapazitätswerte $C_{91}$ bis $C_{98}$ der betreffenden Kondensatoren gewichtet sind, und jedes dieser Ladungspakete wahlweise mit positivem oder negativem Vorzeichen erzeugt und im Speicherkondensator 84 zwischengespeichert werden.

In der Schaltung von Fig. 8 sind zur Erzeugung der Ladungspakete acht Kondensatoren 91 bis 98 mit unterschiedlichen Kapazitatswerten vorgesehen. Diese Schaltung realisiert eine zeitdiskrete Signalverarbeitung, bei der die Ladungsübertragungen über die Kondensatoren 91 bis 98, je nach dem Verlauf der Steuersignale $S_{11}$ bis $S_{18}$, zu unterschiedlichen Zeitpunkten erfolgen. Wenn der Verlauf der Steuersignale $S_{11}$ bis $S_{18}$ geeignet gewählt wird, kann daher auch eine geringere Anzahl von Kondensatoren mit einstellbaren Kapazitätswerten verwendet werden, die dann mehrfach genutzt werden.

In der am Schluß der Beschreibung angefügten Tabelle I sind nochmals alle Ladungspakete zusammengestellt, die mit der Anordnung von Fig. 8 realisiert werden können. In jedem Ladungspaket stellt der Term $\pm C_i/C$ (mit i = 91 ... 98) einen Korrekturkoeffizient $B_{11}$ bis $C_{22}$ dar, wie in der Tabelle I gleichfalls angegeben ist.

Die Bildung und Übertragung der Ladungspakete ist spätestens mit der Phase 10 beendet. In der Phase 11 wird der Schalter $S_8$ geschlossen, wodurch das auf dem Speicherkondensator 84 integrierte Gesamtladungspaket auf den Integrationskondensator 72 übertragen wird. Demzufolge erfährt die Spannung $UA_2$ in der Phase 11 nochmals eine Änderung. In jedem Meßzyklus M handelt es sich dabei um eine Korrekturänderung aufgrund des übertragenen Korrekturladungspakets. In jeder Kompensationsphase K handelt es sich dagegen im wesentlichen um die Kompensationsänderung, durch die die Spannung $U_{A2}$ wieder über die vorgegebene Schwellenspannung $U_S$ angehoben wird, jedoch in Verbindung mit einer zusätzlichen Korrekturänderung, da auch in der Kompensationsphase Korrekturladungspakete enthalten sind.

### 3. Übertragungsfunktion:

Die Übertragungsfunktion der Schaltung berechnet sich aus der Gleichung für die Ladungsbalance: Die Summe aller im Integrationskondensator 72 integrierten Ladungspakete ist in einem bestimmten Zeitintervall gleich Null. Betrachtet man ein Zeitintervall von n Zyklen, in dem k Kompensationszyklen K und somit (n-k) Meßzyklen M enthalten sind, so werden in diesem Zeitintervall die folgenden Ladungspakete auf den Integrationskondensator 72 übertragen:

- in jedem der n Zyklen ein Meßladungspaket $dQ_M$, also ingesamt
$$n \cdot dQ_M = n \cdot (-1) \cdot (C_x - C_{ref}) \cdot (U_2 - U_3) \quad (70)$$
- in jedem der n-k Meßzyklen M die Korrekturladungspakete $dQ_{91} + dQ_{95}$ und $dQ_{93} + dQ_{97}$ (mit entsprechenden Vorzeichen) also insgesamt:
$$(n - k) \cdot (dQ_{91} + dQ_{95}) = (n - k) \cdot (B_{21} + B_{22} \cdot V_T) \cdot (C_x - C_{ref}) \cdot (U_2 - U_3) \quad (71)$$
$$(n - k) \cdot (dQ_{93} + dQ_{97}) = (n - k) \cdot (B_{11} + B_{12} \cdot V_T) \cdot C_{ref} \cdot (U_2 - U_3) \quad (72)$$
- in jedem der k Kompensationszyklen K die Kompensationsladungspakete $dQ_{92} + dQ_{96}$ und $dQ_{94} + dQ_{98}$ (mit entsprechenden Vorzeichen), also insgesamt
$$k \cdot (dQ_{92} + dQ_{96}) = k \cdot (C_{21} + C_{22} \cdot V_T) \cdot (C_x - C_{ref}) \cdot (U_2 - U_3) \quad (73)$$
$$k \cdot (dQ_{94} + dQ_{98}) = k \cdot (C_{11} + C_{12} \cdot V_T) \cdot C_{ref} \cdot (U_2 - U_3) \quad (74)$$

Die Gesamtheit dieser Ladungspakete ist zur besseren Übersicht in der Tabelle II zusammengestellt.

Summiert man alle Ladungspakete in der Tabelle II und setzt sie gleich Null, so erhält man als Übertragungsfunktion:

$$\frac{k}{n} = \frac{-B_{11} - B_{12} \cdot V_T + (1 - B_{21} - B_{22} \cdot V_T) \cdot (C_x - C_{ref})/C_{ref}}{C_{11} - B_{11} + (C_{12} - B_{12}) \cdot V_T + (C_{21} - B_{21} + (C_{22} - B_{22}) \cdot V_T) \cdot (C_x - C_{ref})/C_{ref}} \quad (75)$$

Durch einfache Zusammenfassung der Koeffizienten ergibt sich somit genau die gewünschte Übertragungsfunktion gemäß Gleichung (4):

$$\frac{k}{n} = \frac{b_{11} + b_{12} \cdot V_T + (b_{21} + b_{22} \cdot V_T) \cdot (C_x - C_{ref})/C_{ref}}{c_{11} + c_{12} \cdot V_T + (c_{21} + c_{22} \cdot V_T) \cdot (C_x - C_{ref})/C_{ref}} \quad (76)$$

Vergleicht man die Gleichung (76) mit der Gleichung (4), so erkennt man, daß der Meßeffekt $M_1$ das druck- und temperaturabhängige Kapazitätsverhältnis $(C_x - C/_{ref})/C_{ref}$ und der Meßeffekt $M_2$ das temperaturabhängige Spannungsteilerverhältnis $V_T$ ist. Mit der Übertragungsfunktion gemäß Gleichung (76) können die wichtigsten Kenndaten des Sensors 50 mit den folgenden einstellbaren Korrekturkoeffizienten korrigiert werden:

Nullpunkt : $b_{11}$

| TK-Nullpunkt | : $b_{12}$ |
| Empfindlichkeit | : $b_{21}$, $c_{11}$ |
| TK-Empfindlichkeit | : $b_{22}$, $c_{12}$ |
| Nichtlinearität | : $c_{21}$ |
| TK-Nichtlinearität | : $c_{22}$ |

Der Spannungsteiler 54 mit den Widerständen 56, 57, 58 geht in die Übertragungsfunktion nicht ein, bestimmt jedoch die Größe des Meßladungspakets $dQ_M$ und somit die Dimensionierung der Kondensatoren 66 und 72. Desgleichen gehen auch die Kapazitätswerte der Kondensatoren 72 und 84, die Offsetspannungen der Operationsverstärker, die Betriebsspannung der Schaltung und die Frequenz, mit der die Steuerschaltung getaktet wird, nicht in das Endergebnis ein.

Der Wert der Spannung $U_1$ wird nur durch den Arbeitsbereich der Schaltung begrenzt.

Die Gleichung (75) läßt in Verbindung mit der Tabelle I erkennen, daß die Korrekturkoeffizienten der Übertragungsfunktion durch Kapazitätsverhältnisse realisiert sind, nämlich durch die Verhältnisse der Kapazitätswerte $C_{91}$ bis $C_{98}$ der Kondensatoren 91 bis 98 zum Kapazitätswert C des Speicherkondensators 66. Die hierfür benötigten Kondensatoren können sehr gut in integrierter Form hergestellt werden. Zur Einstellung der erforderlichen Kapazitätswerte können in an sich bekannter Weise für jeden Kondensator mehrere Teilkondensatoren mit abgestuften Kapazitätswerten vorgesehen werden, die durch digitale Programmierung nach Bedarf parallelgeschaltet werden können. Hierfür kann eines der für die digitale Programmierung von Festwertspeichern (ROM) bekannten Verfahren angewendet werden. Die Anzahl der erforderlichen Teilkondensatoren kann dadurch verringert werden, daß auch der Speicherkondensator 66 aus mehreren Teilkondensatoren gebildet wird, die zur Einstellung des Kapazitätswertes C durch digitale Programmierung nach Bedarf parallelgeschaltet werden.

Da die Kapazitätswerte der Kondensatoren 72 und 84 nicht in die Übertragungsfunktion eingehen, ist eine Einstellung dieser Kondensatoren nicht erforderlich. Es ist jedoch zweckmäßig, wenn die Kapazitätswerte dieser Kondensatoren von gleicher Größenordnung wie der Kapazitätswert des Kondensators 66 sind, weshalb in der vorstehenden Beschreibung angenommen wurde, daß die Kondensatoren 66, 72 und 84 den gleichen Kapazitätswert C haben. Dies ist jedoch keine zwingende Bedingung.

Zur Bestimmung der erforderlichen Kapazitätswerte wird zunächst der Sensor 50 ausgemessen, um die Übertragungsfunktion der Signalverarbeitungsschaltung gemäß der Gleichung (76) zu bestimmen, die den gewünschten fehlerfreien Zusammenhang zwischen der zu messenden physikalischen Größe, im vorliegenden Fall also dem Druck P, und dem als Ausgangssignal erhaltenen Verhältnis k/n ergeben würde. Dabei macht es keinen Unterschied, ob als Ausgangssignal das Verhältnis von zwei innerhalb eines bestimmten Zeitintervalls erhaltenen Zählerständen k und n oder das Verhältnis der Frequenzen der den beiden Zählern 100 und 101 zugeführten Zählimpulse verwendet wird. Wenn die Übertragungsfunktion gemäß der Gleichung (76) bestimmt ist, kann sie in die Form der Gleichung (75) gebracht werden, aus der dann mit Hilfe der Tabelle I die erforderlichen Kapazitätswerte $C_{91}$ bis $C_{98}$ der Kondensatoren 91 bis 98 berechnet werden können. Anschließend werden die Teilkapazitäten der Kondensatoren 91 bis 98 und gegebenenfalls des Speicherkondensators 66 durch digitale Programmierung so parallelgeschaltet, daß die berechneten Kapazitätswerte eingestellt werden. Die Signalverarbeitungsschaltung weist dann die Übertragungsfunktion gemäß Gleichung (76) auf, su daß das Ausgangssignal k/n die zu messende physikalische Größe, beispielsweise den Druck P, linear und frei von Temperatureinflüssen wiedergibt.

Die Korrektur weiterer Störeinflüsse ist aus der vorstehenden Beschreibung für den Fachmann leicht ableitbar. Aus der Gleichung (2) läßt sich die Form der Übertragungsfunktion gemäß Gleichung (76) für den Fall ableiten, daß außer einem Störeffekt $M_2$ weitere Störeffekte $M_3$, $M_4$ ... berücksichtigt werden sollen. Es werden dann zusätzliche Schalter-Kondensator-Kombinationen vorgesehen, die - gegebenenfalls mit Hilfe zusätzlicher Sensoren für die weiteren Störeffekte - die Bildung von positiven oder negativen Ladungspaketen ermöglichen, die ebenfalls auf den Speicherkondensator 84 des Korrekturspeichers 76 aufgebracht werden, so daß sie zur Bildung der Korrektur- bzw. Kompensationsladungspakete beitragen, die auf den Integrationskondensator 72 übertragen werden. Die Kapazitätswerte der zusätzlichen Kondensatoren werden in der zuvor geschilderten Weise berechnet und eingestellt. Die Zeitabläufe der Schalter-Steuersignale, die für die richtige Bildung der positiven oder negativen Ladungspakete erforderlich sind, kann der Fachmann nach den zuvor angegebenen Regeln ohne Schwierigkeit festlegen. Desgleichen kann er die den weiteren Störeffekten zugeordneten Korrekturkoeffizienten und die für die Einstellung dieser Korrekturkoeffizienten erforderlichen Kapazitätswerte aufgrund der vorstehenden Beschreibung ohne Schwierigkeit berechnen.

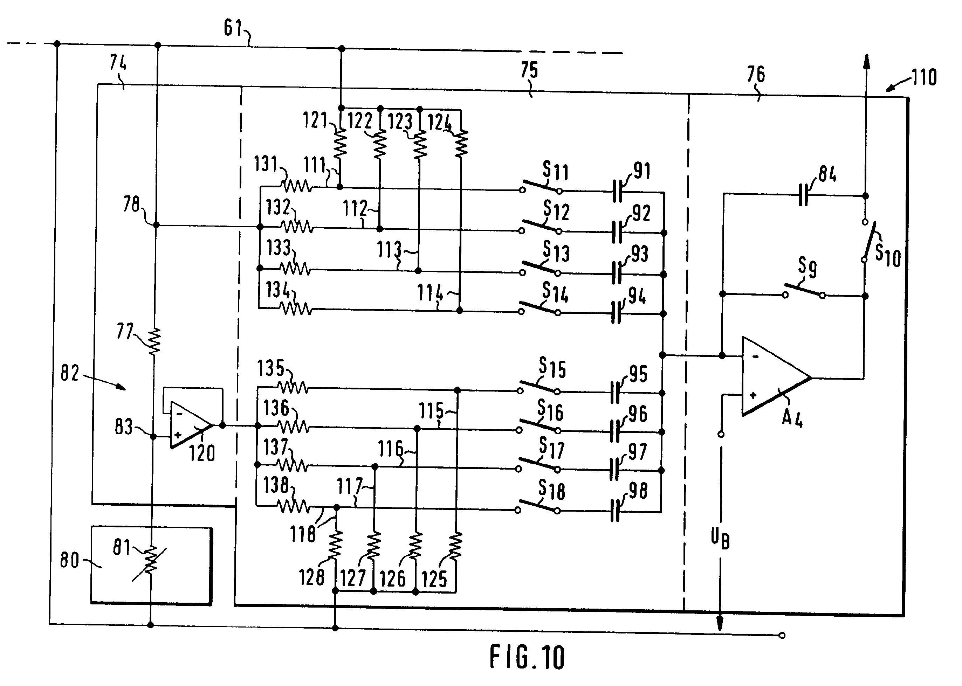

Fig. 10 zeigt eine abgeänderte Ausführungsform der Korrekturschaltung, bei der die Korrektur- und Kompensationsladungspakete durch einstellbare Widerstände anstatt durch einstellbare Kondensatoren gewichtet werden, um die Korrekturkoeffizienten der Übertragungsfunktion einzustellen. Die Bestandteile der Korrekturschaltung 110 von Fig. 10, die mit den entsprechenden Bestandteilen der Korrekturschaltung 73 von Fig. 8 identisch sind, sind mit den gleichen Bezugzeichen wie dort bezeichnet und werden nicht nochmals beschrieben.

Der wesentliche Unterschied zwischen der Korrekturschaltung 110 von Fig. 10 gegenüber der Korrekturschaltung 73 von Fig. 8 besteht darin, daß die Kondensatoren 91 bis 98 durch die zugeordneten Schalter $S_1$ bis $S_8$ nicht direkt mit dem Schaltungspunkt 78 bzw. dem Abgriff 83 des temperaturabhängigen Spannungsteilers 82 verbunden werden, sondern mit den Abgriffen von Widerstands-Spannungsteilern 111 bis 118. Die Spannungsteiler 111 bis 114 sind zwischen dem Schaltungspunkt 78 und dem Bezugsleiter 61 angeschlossen, und die Spannungsteiler 115 bis 118 sind unter Einfügung eines Trennverstärkers 120 zwischen dem Abgriff 83 und dem Bezugsleiter 61 angeschlossen. Der Trennverstärker 120 hat den Zweck, eine Beeinflussung des Spannungsteilerverhältnisses $V_T$ des temperaturabhängigen Spannungsteilers 82 durch die Spannungsteiler 115 bis 118 zu verhindern. Er besteht in herkömmlicher Weise aus einem Operationsverstärker, dessen Ausgang direkt mit dem invertierenden Eingang verbunden ist, so daß er einen Impedanzwandler mit dem Verstärkungsfaktor 1 bildet. Am Ausgang des Trennverstärkers 120 steht somit die Spannung $U_T$ zur Verfügung, wenn die Offsetspannung des Operationsverstärkers vernachlässigt wird.

Der Spannungsteiler 111 besteht aus zwei temperaturunabhängigen Widerständen 121 und 131, die in Reihe zwischen dem Schaltungspunkt 78 und dem Bezugsleiter 61 angeschlossen sind. Bezeichnet man den Widerstandswert des Widerstands 121 mit $R_{121}$ und den Widerstandswert des Widerstands 131 mit $R_{131}$, so hat der Spannungsteiler 111 das Spannungsteilerverhältnis

$$V_{111} = R_{121}/(R_{121} + R_{131}) \quad (77)$$

Da an dem Spannungsteiler 111 die Spannung $U_{A1}$ anliegt, steht an seinem Abgriff die Spannung

$$U_{111} = U_{A1} \cdot V_{111} \quad (78)$$

zur Verfügung.

In entsprechender Weise bestehen die Spannungsteiler 112 bis 114 aus temperaturunabhängigen Widerständen 122 und 132, 123 und 133 bzw. 124 und 134, und sie haben die Spannungsteilerverhältnisse

$$V_{112} = R_{122}/(R_{122} + R_{132})$$
$$V_{113} = R_{123}/(R_{123} + R_{133}) \quad (79)$$
$$V_{114} = R_{124}/(R_{124} + R_{134})$$

so daß an ihren Abgriffen die folgenden Spannungen zur Verfügung stehen:

$$U_{112} = U_{A1} \cdot V_{112}$$
$$U_{113} = U_{A1} \cdot V_{113} \quad (80)$$
$$U_{114} = U_{A1} \cdot V_{114}$$

Jeder der Spannungsteiler 115 bis 118 besteht ebenfalls aus zwei temperaturunabhängigen Widerständen 125 und 135, 126 und 136, 127 und 137 bzw. 128 und 138, die in Reihe zwischen dem Ausgang des Trennverstärkers 120 und dem Bezugsleiter 61 angeschlossen sind. Diese Spannungsteiler haben somit die folgenden Spannungsteilerverhältnisse:

$$V_{115} = R_{125}/(R_{125} + R_{135})$$
$$V_{116} = R_{126}/(R_{126} + R_{136})$$
$$V_{117} = R_{127}/(R_{127} + R_{137}) \quad (81)$$
$$V_{118} = R_{128}/(R_{128} + R_{138})$$

Da an diesen Spannungsteilern die Spannung

$$U_T = U_{A1} \cdot V_T \quad (82)$$

anliegt, stehen an ihren Abgriffen die folgenden Spannungen zur Verfügung:

$$U_{115} = U_T \cdot V_{115} = U_{A1} \cdot V_T \cdot V_{115}$$

$$U_{116} = U_T \cdot V_{116} = U_{A1} \cdot V_T \cdot V_{116}$$

$$U_{117} = U_T \cdot V_{117} = U_{A1} \cdot V_T \cdot V_{117} \qquad (83)$$

$$U_{118} = U_T \cdot V_{118} = U_{A1} \cdot V_T \cdot V_{118}$$

Zur Bildung der Korrektur- und Kompensationsladungspakete werden die Schalter $S_{11}$ bis $S_{18}$ in der zuvor beschriebenen Weise durch die Signale $S_{11+}$ bis $S_{18+}$ bzw. $S_{11-}$ bis $S_{18-}$ von Fig. 9 gesteuert. Die Konditionier- und Umladevorgänge laufen daher in der gleichen Weise wie bei der Signalverarbeitungsschaltung von Fig. 8 ab, wobei lediglich der Unterschied besteht, daß die Konditionierungen bzw. Umladungen nicht durch die Spannungen $U_{A1}$ oder $U_T$, sondern durch die an den Abgriffen der Spannungsteiler 111 bis 118 vorhandenen Spannungen $U_{111}$ bis $U_{118}$ bestimmt sind. Wenn also beispielsweise der Schalter $S_1$ durch das Steuersignal $S_{S11+}$ oder durch das Steuersignal $S_{S11-}$ von Fig. 9 gesteuert wird, um mit Hilfe des Kondensators 91 ein positives oder negatives Ladungspaket zu erzeugen, so wird in Abwandlung der Gleichungen (41) bzw. (45) nunmehr eines der folgenden Umladungspakete auf den Speicherkondensator 84 übertragen:

$$dQ_{1+} = (U_2 - U_3) \cdot (C_x - C_{ref}) \cdot V_{111} \cdot C_{91}/C \qquad (84)$$

$$dQ_{1-} = -(U_2 - U_3) \cdot (C_x - C_{ref}) \cdot V_{111} \cdot C_{91}/C \qquad (85)$$

Der Korrekturkoeffizient $B_{21}$ hat daher nunmehr den Wert

$$B_{21} = \pm V_{111} \cdot C_{91}/C \qquad (86)$$

Dieser Korrekturkoeffizient kann durch Veränderung des Spannungsteilerverhältnisses $V_{111}$ anstatt durch Veränderung des Kapazitätswertes $C_{91}$ auf den gewünschten Wert eingestellt werden. Die Veränderung des Spannungsteilerverhältnisses $V_{111}$ kann entweder durch Änderung des Widerstandswertes $R_{121}$ oder durch Veränderung des Widerstandswertes $R_{131}$ oder auch durch Veränderung beider Widerstandswerte eingestellt werden.

In entsprechender Weise ergeben sich auch die übrigen Korrekturkoeffizienten der Übertragungsfunktion. Die Korrekturkoeffizienten unterscheiden sich von den in der Tabelle I angegebenen Korrekturkoeffizienten jeweils nur durch den Faktor $V_i$ (mit i = 111, 112 ... 118), und sie können durch Verändern der Widerstände 121 bis 128 und/oder der Widerstände 131 bis 138 eingestellt werden.

Die Verwendung von einstellbaren Widerständen anstelle von einstellbaren Kondensatoren für die Wichtung der Ladungspakete ist insbesondere in Hybridschaltungen von Vorteil, da in diesem Fall die Einstellung z.B. durch Lasertrimmen leicht realisiert werden kann.

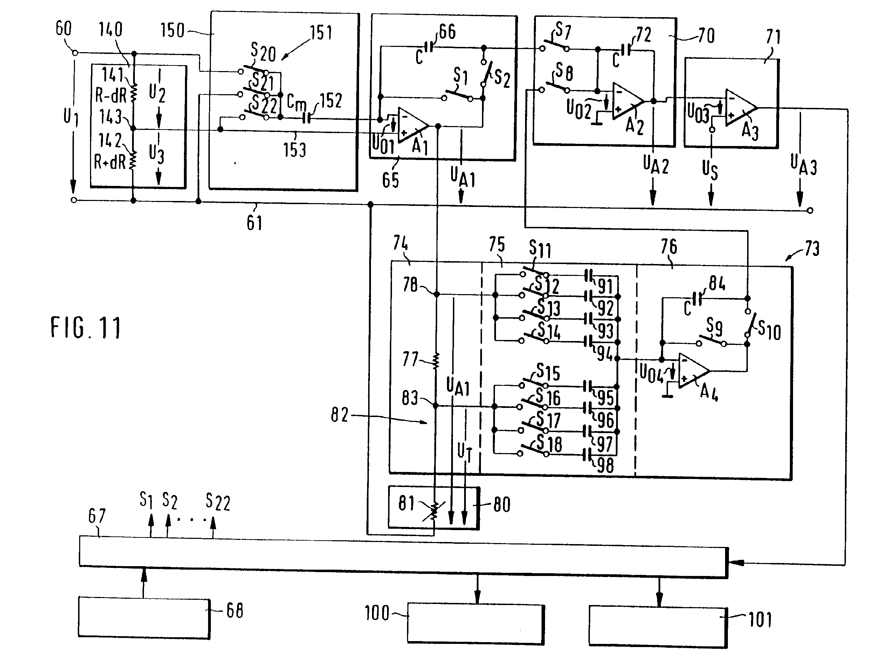

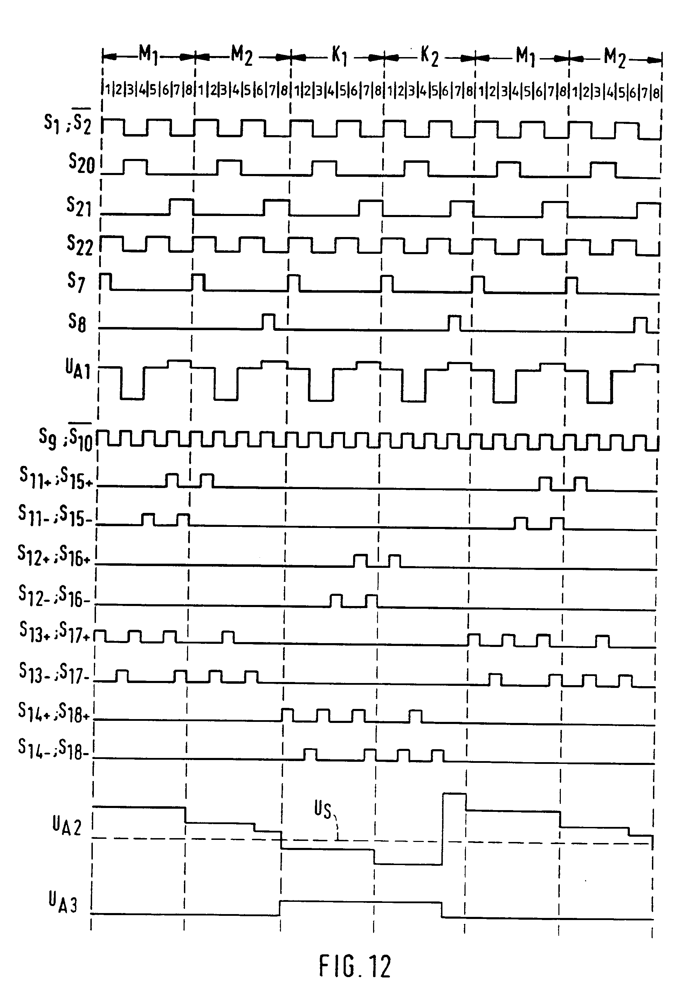

Fig. 11 zeigt die Abwandlung der Signalverarbeitungsschaltung von Fig. 8 für die Signalaufbereitung mit Fehlerkorrektur des von einer Widerstands-Halbbrücke 140 gelieferten Sensorsignals, und Fig. 12 zeigt den zeitlichen Verlauf der Zugehörigen Schalter-Steuersignale und Spannungen entsprechend signals, und Fig. 12 zeigt den zeitlichen Verlauf der zugehörigen Schalter-Steuersignale und Spannungen entsprechend der Darstellung von Fig. 9. Die Widerstands-Halbbrücke 140 enthält zwei Widerstände 141 und 142, die in Reihe zwischen der Eingangsklemme 60 und dem Bezugsleiter 61 angeschlossen sind und deren Verbindungspunkt einen Abgriff 143 bildet. Die Widerstandswerte der Widerstände 141 und 142 unterscheiden sich um gleiche Beträge dR, aber mit entgegengesetzten Vorzeichen, von einem gleichen Grundwert R. Als Beispiel ist angegeben, daß der Widerstand 141 den Wert R-dR und der Widerstand 142 den Wert R+dR hat. Die Widerstands-Halbbrücke 140 kann also beispielsweise durch den Kraftsensor 20 von Fig. 3 und 4 gebildet sein, wobei die Widerstände 141 und 142 die Widerstandswerte der Dehnmeßstreifen 23 bzw. 22 darstellen. Dabei ist R der Widerstandswert der unverformten Dehnmeßstreifen, und dR ist die durch die Verformung der Dehnmeßstreifen bewirkte Widerstandsänderung. Das Widerstandsverhältnis dR/R stellt den interessierenden Meßeffekt $M_1$ dar, der im Fall des Kraftsensors 20 von Fig. 3 und 4 den Zusammenhang zwischen der zu messenden Kraft F und der Widerstandsänderung der Dehnmeßstreifen angibt.

Wenn an die Widerstands-Halbbrücke 140 zwischen der Eingangsklemme 60 und dem Bezugsleiter 61 eine Spannung $U_1$ angelegt wird, besteht an dem Widerstand 141 eine Spannung $U_2$ des Wertes

$$U_2 = U_1 \cdot \frac{R - dR}{(R - dR) + (R + dR)} = U_1 \cdot \frac{R - dR}{2R} \qquad (87)$$

und an dem Widerstand 142 eine Spannung $U_3$ des Wertes

$$U_3 = U_1 \cdot \frac{R + dR}{(R - dR) + (R + dR)} = U_1 \cdot \frac{R + dR}{2R} \qquad (88)$$

Die mit der Widerstands-Halbbrücke 140 verbundene Signalverarbeitungsschaltung verwendet die Spannungen $U_1$, $U_2$ und $U_3$ zur Gewinnung eines Ausgangssignals, das die die Widerstandsänderung dR verursachende physikalische Größe angibt, bei dem Beispiel des Kraftsensors also die zu messende Kraft F. Diese Signalverarbeitungsschaltung unterscheidet sich von der Signalverarbeitungsschaltung von Fig. 8 nur durch den anderen Aufbau des Funktionsblocks 150, der in Fig. 11 zwischen die Widerstands-Halbbrücke 140 und den Zwischenspeicher 65 eingefügt ist. Die übrigen Bestandteile der Signalverarbeitungsschaltung von Fig. 11 sind mit denjenigen von Fig. 8 identisch. Die einander entsprechenden Teile sind daher mit den gleichen Bezugszeichen wie in Fig. 8 bezeichnet und werden nicht nochmals beschrieben.

Der Funktionsblock 150 enthält eine Schaltergruppe 151, einen Kondensator 152 mit der Kapazität $C_m$ und einen durchgehenden Verbindungsleiter 153, der den Abgriff 143 der Widerstands-Halbbrücke 140 dauernd mit dem nichtinvertierenden Eingang des Operationsverstärkers $A_1$ im Zwischenspeicher 65 verbindet. Die Schaltergruppe 151 enthält drei Schalter $S_{20}$, $S_{21}$ und $S_{22}$. Die eine Elektrode des Kondensators 152 ist dauernd mit dem invertierenden Eingang des Operationsverstärkers $A_1$ verbunden. Die andere Elektrode des Kondensators 152 wird durch den Schalter $S_{20}$ mit der Eingangsklemme 60, durch den Schalter $S_{21}$ mit dem Bezugsleiter 61 und durch den Schalter $S_{22}$ mit dem Verbindungsleiter 153 verbunden.

Der zeitliche Verlauf der Steuersignale, die die verschiedenen Schalter der Signalverarbeitungsschaltung von Fig. 11 steuern, ist in den Diagrammen von Fig. 12 dargestellt, wo jedes Steuersignal wieder mit dem gleichen Bezugszeichen wie der von ihm gesteuerte Schalter bezeichnet ist. Wie im Fall von Fig. 8 und 9 ist jeder Schalter offen, wenn das ihn steuernde Signal den niedrigen Signalwert hat, und er ist geschlossen, wenn das ihn steuernde Signal den hohen Signalwert hat.

Die Diagramme von Fig. 12 zeigen auch den zeitlichen Verlauf der Ausgangsspannungen $U_{A1}$, $UA_2$ und $U_{A3}$ der Operationsverstärker $A_1$, $A_2$ bzw. $A_3$.

Die Signalverarbeitungsschaltung von Fig. 11 arbeitet wie diejenige von Fig. 8 nach dem Prinzip der Ladungsbalance, die wieder im Kondensator 72 stattfindet. Der Funktionsblock 150 liefert diskrete Ladungspakete, die im Speicherkondensator 66 zwischengespeichert werden. Diese Ladungspakete werden dadurch erzeugt, daß der Kondensator 152 mit Hilfe der Schalter $S_{20}$, $S_{21}$, $S_{22}$ wechselweise durch die verschiedenen Spannungen auf- und umgeladen wird, die an der WiderstandsHalbbrücke 140 zur Verfügung stehen. Die im Speicherkondensator 66 zwischengespeicherten Ladungspakete werden durch Schließen des Schalters $S_7$ auf den Integrationskondensator 72 übertragen. Der Integrationskondensator 72 empfängt außerdem über den Schalter $S_8$ die Korrektur- und Kompensationsladungspakete, die in der Korrekturschaltung 73 erzeugt und im Speicherkondensator 84 zwischengespeichert werden. Der Kondensator 7 integriert alle Ladungspakete, die über die Schalter $S_7$ und $S_8$ übertragen werden. Im zeitlichen Mittel besteht Ladungsgleichgewicht, d.h. die Summe aller integrierten Ladungspakete ist gleich Null. Dieses Gleichgewicht besteht immer dann, wenn die Ausgangsspannung $U_{A2}$ des Operationsverstärkers $A_2$ die Schwellenspannung $U_S$ des Komparators 71 unterschreitet.

Die Diagramme von Fig. 12 zeigen den Ablauf dieser Funktionsweise im Verlauf von mehreren Zyklen, von denen einer ein Kompensationszyklus K ist, während die übrigen Zyklen Meßzyklen M sind. Jeder Zyklus besteht aus acht Phasen, die mit 1 bis 8 numeriert sind.

Die Schalter $S_1$ und $S_2$ werden wieder im Gegentakt durch ein Rechtecksignal gesteuert, so daß sie abwechselnd für die Dauer von zwei Phasen offen bzw. geschlossen sind. Die Schalter $S_9$ und $S_{10}$ werden im Gegentakt durch ein Rechtecksignal der doppelten Frequenz gesteuert, so daß sie abwechselnd für die Dauer einer Phase offen bzw. geschlossen sind.

Wenn der Schalter $S_1$ geschlossen und der Schalter $S_2$ offen ist, besteht eine "Konditionierphase", in der der Kondensator 152 über die Schalter $S_{20}$, $S_{21}$, $S_{22}$ durch die an der Widerstands-Halbbrücke 140 verfügbaren Spannungen $U_1$, $U_2$, $U_3$ aufgeladen werden kann, ohne daß die Ladung auf dem Speicherkondensator 66 dadurch beeinflußt wird. Wenn der Schalter $S_1$ offen und der Schalter $S_2$ geschlossen ist, ist der Zwischenspeicher 65 für die Übertragung eines Umladungspakets vom Kondensator 152 auf den Speicherkondensator 66 bereit.

In gleicher Weise bestimmen die abwechselnden Stellungen der Schalter $S_9$ und $S_{10}$ entweder eine Konditionierphase für die Kondensatoren 91 bis 98 oder die Bereitschaft des Korrekturspeichers 76 für die Übernahme von Ladungspaketen, wie dies zuvor für die Signalverarbeitungsschaltung von Fig. 8 erläutert worden ist.

Wie zuvor soll zuerst das Grundprinzip der Schaltung und anschließend die Funktion der Korrekturschaltung 73 anhand der Diagramme von Fig. 12 beschrieben werden.

### 1. Grundprinzip:

#### Phasen 1 und 2:

Vor Beginn der Phase 1 jedes Zyklus befindet sich auf dem Speicherkondensator 66 noch die im vorhergehenden Zyklus aufgebrachte Ladung. Für die Dauer der Phasen 1 und 2 ist der Schalter $S_1$ geschlossen und der Schalter $S_2$ offen, so daß der Kondensator 66 vom Ausgang des Operationsverstärkers $A_1$ abgetrennt ist. Der Schalter $S_7$ wird für die Dauer der Phase 1 geschlossen, so daß mit Beginn der Phase 1 eine Ladungsübertragung vom Speicherkondensator 66 auf den Integrationskondensator 72 stattfindet. Da am nichtinvertierenden Eingang des Operationsverstärkers $A_1$ die Spannung $U_3$ liegt, wird der Speicherkondensator 66 auf die Restladung

$$Q_{66R} = (U_{02} - U_{01} - U_3) \cdot C \quad (89)$$

entladen, wobei die Umlademenge auf den Integrationskondensator 72 fließt.

Zugleich befindet sich die Schaltung in der Konditionierphase für den Kondensator 152. Der Schalter $S_{22}$, der stets synchron mit dem Schalter $S_1$ betätigt wird, ist während der Phasen 1 und 2 geschlossen. Der Kondensator 152 wird daher durch die Spannung $U_{01}$ auf die Ladung

$$Q_{Cm(1,2)} = U_{01} \cdot C_m \quad (90)$$

geladen.

#### Phasen 3 und 4:

In den Phasen 3 und 4 ist der Schalter $S_1$ offen und der Schalter $S_2$ geschlossen, so daß der Zwischenspeicher 65 bereit ist, Ladung auf den Speicherkondensator 66 zu übernehmen. Zugleich ist der Schalter $S_{20}$ geschlossen, so daß der Kondensator 152 mit der Eingangsklemme 60 verbunden ist. Somit liegt am Kondensator 152 die Differenz der Spannungen $U_{01}$ und $U_2$, durch die er auf die Ladung

$$Q_{Cm(3,4)} = (U_{01} - U_2) \cdot C_m \quad (91)$$

umgeladen wird. Die Umlademenge

$$dQ_{Cm(3,4)} = Q_{Cm(3,4)} - Q_{Cm(1,2)} = -U_2 \cdot C_m \quad (92)$$

wird auf den Speicherkondensator 66 übertragen, der somit die folgende Ladung hat:

$$Q_{66(3,4)} = Q_{66R} + dQ_{Cm(3,4)} = Q_{66R} - U_2 \cdot C_m \quad (93)$$

#### Phasen 5 und 6:

In den Phasen 5 und 6 ist wieder der Schalter $S_1$ geschlossen und der Schalter $S_2$ offen, so daß sich die Schaltung in der Konditionierphase für den Kondensator 152 befindet. Da zugleich der Schalter $S_{22}$ geschlossen ist, erhält der Kondensator 152 wieder die Ladung

$$Q_{Cm(5,6)} = U_{01} \cdot C_m \quad (94)$$

#### Phasen 7 und 8:

In den Phasen 7 und 8 ist der Schalter $S_1$ offen und der Schalter $S_2$ geschlossen, so daß der Zwischenspeicher 65 zur Übernahme von Ladung bereit ist. Zugleich ist der Schalter $S_{21}$ geschlossen, so daß der Kondensator 152 mit dem Bezugsleiter 61 verbunden ist. Somit liegt am Kondensator 152 die Summe der Spannungen $U_{01}$ und $U_3$, durch die er auf die Ladung

$$Q_{Cm(7,8)} = (U_{01} + U_3) \cdot C_m \quad (95)$$

umgeladen wird. Die Umlademenge

$$dQ_{Cm(7,8)} = Q_{Cm(7,8)} - Q_{Cm(5,6)} = U_3 \cdot C_m \quad (96)$$

wird auf den Speicherkondensator 66 übertragen, der somit die folgende Gesamtladung hat:

$$Q_{66(7,8)} = Q_{66R} + dQ_{Cm(3,4)} + dQ_{Cm(7,8)}$$
$$= Q_{66R} + (U_3 - U_2) \cdot C_m \quad (97)$$

In der Phase 1 des folgenden Zyklus wird der Kondensator 66 wieder auf die Restladung $Q_{66R}$ gemäß Gleichung (89) entladen. Die gleiche Restladung $Q_{66R}$ ist am Beginn jedes Zyklus vorhanden, so daß in der Phase 1 jedes Zyklus das dem eigentlichen Meßeffekt proportionale Meßladungspaket

$$dQ_M = Q_{66R} - Q_{66(7,8)} = - (U_3 - U_2) \cdot C_m \quad (98)$$

auf den Speicherkondensator 72 übertragen wird.

Setzt man gemäß den Gleichungen (87) und (88)

$$U_2 = U_1 \cdot (R - dR)/2R \quad (99)$$
$$U_3 = U_1 \cdot (R + dR)2R \quad (100)$$

in die Gleichung (98) ein, so erhält man

$$dQ_M = - dR/R \cdot U_1 \cdot C_m \quad (101)$$

Für $dR > 0$ ist $dQ_M < 0$. Die Ladung auf dem Integrationskondensator 72 nimmt daher bei jeder Übertragung eines Meßladungspakets $dQ_M$ ab, und dementsprechend wird die Ausgangsspannung $U_{A2}$ des Operationsverstärkers $A_2$ kleiner. Unterschreitet die Spannung $UA_2$ die vorgegebene Schwellenspannung $U_S$ des Komparators 71, so kippt dessen Ausgangsspannung $U_{A3}$ auf ihren maximalen Wert, wodurch in der Steuerschaltung 67 die Durchführung eines Kompensationszyklus ausgelöst wird. Im Kompensationszyklus wird die Korrekturschaltung 73 so gesteuert, daß sie beim nächsten Schließen des Schalters $S_8$ auf den Integrationskondensator 72 ein Kompensationsladungspaket

$$dQ_k = (U_2 + U_3) \cdot C_m = U_1 \cdot C_m \quad (102)$$

mit solchem Vorzeichen überträgt, daß die Spannung $U_{A2}$ wieder über die Schwellenspannung $U_S$ angehoben wird.

2. Funktion der Korrekturschaltung:

Die Korrekturschaltung 73 von Fig. 11 ist mit derjenigen von Fig. 8 identisch, und sie hat im Prinzip die gleiche Funktionsweise, abgesehen von dem anderen zeitlichen Verlauf der Schaltersteuersignale.

In Fig. 12 sind für jeden Schalter wieder zwei unterschiedliche zeitliche Verläufe des zugeordneten Steuersignals dargestellt, von denen der eine Verlauf angewendet wird, wenn ein positives Ladungspaket erzeugt werden soll, während der andere Verlauf angewendet wird, wenn ein negatives Ladungspaket erzeugt werden soll. Wie im Fall von Fig. 8 und 6 dienen die Schalter $S_{11}$, $S_{13}$, $S_{15}$, $S_{17}$ in Verbindung mit den zugehörigen Kondensatoren 91, 93, 95, 97 zur Erzeugung von Korrekturladungspaketen in den Meßzyklen M, und die Schalter $S_{12}$, $S_{14}$, $S_{16}$, $S_{18}$ dienen dazu, in den Kompensationszyklen K Ladungspakete zu erzeugen, die Kompensationsladungspakete und Korrekturladungspakete enthalten. Innerhalb jedes Zyklus nimmt die am Schaltungspunkt 78 verfügbare Spannung $U_{A1}$ und damit auch die am Abgriff 83 verfügbare temperaturabhängige Spannung $U_T$ verschiedene Werte an, die durch geeignete Wahl der Schaltphasen zur Auf- oder Umladung der Kondensatoren verwendet werden können. Das die Schalter $S_9$ und $S_{10}$ steuernde Rechtecksignal bestimmt, ob in einer Schaltphase eine Konditionierung oder eine Umladung erfolgt. Die Schaltphasen der Schaltersteuersignale $S_{11}$, $S_{12}$, $S_{13}$, $S_{14}$ werden so gewählt, daß sowohl Spannungsänderungen gemäß

$$dU_{A1} = \pm dR/R \cdot U_1 \cdot C_m/C \quad (103)$$

als auch Spannungsänderungen gemäß

$$dU_{A1} = \pm U_1 \cdot C_m/C \quad (104)$$

zur Auf- oder Umladung der Kondensatoren 91 bis 94 verwendet werden können. In entsprechender Weise werden die Schaltphasen der Schaltersteuersignale $S_{15}$, $S_{16}$, $S_{17}$, $S_{18}$ so gewählt, daß sowohl Spannungsänderungen gemäß

$$dU_T = \pm V_T \cdot dR/R \cdot U_1 \cdot C_m/C \quad (105)$$

als auch Spannungsänderungen gemäß

$$dU_T = \pm V_T \cdot U_1 \cdot C_m/C \quad (106)$$

zur Auf- oder Umladung der Kondensatoren 95 bis 98 verwendet werden können. Dabei bestimmt das die Schalter $S_9$ und $S_{10}$ steuernde Rechtecksignal, ob eine Schaltphase eine Konditionierung oder eine Umladung bewirkt.

Während der Schalter $S_7$ in jedem Zyklus geschlossen wird, wird der Schalter $S_8$ nur in jedem zweiten Zyklus geschlossen. Dies bedeutet, daß jeweils die im Verlauf von zwei aufeinanderfolgenden Zyklen in der Korrekturschaltung 73 erzeugten Ladungspakete auf dem Speicherkondensator 84 gesammelt und dann in der Phase 7 des zweiten Zyklus als Korrekturladungspaket oder als kombiniertes Kompensations- und Korrekturladungspaket auf den Integrationskondensator 72 übertragen werden. Zur besseren Unterscheidung sind in Fig. 12 die beiden aufeinanderfolgenden Zyklen, in deren Verlauf ein Korrekturladungspaket gebildet wird, als Meßzyklen $M_1$ und $M_2$ bezeichnet, und die beiden aufeinanderfolgenden Zyklen, in deren Verlauf ein Kompensations- und Korrekturladungspaket gebildet wird, sind mit $K_1$ und $K_2$ bezeichnet.

Betrachtet man beispielsweise die identischen Steuersignale $S_{11+}$ und $S_{15+}$ von Fig. 12, so erfolgt eine Konditionierung in der Phase 7 jedes Meßzyklus $M_1$ und die anschließende Umladung in der Phase 2 des folgenden Meßzyklus $M_2$. In entsprechender Weise erfolgt durch die Steuersignale $S_{12+}$ und $S_{16+}$ eine Konditionierung in

der Phase 7 jedes Kompensationszyklus $K_1$ und eine Umladung in der Phase 2 des folgenden Kompensationszyklus $K_2$.

Die Steuersignale $S_{11-}$ und $S_{12-}$ bewirken die Konditionierung in der Phase 5 jedes Meßzyklus $M_1$ und die Umladung in der Phase 8 des gleichen Meßzyklus $M_1$. In entsprechender Weise bewirken die Steuersignale $S_{12-}$ und $S_{16-}$ die Konditionierung in der Phase 5 und die Umladung in der Phase 8 jedes Kompensationszyklus $K_1$.

Durch die Steuersignale $S_{13+}$ und $S_{17+}$ erfolgt eine erste Konditionierung in der Phase 1 und die darauffolgende erste Umladung in der Phase 4 jedes Meßzyklus $M_1$. Dann erfolgt eine zweite Konditionierung in der Phase 7 jedes Meßzyklus $M_1$ und die darauffolgende zweite Umladung in der Phase 4 des folgenden Meßzyklus $M_2$. Es werden also in jedem Meßzykluspaar $M_1$, $M_2$ nacheinander zwei Ladungspakete erzeugt, die zur Bildung des gleichen Korrekturladungspakets beitragen, das in der Phase 7 des Meßzyklus $M_2$ auf den Integrationskondensator 72 übertragen wird.

In entsprechender Weise werden durch die Steuersignale $S_{14+}$ und $S_{18+}$ in den gleichen Phasen der Kompensationszyklen $K_1$ und $K_2$ zwei Ladungspakete erzeugt, die zur Bildung des glei- chen Kompensations- und Korrekturladungspakets beitragen, das in der Phase 7 des Kompensationszyklus $K_2$ auf den Integrationskondensator 72 übertragen wird.

Schließlich bewirken die Steuersignale $S_{13-}$ und $S_{17-}$ eine erste Konditionierung in der Phase 3 und eine erste Umladung in der Phase 8 jedes Meßzyklus $M_1$ sowie eine zweite Konditionierung in der Phase 3 und eine zweite Umladung in der Phase 6 jedes Meßzyklus $M_2$, wodurch zwei Ladungspakete erzeugt werden, die zu der Bildung des Korrekturladungspakets beitragen, das in der Phase 7 des Meßzyklus $M_2$ auf den Integrationskondensator 72 übertragen wird. In den gleichen Phasen der Kompensationszyklen $K_1$ und $K_2$ werden durch die Steuersignale $S_{14-}$ und $S_{18-}$ zwei Ladungspakete erzeugt, die zur Bildung des Kompensations- und Korrekturladungspakets beitragen, das in der Phase 7 des Kompensationszyklus $K_2$ auf den Integrationskondensator 72 übertragen wird.

Auf diese Weise können mit Hilfe der acht Schalter-Kondensator-Kombinationen durch geeignete Wahl der Schaltphasen der Steuersignale $S_{11}$ bis $S_{18}$ Ladungspakete mit acht verschiedenen Beträgen, die jeweils durch die Kapazitätswerte $C_{91}$ bis $C_{98}$ der betreffenden Kondensatoren gewichtet sind, und jedes dieser Ladungspakete wahlweise mit positivem oder negativem Vorzeichen erzeugt und im Speicherkondensator 84 zwischengespeichert werden.

In der am Schluß der Beschreibung angefügten Tabelle III sind alle Ladungspakete zusammengestellt, die mit der Anordnung von Fig. 11 realisiert werden können. In jedem Ladungspaket stellt der Term $\pm C_i/C$ (mit i = 91 ... 98) einen Korrekturfaktor $B_{11}$ bis $C_{22}$ dar, wie in der Tabelle III gleichfalls angegeben ist.

### 3. Übertragungsfunktion:

Die Übertragungsfunktion der Schaltung berechnet sich aus der Gleichung für die Ladungsbalance: Die Summe aller im Integrationskondensator 72 integrierten Ladungspakete ist in einem bestimmten Zeitintervall gleich Null. Betrachtet man ein Zeitintervall von 2n Zyklen, in dem k Kompensationszyklen und somit (n-k) Korrekturzyklen enthalten sind, so werden in diesem Zeitintervall die in der Tabelle IV zusammengefaßten Ladungspakete auf den Integrationskondensator 72 übertragen. Dabei werden die Vorzeichen der Koeffizienten durch entsprechende Wahl der Steuersignale $S_{11+}$ bis $S_{18+}$ bzw. $S_{11-}$ bis $S_{18-}$ eingestellt.

Summiert man alle Ladungspakete in der Tabelle IV und setzt sie gleich Null, so erhält man als Übertragungsfunktion

$$\frac{k}{n} = \frac{- B_{11} - B_{12} \cdot V_T + (2 - B_{21} - B_{22} \cdot V_T) \cdot dR/R}{C_{11} - B_{11} + (C_{12} - B_{12}) \cdot V_T + (C_{21} - B_{21} + (C_{22} - B_{22}) \cdot V_T) \cdot dR/R} \quad (107)$$

Durch einfache Zusammenfassung der Koeffizienten ergibt sich somit genau die gewünschte Übertragungsfunktion gemäß Gleichung (4):

$$\frac{k}{n} = \frac{b_{11} + b_{12} \cdot V_T + (b_{21} + b_{22} \cdot V_T) \cdot dR/R}{c_{11} + c_{12} \cdot V_T + (c_{21} + c_{22} \cdot V_T) \cdot dR/R} \quad (108)$$

Vergleicht man die Gleichung (108) mit der Gleichung (4), so erkennt man, daß in diesem Fall der Meßeffekt $M_1$ das kraftund temperaturabhängige Widerstandsverhältnis dR/R ist, während der Meßeffekt $M_2$ wieder das temperaturabhängige Spannungsteilerverhältnis $V_T$ ist. Mit der Übertragungsfunktion gemäß der Gleichung (108) können die wichtigsten Kenndaten des Sensors 140 mit den folgenden einstellbaren Korrekturkoeffizienten korrigiert werden:

Nullpunkt : $b_{11}$  
TK-Nullpunkt : $b_{12}$  
Empfindlichkeit : $b_{21}$, $c_{11}$

TK-Empfindlichkeit      : $b_{22}$, $c_{12}$
Nichtlinearität      : $c_{21}$
TK-Nichtlinearität      : $c_{22}$

Die Gleichung (108) zeigt, daß die Kapazität $C_m$ des Kondensators 152 sowie auch die Kapazitäten der Kondensatoren 72 und 84, die Offsetspannungen der Operationsverstärker, die Betriebsspannungen der Schaltung und die Frequenz, mit der die Steuerschaltung 67 getaktet wird, nicht in die Übertragungsfunktion eingehen. Der Wert der Spannung $U_1$ wird nur durch den Arbeitsbereich der Schaltung begrenzt.

Die Korrekturkoeffizienten können in der gleichen Weise wie bei der Schaltung von Fig. 8 eingestellt werden, also beispielsweise mit Hilfe von Teilkondensatoren, die durch digitale Programmierung parallelgeschaltet werden, oder auch durch einstellbare Widerstände, wenn anstelle der Korrekturschaltung 73 von Fig. 11 die Korrekturschaltung 110 von Fig. 10 verwendet wird. Auch sonst sind alle Abänderungen, die im Zusammenhang mit der Schaltung von Fig. 8 beschrieben worden sind, bei der Schaltung von Fig. 11 ohne Einschränkung anwendbar. Dies gilt auch für die Korrektur weiterer Störeffekte.

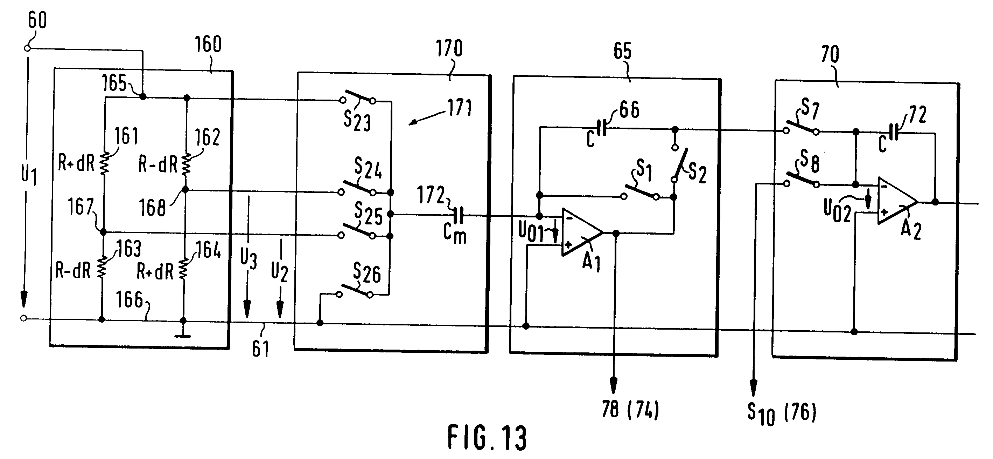

Fig. 13 zeigt die Abwandlung der Signalverarbeitungsschaltung von Fig. 11 für die Signalaufbereitung und Fehlerkorrektur des von einer Widerstands-Vollbrücke gelieferten Sensorsignals. Die Widerstands-Vollbrücke 160 besteht aus zwei Widerstands-Halbbrücken der in Verbindung mit Fig. 11 erläuterten Art. Sie enthält vier Widerstände 161, 162, 163, 164, die in den vier Brückenzweigen angeordnet sind und deren Widerstandswerte sich um gleiche Beträge dR, aber mit unterschiedlichen Vorzeichen, von dem gleichen Grundwiderstand R unterscheiden. Dabei haben jeweils die Widerstände, die in diametral entgegengesetzten Brückenzweigen liegen, gleiche Widerstandswerte. In Fig. 13 ist angenommen, daß die Widerstande 161 und 164 den Widerstandswert R + dR und die Widerstande 162 und 163 den Widerstandswert R - dR haben.

Der Brückeneckpunkt 165 zwischen den Widerständen 161 und 162 ist mit der Eingangsklemme 60 verbunden, und der Brückeneckpunkt 166 zwischen den Widerständen 163 und 164 ist mit dem Bezugsleiter 61 verbunden, der in diesem Fall an Masse liegt. Somit ist die Versorgungsspannung $U_1$ an die Brückendiagonale zwischen den Brückeneckpunkten 165 und 166 angelegt. An dem Brückeneckpunkt 167 zwischen den Widerständen 161 und 163 besteht gegenüber dem Bezugspotential die Spannung $U_2$, und an dem Brückeneckpunkt 168 zwischen den Widerständen 162 und 164 besteht gegenüber dem Bezugspotential die Spannung $U_3$.

Die zugehörige Signalverarbeitungsschaltung unterscheidet sich von derjenigen von Fig. 11 nur durch eine etwas andere Ausbildung des Funktionsblocks 170. Von den übrigen Bestandteilen der Signalverarbeitungsschaltung sind zur Vereinfachung in Fig. 13 nur der Zwischenspeicher 65 und der Integrator 70 dargestellt, wobei gleiche Teile wieder mit den gleichen Bezugszeichen wie in Fig. 11 bezeichnet sind. Der nichtinvertierende Eingang des Operationsverstärkers $A_1$ ist in diesem Fall mit dem an Masse liegenden Bezugsleiter 61 verbunden.

Der Funktionsblock 170 enthält eine Schaltergruppe 171 mit vier Schaltern $S_{23}$, $S_{24}$, $S_{25}$, $S_{26}$ und einen Kondensator 172 der Kapazität $C_m$, dessen eine Elektrode mit dem invertierenden Eingang des Operationsverstärkers $A_1$ verbunden ist. Die andere Elektrode des Kondensators 172 wird durch den Schalter $S_{23}$ mit dem Brückeneckpunkt 165, durch den Schalter $S_{24}$ mit dem Brückeneckpunkt 168, durch den Schalter $S_{25}$ mit dem Brückeneckpunkt 167 und durch den Schalter $S_{26}$ mit dem Brückeneckpunkt 166 verbunden. Somit wird durch den Schalter $S_{23}$ die Spannung $U_1$, durch den Schalter $S_{24}$ die Spannung $U_3$, durch den Schalter $S_{25}$ die Spannung $U_2$, und durch den Schalter $S_{26}$ das Bezugspotential an den Kondensator 172 angelegt.

Für die Spannungen $U_2$ und $U_3$ gilt:

$$U_2 = U_1 \cdot (R - dR)/R \quad (109)$$
$$U_3 = U_1 \cdot (R + dR)/R \quad (110)$$

Dies sind die gleichen Werte wie bei der Widerstands-Halbbrücke von Fig. 11 gemäß den Gleichungen (99) und (100).

Ein Unterschied der Signalverarbeitungsschaltung von Fig. 13 gegenüber denjenigen von Fig. 8 und 11 besteht darin, daß der Funktionsblock 170 in Verbindung mit dem Zwischenspeicher 65 nicht nur die Meßladungspakete $dQ_M$, sondern auch die Kompensationsladungspakete $dQ_K$ erzeugt, die beide über den Schalter $S_7$ zum Integrator 70 übertragen werden, so daß die (in Fig. 13 nicht dargestellte) Korrekturschaltung 73 (Fig. 11) nur noch die Korrekturladungspakete erzeugt, die über den Schalter $S_8$ zum Tntegrator 70 übertragen werden. Die Schalter der Schaltergruppe 171 werden also von der Steuerschaltung 67 (Fig. 11) in aufeinanderfolgenden Meßzyklen M so gesteuert, daß jeweils ein Meßladungspaket $dQ_M$ erzeugt wird, und wenn die Steuerschaltung 67 durch das Ausgangssignal des Komparators 71 zur Durchführung eines Kompensationszyklus K ausgelöst wird, steuert sie die Schalter der Schaltergruppe 171 so, daß ein Kompensationsladungspaket $dQ_K$ erzeugt wird.

Es soll nun beschrieben werden, wie mit der Schaltung von Fig. 13 ein Meßladungspakte $dQ_M$ in einem Meßzyklus M und ein Kompensationsladungspaket $dQ_K$ in einem Kompensationszyklus K gewonnen wird.

EP 0 445 267 B1

Gewinnung eines Meßladungspakets:

Vor Beginn eines Meßzyklus M befindet sich die Schaltung im Ausgangszustand, in welchem der Speicherkondensator 66 noch die im vorhergehenden Zyklus aufgebrachte Ladung trägt. In einer ersten Phase des Meßzyklus werden die Schalter $S_1$ und $S_7$ geschlossen, wodurch der Speicherkondensator 66 auf die Restladung

$$Q_{66R} = (U_{02} - U_{01}) \cdot C \quad (111)$$

entladen wird. Zugleich wird der Schalter $S_{24}$ geschlossen, wodurch der Kondensator 172 in der Konditionierphase auf die Ladung

$$Q_{Cm(1)} = (U_{01} - U_3) \cdot C_m \quad (112)$$

aufgeladen wird.

In einer weiteren Phase des Meßzyklus M wird der Schalter $S_1$ geöffnet und der Schalter $S_2$ geschlossen, sodaß der Zwischenspeicher 65 zur Übernahme von Ladung auf den Speicherkondensator 66 bereit ist. Zugleich wird der Schalter $S_{25}$ geschlossen, sodaß der Kondensator 172 an die Spannung $U_2$ gelegt und dadurch auf die Ladung

$$Q_{Cm(2)} = (U_{01} - U_2) \cdot C_m \quad (113)$$

umgeladen wird. Die Umlademenge

$$dQ_{Cm} = Q_{Cm(2)} - Q_{Cm(1)} = (U_3 - U_2) \cdot C_m \quad (114)$$

wird auf den Speicherkondensator 66 übertragen. Die Gesamtladung des Speicherkondensators 66 beträgt nun

$$Q_{66(2)} = Q_{66R} + dQ_{Cm} = Q_{66R} + (U_3 - U_2) \cdot C_m \quad (115)$$

Wenn nun der Speicherkondensator 66 in der ersten Phase des folgenden Meßzyklus durch Öffnen des Schalters $S_2$ und Schließen des Schalters $S_7$ wieder auf die Restladung $Q_{66R}$ entladen wird, wird bei der Umladung das Meßladungspaket

$$dQ_M = Q_{66R} - Q_{66(2)} = - (U_3 - U_2) \cdot C_m \quad (116)$$

auf den Integrationskondensator 72 übertragen. Dies entspricht genau dem Meßladungspaket $dQ_M$ bei der Widerstands-Halbbrücke von Fig. 11 gemäß Gleichung (98).

Gewinnung des Kompensationsladungspakets:

Am Beginn eines Kompensationszyklus K befindet sich die Schaltung im Ausgangszustand. In einer ersten Phase des Kompensationszyklus werden die Schalter $S_1$ und $S_7$ geschlossen, wodurch der Speicherkondensator 66 auf die Restladung

$$Q_{66R} = (U_{02} - U_{01}) \cdot C \quad (117)$$

entladen wird. Zugleich wird der Schalter $S_{26}$ geschlossen, wodurch der Kondensator 172 auf die Ladung

$$Q_{Cm(1)} = U_{01} \cdot C_m \quad (118)$$

aufgeladen wird.

In einer weiteren Phase des Kompensationszyklus K wird der Schalter $S_1$ geöffnet und der Schalter $S_2$ geschlossen, so daß der Zwischenspeicher 65 zur Übernahme von Ladung auf den Speicherkondensator 66 bereit ist. Zugleich wird der Schalter $S_{23}$ geschlossen, so daß der Kondensator 172 an die Spannung $U_1$ gelegt und dadurch auf die Ladung

$$Q_{Cm(2)} = (U_{01} - U_1) \cdot C_m \quad (119)$$

umgeladen wird. Die Umlademenge

$$dQ_{Cm} = Q_{Cm(2)} - Q_{Cm(1)} = - U_1 \cdot C_m \quad (120)$$

wird auf den Speicherkondensator 66 übertragen. Die Gesamtladung des Speicherkondensators 66 beträgt nun

$$Q_{66(2)} = Q_{66R} + dQ_{Cm} = Q_{66R} - U_1 \cdot C_m \quad (121)$$

Wenn nun der Speicherkondensator 66 in der ersten Phase des folgenden Zyklus durch Öffnen des Schalters $S_2$ und Schließen des Schalters $S_7$ auf die Restladung $Q_{66R}$ entladen wird, wird bei der Umladung das Kompensationsladungspaket

$$dQ_K = Q_{66R} - Q_{66(2)} = U_1 \cdot C_m \quad (122)$$

auf den Integrationskondensator 72 übertragen. Dies entspricht genau dem Kompensationsladungspaket $dQ_K$ bei der Widerstands-Halbbrücke von Fig. 11 gemäß Gleichung (102).

Somit stehen bei der Widerstands-Vollbrücke die gleichen Meß- und Kompensationsladungspakete $dQ_M$ und $dQ_K$ wie bei der Widerstands-Halbbrücke zur Verfügung. Das im Zusammenhang mit Fig. 11 und 12 erläuterte Korrekturverfahren ist somit auch bei der Widerstands-Vollbrücke anwendbar. Die Korrekturladungspakete werden durch die Korrekturschaltung, die den gleichen Aufbau wie die Korrekturschaltung 73 von Fig. 11 oder die Korrekturschaltung 110 von Fig. 13 haben kann, in der zuvor erläuterten Weise durch geeignete

25

Wahl der Schaltphasen der Schalter-Steuersignale erzeugt und über den Schalter $S_8$ auf den Integrationskondensator 72 des Integrators 70 übertragen.

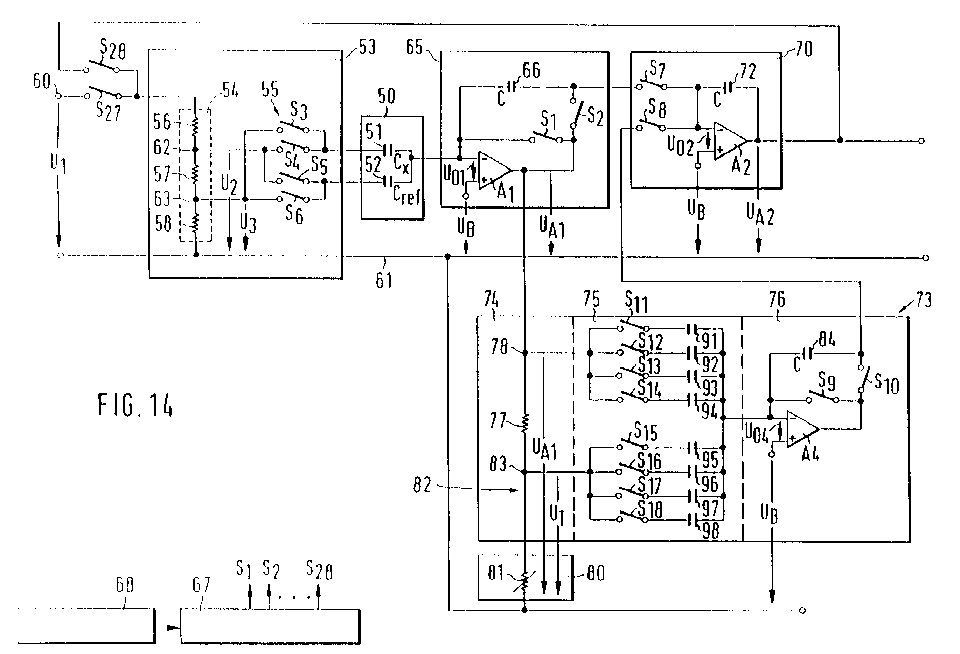

Während in den bisher erläuterten Ausführungsbeispielen die Signalverarbeitungsschaltung ein digitales Ausgangssignal liefert und dem Meßsensor ein von diesem Ausgangssignal unabhängiges Versorgungssignal V zugeführt ist, soll nun anhand der in den Figuren 14 bis 21 erläuterten weiteren Ausführungsbeispiele gezeigt werden, daß die Anordnung der Erfindung und deren Störgrößenkorrektur auch anwendbar ist, wenn die Signalverarbeitungsschaltung ein analoges Ausgangssignal erzeugt und dieses auf den Meßsensor zurückgekoppelt ist.

So ist in Fig. 14 ein Ausführungsbeispiel gezeigt, das bis auf diesen Unterschied und die dadurch bedingten Modifizierungen dem von Fig. 8 entspricht. In Fig. 14 fehlen somit der Komparator 71 und die beiden Zähler 100, 101. Zwischen die Eingangsklemme 60 und das Ende des Spannungsteilers 54 ist ein Schalter $S_{27}$ gelegt. Der Ausgang des Integrators 70, also auch dessen Ausgangsspannung $U_{A2}$, ist über einen Schalter $S_{28}$ an dasselbe Ende des Spannungsteilers 54 gelegt.

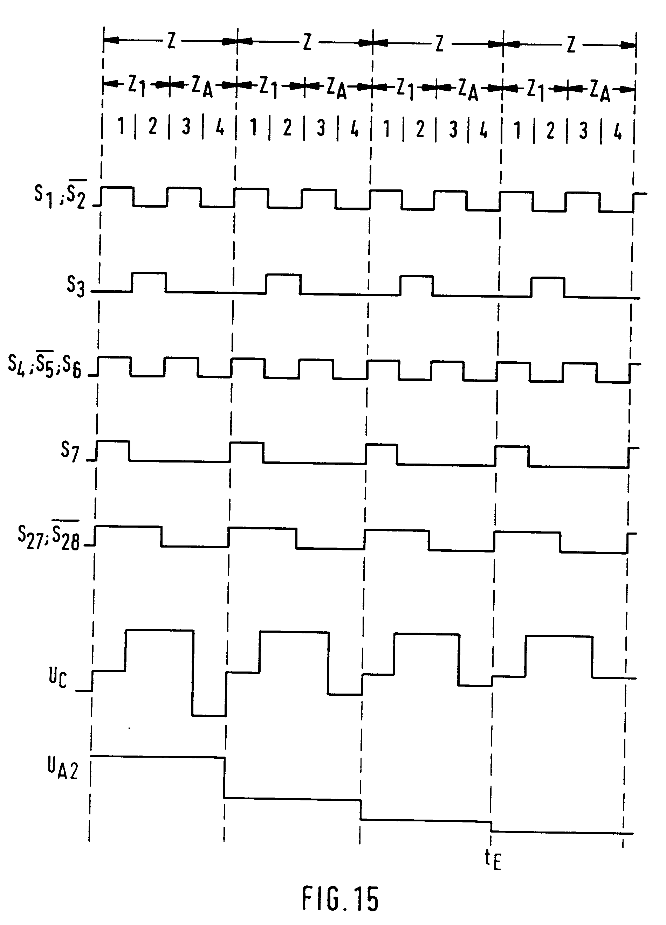

Anhand der Fig. 15 bis 18 wird nun zunächst die Funktionsweise der Fig. 14 ohne die der Korrekturschaltung 73 erläutert. Die Fig. 15 zeigt dabei Zeitdiagramme für den Fall, daß der Meßeffekt $(C_x - C_{ref})/C_{ref}$ entspricht und $C_x > C_{ref}$ ist.

Die Schalter S... werden durch Steuersignale betätigt, die von einer Steuerschaltung 67 geliefert werden, die durch ein von einem Taktgeber 68 erzeugtes Taktsignal synchronisiert wird. Die Steuerungssignale sind wieder mit denselben Bezugszeichen S... wie die von ihnen gesteuerten Schalter bezeichnet. Jeder Schalter ist offen, wenn das ihn steuernde Signal den niedrigen Signalwert hat, und geschlossen, wenn das ihn steuernde Signal den hohen Signalwert hat.

Die Schalter sind auch hier wieder symbolisch als mechanische Schalterkontakte dargestellt, doch sind sie in Wirklichkeit natürlich durch schnelle elektronische Schalter, beispielsweise Feldeffekttransistoren, gebildet.

Die Diagramme der Fig. 15 bis 18 zeigen außer dem zeitlichen Verlauf der Steuersignale S... auch den zeitlichen Verlauf der Spannung $U_C$ am Speicherkondensator 66 und der Ausgangsspannung $U_{A2}$ im Verlauf von mehreren aufeinanderfolgenden Zyklen Z, deren jeder in vier Phasen unterteilt ist, die mit 1 bis 4 beziffert sind.

Die Schalter $S_1$, $S_2$ werden durch ein periodisches Rechtecksignal im Gegentakt gesteuert, so daß der Schalter $S_1$ offen ist, wenn der Schalter $S_2$ geschlossen ist, und umgekehrt. Die Schalter $S_1$, $S_2$ nehmen ihre abwechselnden Zustände jeweils für die Dauer der Phasen 1 bis 4 ein. Wenn der Schalter $S_1$ geschlossen und der Schalter $S_2$ offen ist, was jeweils in den Phasen 1 und 3 jedes Zyklus Z der Fall ist, können die im Eingangskreis des Operationsverstärkers $A_1$ liegenden Kondensatoren 51, 52 durch die Schalter $S_3$ bis $S_6$ an die Spannungen $U_2$ oder $U_3$ gelegt und entsprechend aufgeladen werden, ohne daß dadurch die Ladung im Speicherkondensator 66 beeinflußt wird. Dieser Zustand wird als "Konditionierphase" für die Konditionierung der Kondensatoren bezeichnet.

In gleicher Weise werden die Schalter $S_{27}$, $S_{28}$ durch ein periodisches Rechtecksignal im Gegentakt gesteuert, so daß der Schalter $S_{27}$ offen ist, wenn der Schalter $S_{28}$ geschlossen ist, und umgekehrt. Die Schalter $S_{27}$, $S_{28}$ nehmen ihre abwechselnden Zustände jeweils für die Dauer von zwei Phasen ein. Während der Phasen 1 und 2 jedes Zyklus Z ist der Schalter $S_{27}$ geschlossen und der Schalter $S_{28}$ offen Die Phasen 1 und 2 bilden somit einen Teilzyklus $Z_1$, in welchem die Spannung $U_1$ am Spannungsteiler 54 liegt. Dagegen ist in den Phasen 3 und 4 der Schalter $S_{28}$ geschlossen und der Schalter $S_{27}$ offen. Die Phasen 3 und 4 bilden somit einen Teilzyklus $Z_A$, in welchem die Spannung $U_{A2}$ am Spannungsteiler 54 liegt.

In jedem Teilzyklus $Z_1$ bzw. $Z_A$ sind die am Spannungsteiler 54 verfügbaren Spannungen $U_2$, $U_3$ einerseits durch die an der Klemme 60 liegende Spannung und andererseits durch die Spannungsteilerverhältnisse bestimmt. Für diese gilt:

$$V_2 = (R_{57} + R_{58})/(R_{56} + R_{57} + R_{58}) \quad (123)$$
$$V_3 = R_{58}/(R_{56} + R_{57} + R_{58}) \quad (124)$$

Somit steht in jedem Teilzyklus $Z_1$, also während der Phasen 1 und 2, die folgenden Spannungen zur Verfügung:

$$U_{2(1,2)} = V_2 \cdot U_1 \quad (125)$$
$$U_{3(1,2)} = V_3 \cdot U_1 \quad (126)$$

und in jedem Zeitzyklus $Z_A$, also während der Phasen 3 und 4, stehen die folgenden Spannungen zur Verfügung:

$$U_{2(3,4)} = V_2 \cdot U_{A2} \quad (127)$$
$$U_{3(3,4)} = V_3 \cdot U_{A2} \quad (128)$$

In Fig. 15 werden die Schalter $S_4$ und $S_6$ im Gegentakt zum Schalter $S_5$ durch das gleiche Rechtecksignal wie die Schalter $S_1$, $S_2$ gesteuert, so daß die Schalter $S_4$, $S_6$ synchron mit dem Schalter $S_2$ geöffnet und ge-

EP 0 445 267 B1

schlossen werden. Der Schalter $S_3$ ist nur während der Phase 2 jedes Zyklus Z geschlossen, und der Schalter $S_7$ ist nur während der Phase 1 jedes Zyklus Z geschlossen. Somit ergibt sich folgender Ablauf des Betriebs der Signalverarbeitungsschaltung von Fig. 14:

Phase 1:

Am Beginn der Phase 1 jedes Zyklus Z befindet sich auf dem Speicherkondensator 66 noch die im vorhergehenden Zyklus aufgebrachte Ladung. Für die Dauer der Phase 1 ist der Schalter $S_1$ geschlossen und der Schalter $S_2$ offen, so daß der Speicherkondensator 66 vom Ausgang des Operationsverstärkers $A_1$ abgetrennt ist. Der Schalter $S_7$ ist für die Dauer der Phase 1 geschlossen, so daß eine Ladungsübertragung vom Speicherkondensator 66 auf den Integrationskondensator 72 stattfindet. Dadurch wird der Speicherkondensator 66 auf die Restladung

$$Q_{C(R)} = (U_{02} - U_{01}) \cdot c \quad (129)$$

entladen, wobei die Umlademenge auf den Integrationskondensator 72 fließt.

Ferner befindet sich die Schaltung für die Dauer der Phase 1 in der Konditionierphase für die Kondensatoren 51, 52, da der Schalter $S_1$ geschlossen und der Schalter $S_2$ offen ist. Da der Schalter $S_3$ offen und der Schalter $S_4$ geschlossen ist, ist der Meßkondensator 51 mit dem Abgriff 62 des Spannungsteilers verbunden, so daß er die Ladung

$$Q_{Cx(1)} = (U_{01} + U_B - U_2) \cdot C_x = (U_{01} + U_B - V_2 \cdot U_1) \cdot c \quad (130)$$

aufgeladen wird, ohne daß die Ladung des Speicherkondensators 66 von diesem Aufladevorgang beeinflußt wird.

Dagegen ist der Referenzkondensator 52 mit dem Abgriff 63 des Spannungsteilers 54 verbunden, da der Schalter $S_5$ offen und der Schalter $S_6$ geschlossen ist. Daher wird der Referenzkondensator 52 auf die Ladung

$$Q_{Cref(1)} = (U_{01} + U_B - U_3) \cdot C_{ref} = (U_{01} + U_B - V_3 \cdot U_1) \cdot C_{ref} \quad (131)$$

aufgeladen, ohne daß die Ladung des Speicherkondensators 66 von dieser Aufladung beeinflußt wird.

Phase 2:

In Phase 2 jedes Zyklus Z ist der Schalter $S_1$ offen und der Schalter $S_2$ geschlossen, so daß der Zwischenspeicher 65 bereit ist, Ladung auf den Speicherkondensator 66 zu übernehmen. Zugleich sind die Schalter $S_4$, $S_6$ offen und die Schalter $S_3$, $S_5$ geschlossen, so daß nunmehr der Meßkondensator 51 mit dem Abgriff 63 und der Referenzkondensator 52 mit dem Abgriff 62 verbunden ist. Demzufolge werden die Kondensatoren 51, 52 auf die folgenden Ladungen umgeladen:

$$Q_{Cx(2)} = (U_{01} + U_B - U_3) \cdot C_x = (U_{01} + U_B - V_3 \cdot U_1) \cdot c_x \quad (132)$$
$$Q_{Cref(2)} = (U_{01} + U_B - U_2) \cdot C_{ref} = (U_{01} + U_B - V_2 \cdot U_1) \cdot C_{ref} \quad (133)$$

Die Umlademenge beträgt

$$dQ_{Cx} = Q_{Cx(2)} - Q_{Cx(1)} = (U_2 - U_3) \cdot C_x = (V_2 - V_3) \cdot U_1 \cdot C_x \quad (134)$$

$$dQ_{Cref} = Q_{Cref(2)} - Q_{Cref(1)} =$$
$$-(U_2 - U_3) \cdot C_{ref} = -(V_2 - V_3) \cdot U_1 \cdot C_{ref} \quad (135)$$

Die Gesamtumlademenge ist die Summe der Gleichungen (134),(135)

$$dQ_M = (C_x - C_{ref}) \cdot (U_2 - U_3) = (C_x - C_{ref}) \cdot (V_2 - V_3) \cdot U_1 \quad (136):$$

und fließt auf den Speicherkondensator 66. Die Umlademenge $dQ_M$ wird als "Meßladungspaket" bezeichnet. Mit $C_x > C_{ref}$; $U_2 > U_3$ ruft es eine positive Änderung der Spannung $U_C$ hervor, wie aus dem zugehörigen Diagramm von Fig. 15 zu ersehen ist. Zusammen mit der Anfangsladung enthält der Speicherkondensator 66 nun die resultierende Ladung

$$Q_C = Q_{C(R)} + dQ_M = Q_{C(R)} + (C_x - C_{ref}) \cdot (V_2 - V_3) \cdot U_1 \quad (137)$$

Damit ist der Teilzyklus $Z_1$ beendet.

Phase 3:

In Phase 3 befinden sich die Schalter $S_1$ bis $S_6$ wieder in der gleichen Stellung wie in Phase 1, jedoch bleibt der Schalter $S_7$ offen, so daß keine Umladung vom Speicherkondensator 66 auf den Integrationskondensator 72 stattfindet und somit der Speicherkondensator 66 seine Ladung beibehält. Ferner ist nunmehr der Schalter $S_{27}$ offen und der Schalter $S_{28}$ geschlossen, so daß am Spannungsteiler 54 die Spannung $U_{A2}$ anliegt.

27

Demzufolge werden die Kondensatoren 51 und 52 auf die folgenden Ladungen aufgeladen:

$$Q_{Cx(3)} = (U_{01} + U_B - U_2)\cdot C_x = (U_{01} + U_B - V_2\cdot U_{A2})\cdot C_x \quad (138)$$

$$Q_{Cref(3)} = (U_{01} + U_B - U_3)\cdot C_{ref} = (U_{01} + U_B - V_3\cdot U_{A2})\cdot C_{ref} \quad (139)$$

Phase 4:

Die Phase 4 unterscheidet sich von der Phase 2 dadurch, daß der Schalter $S_3$ offen bleibt, so daß der Meßkondensator 51 weder mit dem Abgriff 62 noch mit dem Abgriff 63 verbunden ist. Demzufolge wird nur der Referenzkondensator 52 auf die Ladung

$$Q_{Cref(4)} = (U_{01} + U_B - U_2)\cdot C_{ref} = (U_{01} + U_B - V_2\cdot U_{A2})\cdot C_{ref} \quad (140)$$

umgeladen. Die Umlademenge

$$dQ_K = Q_{Cref(4)} - Q_{Cref(3)} =$$
$$-(U_2 - U_3)\cdot C_x = -(V_2 - V_3)\cdot U_{A2}\cdot C_{ref} \quad (141)$$

bildet zugleich die gesamte Ladungsmenge, die im Teilzyklus $Z_A$ auf den Speicherkondensator 66 fließt. Sie wird als Kompensationsladungspaket $dQ_K$ bezeichnet und verursacht eine negative Änderung der Spannung $U_C$, wie aus dem zugehörigen Diagramm von Fig 15 zu erkennen ist. Damit ist der Teilzyklus ZA beendet.

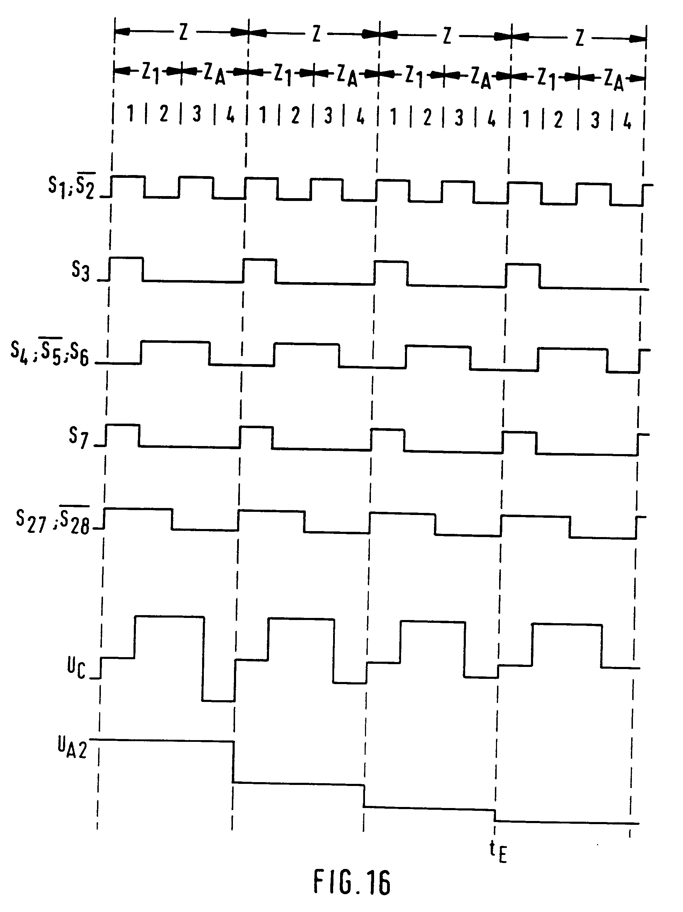

Die Fig. 16 zeigt Diagramme, die gegenüber denen von Fig. 15 für den Fall abgewandelt sind, daß der gleiche Meßeffekt, jedoch mit entgegengesetztem Vorzeichen, nämlich $-(C_x - C_{ref})/C_{ref}$, gemessen werden soll, da nun $C_x < C_{ref}$ ist. Die Erläuterung von Fig. 15 gilt daher nur mit folgenden Änderungen:

Der Schalter $S_3$ ist während Phase 1 geschlossen. Er wird also zeitgleich und gleichsinnig wie der Schalter $S_7$ betätigt. Die Schalter $S_4$, $S_6$ sind während den Phasen 2 und 3 geschlossen, während - invers dazu - der Schalter $S_5$ geöffnet ist. Es ergeben sich somit die folgenden Abläufe:

Phase 1:

Am Beginn der Phase 1 jedes Zyklus Z befindet sich auf dem Speicherkondensator 66 noch die im vorhergehenden Zyklus aufgebrachte Ladung. Für die Dauer der Phase 1 ist der Schalter $S_1$ geschlossen und der Schalter $S_2$ offen, so daß der Speicherkondensator 66 vom Ausgang des Operationsverstärkers $A_1$ abgetrennt ist. Der Schalter $S_7$ ist für die Dauer der Phase 1 geschlossen, so daß eine Ladungsübertragung vom Speicherkondensator 66 auf den Integrationskondensator 72 stattfindet. Dadurch wird der Speicherkondensator 66 auf die Restladung

$$Q_{C(R)} = (U_{02} - U_{01})\cdot C \quad (142)$$

entladen, wobei die Umlademenge auf den Integrationskondensator 72 fließt. Die Gleichungen (142) und (129) sind somit identisch.

Ferner befindet sich die Schaltung für die Dauer der Phase 1 in der Konditionierphase für die Kondensatoren 51, 52, da der Schalter $S_1$ geschlossen und der Schalter $S_2$ offen ist. Da der Schalter $S_4$ offen und der Schalter $S_3$ geschlossen ist, ist der Meßkondensator 51 mit dem Abgriff 63 des Spannungsteilers 54 verbunden, so daß er auf die Ladung

$$Q_{Cx(1)} = (U_{01} + U_B - U_3)\cdot C_x = (U_{01} + U_B - V_3\cdot U_1)\cdot C_x \quad (143)$$

aufgeladen wird, ohne die Ladung des Speicherkondensators 66 zu beeinflussen.

Dagegen ist der Referenzkondensator 52 mit dem Abgriff 62 des Spannungsteilers 54 verbunden, da der Schalter $S_6$ offen und der Schalter $S_5$ geschlossen ist. Daher wird der Referenzkondensator 52 auf die Ladung

$$Q_{Cref(1)} = (U_{01} + U_B - U_2)\cdot C_{ref} = (U_{01} + U_B - V_2\cdot U_1)\cdot C_{ref} \quad (144)$$

aufgeladen, ohne daß die Ladung des Speicherkondensators 66 von dieser Aufladung beeinflußt wird.

Phase 2:

In Phase 2 jedes Zyklus Z ist der Schalter $S_1$ offen und der Schalter $S_2$ geschlossen, so daß der Zwischenspeicher 65 bereit ist, Ladung auf den Speicherkondensator 66 zu übernehmen.

Zugleich sind die Schalter $S_3$, $S_5$ offen und die Schalter $S_4$, $S_6$ geschlossen, so daß nunmehr der Meßkondensator 51 mit dem Abgriff 62 und der Referenzkondensator 52 mit dem Abgriff 63 verbunden ist. Demzufolge werden die Kondensatoren 51, 52 auf die folgenden Ladungen umgeladen:

$$Q_{Cx(2)} = (U_{01} + U_B - U_2)\cdot C_x = (U_{01} + U_B - V_2\cdot U_1)\cdot C_x \quad (145)$$

$$Q_{Cref(2)} = (U_{01} + U_B - U_3)\cdot C_{ref} = (U_{01} + U_B - V_3\cdot U_1)\cdot C_{ref} \quad (146)$$

28

Die Umlademengen betragen:
$$dQ_{Cx} = Q_{Cx(2)} - Q_{Cx(1)} = (U_3 - U_2){\cdot}C_x = (V_3 - U_2){\cdot}U_1{\cdot}C_x \quad (147)$$

$$dQ_{Cref} = Q_{Cref(2)} - Q_{Cref(1)} =$$
$$-(U_3 - U_2){\cdot}C_{ref} = -(V_3 - V_2){\cdot}U_1{\cdot}C_{ref} \qquad (148)$$

Die gesamte Umlademenge ist die Summe der Gleichungen (147), (148):
$$dQ_M = (C_x - C_{ref}){\cdot}(U_2 - U_3) = -(C_x - C_{ref}){\cdot}(V_2 - V_3){\cdot}U_1 \quad (149)$$
fließt auf den Speicherkondensator 66. Diese Umlademenge $dQ_M$ ist wieder das "Meßladungspaket" . Mit $C_x < C_{ref}$; $U_2 > U_3$ ruft es eine positive Änderung der Spannung $U_C$ hervor, siehe Fig. 16 . Zusammen mit der Anfangsladung enthält der Speicherkondensator 66 nun die resultierende Ladung
$$Q_C = Q_{C(R)} + dQ_M = Q_{C(R)} - (C_x - C_{ref}){\cdot}(V_2 - V_3){\cdot}U_1 \quad (150)$$
Damit ist der Teilzyklus $Z_1$ beendet.

Phase 3:

In Phase 3 befinden sich die Schalter $S_1$, $S_2$ wieder in der gleichen Stellung wie in Phase 1 und die Schalter $S_4$ bis $S_6$ wie in Phase 2, jedoch bleiben die Schalter $S_3$, $S_7$ offen, so daß keine Umladung vom Speicherkondensator 66 auf den Integrationskondensator 72 stattfindet und somit der Speicherkondensator 66 seine Ladung beibehält. Ferner ist nunmehr der Schalter $S_{27}$ offen und der Schalter $S_{28}$ geschlossen, so daß am Spannungsteiler 54 die Spannung $U_{A2}$ liegt. Demzufolge werden die Kondensatoren 51, 52 auf die folgenden Ladungen aufgeladen:
$$Q_{Cx(3)} = (U_{01} + U_B - U_2){\cdot}C_x = (U_{01} + U_B - V_2{\cdot}U_{A2}){\cdot}C_x \quad (151)$$
$$Q_{ref(3)} = (U_{01} + U_B - U_3){\cdot}C_{ref} = (U_{01} + U_B - V_3{\cdot}U_{A2}){\cdot}C_{ref} \quad (152)$$

Phase 4:

Die Phase 4 unterscheidet sich von der Phase 2 dadurch, daß die Schalter $S_4$, $S_6$ offen und der Schalter $S_5$ geschlossen sind, so daß der Meßkondensator 51 weder mit dem Abgriff 62 noch mit dem Abgriff 63 verbunden ist. Demzufolge wird der Referenzkondensator 52 auf die Ladung
$$Q_{Cref(4)} = (U_{01} + U_B - U_2){\cdot}C_{ref} = (U_{01} + U_B - V_2{\cdot}U_{A2}){\cdot}C_{ref} \quad (153)$$
umgeladen. Die Umlademenge

$$dQ_K = Q_{Cref(4)} - Q_{Cref(3)} =$$
$$-(U_2 - U_3){\cdot}C_x = -(V_2 - V_3){\cdot}U_{A2}{\cdot}C_{ref} \qquad (154)$$

bildet zugleich die gesamte Ladungsmenge, die im Teilzyklus $Z_A$ auf den Speicherkondensator 66 fließt. Sie ist wieder das Kompensationladungspaket $dQ_K$ und verursacht eine negative Änderung der Spannung $U_C$, wie aus dem zugehörigen Diagramm von Fig 16 zu erkennen ist. Damit ist der Teilzyklus $Z_A$ beendet.

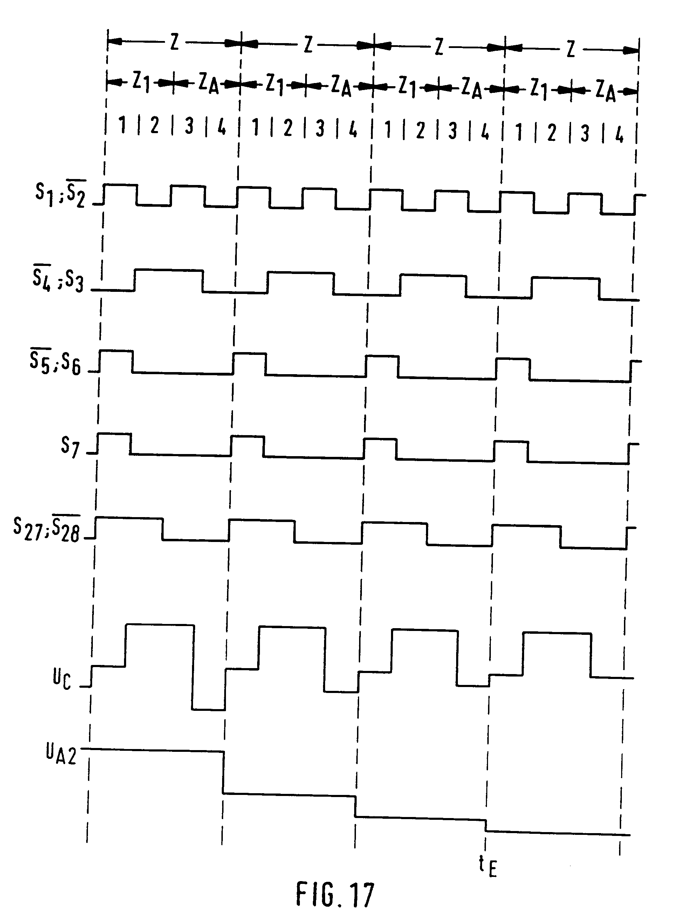

Die Fig. 17 zeigt Diagramme, die gegenüber denen von Fig. 15 für den Fall abgewandelt sind, daß ein anderer der eingangs erwähnten Meßeffekte, nämlich $(C_x - C_{ref})/C_x$, gemessen werden soll und daß $C_x > C_{ref}$ ist. Die Erläuterung der Fig. 15 gilt daher nur mit den folgenden Änderungen:

Schalter $S_4$ ist im Gegentakt zu Schalter $S_3$ betätigt. Dieser ist in den Phasen 2 und 3 geschlossen, in den Phasen 1 und 4 offen. Demzufolge ist Schalter $S_4$ in den Phasen 2 und 3 offen, dagegen in den Phasen 1 und 4 geschlossen. Die in den einzelnen Phasen auftretenden Ladungsmengen und Umladungen ergeben sich aus den bei der Erläuterung der Fig. 15 aufgestellten Gleichungen (129) bis (141) in mit der für Fig. 16 gültigen Ableitung der Gleichungen (142) bis (154) vergleichbarer und somit geläufiger Weise; auf ihre Herleitung wird daher verzichtet.

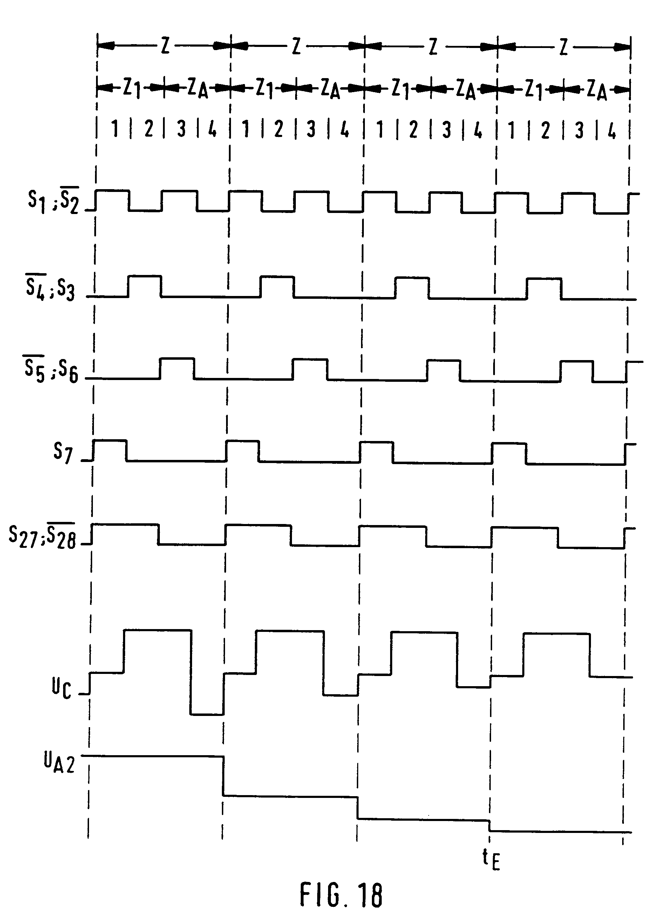

Die Fig. 18 zeigt schließlich Diagramme, die bezüglich denen von Fig. 15 für den Fall gelten, daß der Meßeffekt $C_x/C_{ref}$ entspricht, wobei Fig. 18 sowohl für $C_x > C_{ref}$ als auch für $C_x \leqq C_{ref}$ gilt. Es ändert sich sich somit nur Folgendes:

Schalter $S_4$ ist - wieder wie in Fig. 17 - im Gegentakt zu Schalter $S_3$ betätigt, der nur in Phase 2 geschlossen ist. Demzufolge ist Schalter $S_4$ nur in Phase 2 offen. Schalter $S_6$ (und im Gegentakt Schalter $S_5$) ist nur in Phase 3 geschlossen (offen). Die Ladungsmengen und Umladungen ergeben sich wieder im vergleichbarer und geläufiger Weise, so daß auf ihre Herleitung verzichtet werden kann.

Anhand der Fig. 15 bis 18 ist gezeigt worden, daß durch entsprechende Taktung der Schalter S... die zum jeweiligen Meßeffekt gehörenden Ladungspakete und die daraus resultierenden Umladungen erzeugt werden können. In der Steuerschaltung 67 sind daher, wenn dem Anwender die Auswahl aus den gezeigten Meßeffekten überlassen werden soll, die erläuterten Steuersignale bereitzuhalten und mittels entsprechender Signale oder Befehle (Optionen) abrufbar zu machen. Die Steuerschaltung 67 kann daher z.B. mittels eines entsprechend programmierten Mikroprozessors realisiert werden.

Allgemein kann in den Fig. 15 bis 18 jeder Zyklus Z aus n Teilzyklen $Z_1$ und aus k Teilzyklen $Z_A$ bestehen. In den Fig. 15 bis 18 ist die Funktion des Ablaufs für den Fall n = k = 1 dargestellt. Zusammen mit der am Beginn der Zyklus vorhandenen Restladung $Q_{C(R)}$ hat sich dann im Verlauf des Zyklus Z auf dem Speicherkondensator 66 die Gesamtladung

$$Q_{C(Z)} = Q_{C(R)} + n \cdot dQ_M + k + dQ_K \quad (155)$$

angesammelt.

In Phase 1 des folgenden Zyklus Z wird Speicherkondensator 66 durch Schließen des Schalters $S_7$ wieder auf die Restladung $Q_{C(R)}$ entladen. Die Differenzladung

$$dQ = n \cdot dQ_M + k \cdot dQ_K \quad (156)$$

wird auf den Integrationskondensator 72 übertragen, wodurch die Ausgangsspannung $U_{A2}$ nachgeregelt wird. Die gesamte Schaltung arbeitet daher als Regelschleife, die die Ausgangsspannung $U_{A2}$ auf einen Wert zu bringen sucht, bei welchem im Speicherkondensator 66 eine Ladungsbalance besteht. Das Zeitverhalten des Einschwingvorgangs wird durch den Kapazitätswert C des Integrationskondensator 72 bestimmt. Im eingeschwungenen Zustand, bei dem im Speicherkondensator 66 Ladungsbalance stattfindet, gilt:

$$n \cdot dQ_M + k \cdot dQ_K = 0 \quad (157)$$

Durch Einsetzen der Werte für $dQ_M$ und $dQ_K$ aus den Gleichungen (136) und (141) erhält man hierfür die Übertragungsfunktion der Schaltung von z.B. Fig. 15:

$$\frac{U_{A2}}{U_1} = \frac{n}{k} \cdot \frac{C_x - C_{ref}}{C_{ref}} \quad (158)$$

In den Fig. 15 bis 18 ist angenommen, daß sich der eingeschwungene Zustand im Zeitpunkt $t_E$ am Ende des dritten dargestellten Zyklus Z eingestellt hat. Von diesem Zeitpunkt an zeigt das Spannungsverhältnis $U_{A2}/U_1$ den gesuchten Meßeffekt an, und die Ausgangsspannung $U_{A2}$ ändert sich nicht mehr, solange wie die Kapazität $C_x$ des Meßkondensators 51 ihren Wert beibehält. Bei einer Änderung der Kapazität $C_x$ geht die Ausgangsspannung $U_{A2}$ mit der durch die Kapazität C des Integrationskondensators 72 bestimmten Zeitkonstanten auf einen anderen Wert über.

Die Widerstandswerte der Widerstände 56, 57, 58 des Spannungsteilers 54 gehen nicht in die Übertragungsfunktion ein, doch bestimmen die Spannungsteilerverhältnisse $V_2$, $V_3$ die Größe der Ladungspakete und damit die Dimensionierung der Kondensatoren 66, 72. Desgleichen gehen deren Kapazitätswerte, die Offsetspannungen der Operationsverstärker, die Versorgungsspannung der Schaltung und die Frequenz, mit der die Steuerschaltung getaktet wird, nicht in das Endergebnis ein.

Der Wert der Spannung $U_1$ wird durch den Arbeitsbereich der Schaltung begrenzt. Wählt man als Speisespannung $U_1$ die Stromversorgungsspannung der Schaltung, so erhält man gemäß Gleichung (158) ein Ausgangssignal, das zur Stromversorgungsspannung umgekehrt proportional ist. Wählt man als Speisespannung $U_1$ eine feste Referenzspannung $U_{ref}$, so erhält man gemäß Gleichung (158) ein absolutes Ausgangssignal.

Bei den verschiedenen, in den Fig. 15 bis 18 gezeigten Steuerungsvarianten der Signalverarbeitungsschaltung von Fig. 14 erfolgt die Fehlerkorrektur in gleicher Weise, wie dies anhand der Fig. 8 und 9 erläutert worden ist.

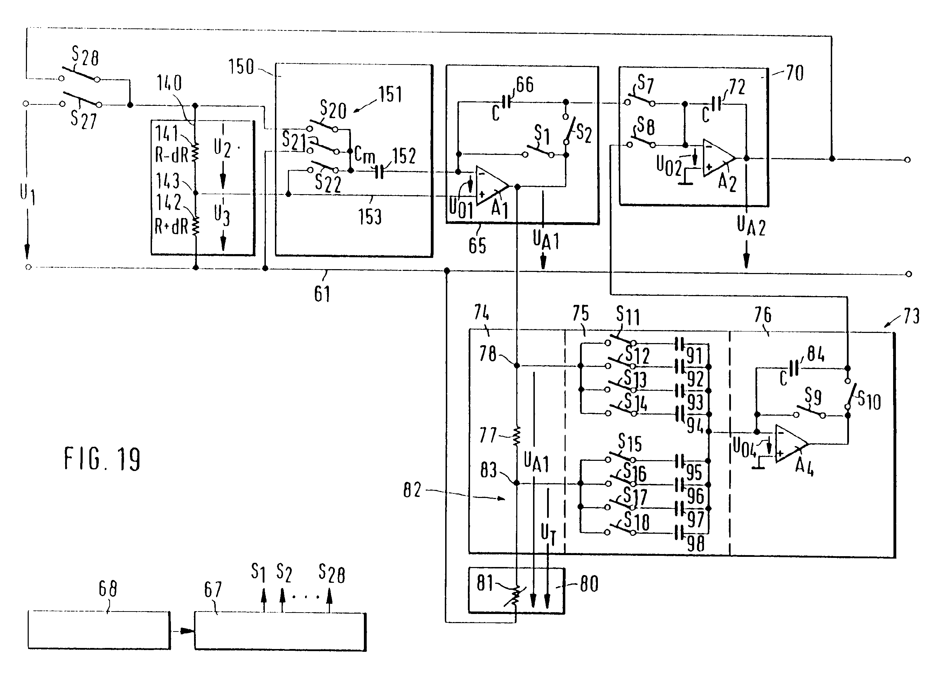

In Fig. 19 ist ein Ausführungsbeispiel gezeigt, das sich von dem in Fig. 11 gezeigten - wieder wie Fig. 14 - nur darin unterscheidet, daß die Signalverarbeitungsschaltung ein analoges Ausgangssignal erzeugt und dieses auf den Meßsensor zurückgekoppelt ist.

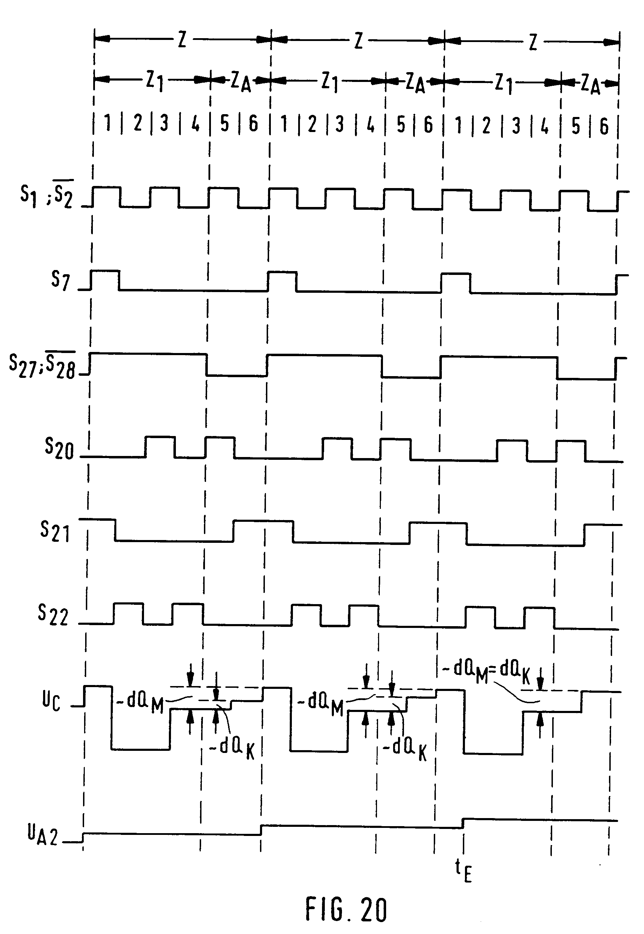

Anhand der Fig. 20 wird die Funktionsweise der Fig. 19 ohne die der Korrekturschaltung 73 erläutert, die sich aus der Erläuterung der Fig. 12 ergibt. Die Diagramme von Fig. 20 zeigen außer dem zeitlichen Verlauf der Schaltersteuersignale auch den zeitlichen Verlauf der Spannung $U_C$ am Speicherkondensator 66 und der Ausgangsspannung $U_{A2}$ während mehreren aufeinanderfolgenden Zyklen Z. Jeder Zyklus Z ist in sechs Phasen unterteilt, die mit 1 bis 6 beziffert sind.

Die Schalter $S_1$, $S_2$ werden durch ein periodisches Rechtecksignal im Gegentakt gesteuert, so daß der Schalter $S_1$ offen ist, wenn der Schalter $S_2$ geschlossen ist, und umgekehrt. Die Schalter $S_1$, $S_2$ nehmen ihre abwechselnden Zustände jeweils für die Dauer einer der Phasen 1 bis 6 ein. Wenn der Schalter $S_1$ geschlossen und der Schalter $S_2$ offen ist, was jeweils in den Phasen 1, 3 und 5 jedes Zyklus Z der Fall ist, kann der im Eingangskreis des Operationsverstärkers $A_1$ liegende Kondensator 152 durch einen der Schalter $S_{20}$ bis $S_{22}$

an eine der Spannungen $U_2$, $U_3$ bzw. $U_{01}$ gelegt und entsprechend geladen werden, ohne daß dadurch die Ladung im Speicherkondensator 66 beeinflußt wird. Die Schaltung befindet sich in der Konditionierphase für die Konditionierung des Kondensators 152. Wenn der Schalter $S_1$ offen und der Schalter $S_2$ geschlossen ist, ist der Zwischenspeicher 65 für die Übernahme von Ladung vom Kondensator 152 auf den Speicherkondensator 66 bereit. Die Schalter $S_{27}$, $S_{28}$ werden ebenfalls wieder durch ein periodisches Rechtecksignal im Gegentakt gesteuert, so daß der Schalter $S_{27}$ offen ist, wenn der Schalter $S_{28}$ geschlossen ist, und umgekehrt. Während der Phasen 1 bis 4 jedes Zyklus Z ist der Schalter $S_{28}$ offen. Die Phasen 1 bis 4 jedes Zyklus Z bilden somit einen Teilzyklus $Z_1$, in welchem die Spannung $U_1$ an der Widerstands-Halbbrücke 140 liegt. Dagegen ist in den Phasen 5 und 6 der Schalter $S_{28}$ geschlossen und der Schalter $S_{27}$ offen. Die Phasen 5 und 6 bilden somit einen Teilzyklus $Z_A$, in welchem die Spannung $U_{A2}$ an der Widerstands-Halbbrücke 140 liegt.

In jedem Teilzyklus $Z_1$, in dem die Spannung $U_1$ an die Widerstands-Halbbrücke 140 gelegt ist, haben die Spannungen $U_2$, $U_3$ die folgenden Werte:

$$U_{2(1-4)} = U_1 \cdot \frac{R - dR}{(R - dR) + (R + dR)} = U_1 \cdot \frac{R - dR}{2R} \quad (159)$$

$$U_{3(1-4)} = U_1 \cdot \frac{R + dR}{(R - dR) + (R + dR)} = U_1 \cdot \frac{R + dR}{2R} \quad (160)$$

In jedem Teilzyklus $Z_A$, in dem die Spannung $U_{A2}$ an die Widerstands-Halbbrücke 140 gelegt ist, haben die Spannungen $U_2$, $U_3$ die Werte

$$U_{2(5,6)} = U_{A2} \cdot \frac{R - dR}{(R - dR) + (R + dR)} = U_{A2} \cdot \frac{R - dR}{2R} \quad (161)$$

$$U_{3(5,6)} = U_{A2} \cdot \frac{R + dR}{(R - dR) + (R + dR)} = U_{A2} \cdot \frac{R + dR}{2R} \quad (162)$$

Die Signalverarbeitungsschaltung von Fig. 19 arbeitet wie diejenige von Fig. 11 nach dem Prinzip der Ladungsbalance, die im Speicherkondensator 66 stattfindet. Der Funktionsblock 150 liefert diskrete Ladungspakete, die auf den Speicherkondensator 66 übertragen werden. Diese Ladungspakete werden dadurch erzeugt, daß der Kondensator 152 mit Hilfe der Schalter $S_{20}$, $S_{21}$, $S_{22}$ wechselweise durch die verschiedenen Spannungen $U_2$, $U_3$, $U_{01}$ auf- und umgeladen wird. Die im Speicherkondensator 66 gespeicherten und summierten Ladungspakete werden durch Schließen des Schalters $S_7$ auf den Integrationskondensator 72 übertragen. Mit dem in Fig. 20 dargestellten zeitlichen Verlauf der verschiedenen Schaltersteuersignale ergibt sich der folgende Zeitablauf des Betriebs der Signalverarbeitungsschaltung von Fig. 19:

Phase 1:

Am Beginn der Phase 1 jedes Zyklus Z befindet sich auf dem Speicherkondensator 66 noch die im vorhergehenden Zyklus aufgebrachte Ladung. Für die Dauer der Phase 1 ist der Schalter $S_1$ geschlossen und der Schalter $S_2$ offen, so daß der Speicherkondensator 66 vom Ausgang des Operationsverstärkers $A_1$ abgetrennt ist. Der Schalter $S_7$ ist für die Dauer der Phase 1 geschlossen, so daß eine Ladungsübertragung vom Speicherkondensator 66 auf den Integrationskondensator 72 stattfindet. Dadurch wird der Speicherkondensator 66 auf die Restladung

$$Q_{C(R)} = (U_{02} + U_B - U_{01} - U_3) \cdot C \quad (163)$$

entladen, wobei die Umlademenge auf den Integrationskondensator 72 fließt.

Ferner befindet sich die Schaltung für die Dauer der Phase 1 in der Konditionierphase des Kondensators 152, da der Schalter $S_1$ geschlossen und der Schalter $S_2$ offen ist. Da zugleich der Schalter $S_{21}$ geschlossen ist, ist der Kondensator 151 mit dem Bezugsleiter 61 verbunden, so daß er auf die Ladung

$$Q_{Cm(1)} = (U_{01} + U_{3(1-4)}) \cdot C_m \quad (164)$$

aufgeladen wird, ohne daß die Ladung des Speicherkondensators 66 davon beeinflußt wird.

Phase 2:

In Phase 2 jedes Zyklus Z ist der Schalter $S_1$ offen und der Schalter $S_2$ geschlossen, so daß der Zwischenspeicher 65 bereit ist, Ladung auf den Speicherkondensator 66 zu übernehmen. Zugleich ist der Schalter $S_{22}$ geschlossen, so daß der Kondensator 152 über den Verbindungsleiter 153 mit dem nichtinvertierenden Eingang des Operationsverstärkers $A_1$ verbunden ist. Dadurch liegt am Kondensator 152 nur die Offsetspannung $U_{01}$, durch die er auf die Ladung

$$Q_{Cm(2)} = U_{01} \cdot C_m \quad (165)$$

umgeladen wird. Die Umlademenge

$$dQ_{Cm(1,2)} = Q_{Cm(2)} - Q_{C(1)} = -U_{3(1-4)} \cdot C \quad (166)$$

fließt auf den Speicherkondensator 66 und verursacht eine negative Änderung der Spannung $U_C$, wie aus dem zugehörigen Diagramm von Fig. 20 ersichtlich ist.

### Phase 3:

In Phase 3 ist wieder der Schalter $S_1$ geschlossen und der Schalter $S_2$ offen, so daß sich die Schaltung in der Konditionierphase für den Kondensator 152 befindet. Jedoch bleibt der Schalter $S_7$ offen, so daß keine Ladungsübertragung vom Speicherkondensator 66 auf den Integrationskondensator 72 stattfindet und der Speicherkondensator seine Ladung beibehält. Ferner ist nunmehr der Schalter $S_{20}$ geschlossen, so daß der Kondensator 152 mit der Klemme 60 verbunden ist und somit auf die Ladung

$$Q_{Cm(3)} = (U_{01} - U_{2(1-4)}) \cdot C_m \quad (167)$$

aufgeladen wird.

### Phase 4

In Phase 4 ist der Schalter $S_1$ offen und der Schalter $S_2$ geschlossen, so daß der Zwischenspeicher 65 zur Übernahme von Ladung bereit ist. Zugleich ist wieder der Schalter $S_{12}$ geschlossen, so daß der Kondensator 152 über den Verbindungsleiter 153 mit dem nichtinvertierenden Eingang des Operationsverstärkers $A_1$ verbunden ist und durch die Offsetspannung $U_{01}$ auf die Ladung

$$Q_{Cm(4)} = U_{01} \cdot C_m \quad (168)$$

umgeladen wird. Die Umlademenge

$$dQ_{Cm(3,4)} = Q_{Cm(4)} - Q_{Cm(3)} = U_{2(1-4)} \cdot C_m \quad (169)$$

fließt auf den Speicherkondensator 66 und verursacht eine positive Änderung der Spannung $U_C$, wie aus dem zugehörigen Diagramm von Fig. 20 ersichtlich ist. Diese positive Spannungsänderung ist jedoch kleiner als die zuvor in der Phase 2 verursachte negative Spannungsänderung, da die Spannung $U_{2(1-4)}$ kleiner als die Spannung $U_{3(1-4)}$ ist.

In den Phasen 1 bis 4 ist somit insgesamt ein Meßladungspaket

$$dQ_M = dQ_{Cm(1,2)} + dQ_{Cm(3,4)} = U_{2(1-4)} \cdot C_m - U_{3(1-4)} \cdot C_m \quad (170)$$

auf den Speicherkondensator 66 übertragen worden. Setzt man für $U_{2(1-4)}$ und $U_{3(1-4)}$ die Werte aus den Gleichungen (159) und (160) ein, so erhält man

$$dQ_M = U_1 \cdot C_m(R - dR)/2R - U_1 \cdot C_m(R + dR)/2R = -U_1 \cdot C_m \cdot dR/R \quad (171)$$

Der Unterschied zwischen den in den Phasen 2 und 4 verursachten Änderung der Spannung $U_C$ ist diesem Meßladungspaket $dQ_M$ proportional, wie in dem zugehörigen Diagramm von Fig. 20 angezeigt ist.

### Phase 5:

Die Phase 5 ist wieder eine Konditionierphase für den Kondensator 152. Da der Schalter $S_{20}$ geschlossen ist, wird Kondensator 152 auf die Ladung

$$Q_{Cm(5)} = (U_{01} - U_{2(5,6)}) \cdot C_m \quad (172)$$

aufgeladen.

### Phase 6:

In Phase 6 ist der Schalter $S_1$ geschlossen, so daß der Kondensator 152 mit dem Bezugsleiter 61 verbunden ist und auf die Ladung

$$Q_{Cm(6)} = (U_{01} + U_{3(5,6)}) \cdot C_m \quad (173)$$

umgeladen wird. Die Umlademenge wird als Kompensationsladungspaket

$$dQ_K = Q_{Cm(6)} - Q_{Cm(5)} = U_{2(5,6)} \cdot C_m + U_{3(5,6)} \cdot C_m \quad (174)$$

auf den Speicherkondensator 66 übertragen. Setzt man für $U_{2(5,6)}$ und $U_{3(5,6)}$ die Werte aus den Gleichungen (161), (162) ein, so erhält man

$$dQ_K = U_{A2} \cdot C_m(R - dR)/2R + U_{A2} \cdot C_m(R + dR)/2R = U_{A2} \cdot C_m \quad (175)$$

Das Kompensationsladungspaket $dQ_K$ verursacht eine dazu proportionale positive Änderung der Spannung $U_C$, wie in dem entsprechenden Diagramm von Fig. 20 angezeigt ist. Jeder Zyklus $Z$ kann wiederum aus n Teilzyklen $Z_1$ und k Teilzyklen $Z_A$ bestehen; Fig. 20 zeigt die Verhältnisse für den Sonderfall n = k = 1. Im allgemeinen Fall hat sich auf dem Speicherkondensator 66 in jedem Zyklus $Z$ die Ladung

$$Q_{C(Z)} = Q_{C(R)} + n \cdot dQ_M + k \cdot dQ_K \quad (176)$$

angesammelt. Am Beginn des folgenden Zyklus $Z$ wird der Speicherkondensator 66 wieder auf die Restladung $Q_{C(R)}$ entladen. Die Differenzladung

$$dQ = n \cdot dQ_M + k \cdot dQ_K \quad (177)$$

wird auf den Integrationskondensator 72 übertragen, wodurch die Ausgangsspannung $U_{A2}$ nachgeregelt wird. Die Schaltung arbeitet daher als Regelschleife, die die Ausgangsspannung $U_{A2}$ auf einen Wert zu bringen sucht, bei dem die Summe der

k Kompensationsladungspakete $dQ_K$ gleich Summe der der

n Meßladungspakete $dQ_M$ ist. Wenn dieser Zustand erreicht ist, besteht Ladungsbalance im Speicherkondensator 66:

$$n \cdot dQ_M + k \cdot dQ_K = 0 \quad (178)$$

Durch Einsetzen der Werte für $dQ_M$ und $dQ_K$ aus den Gleichungen (171) und (175) erhält man hieraus die Übertragungsfunktion der Schaltung:

$$\frac{U_{A2}}{U_1} = \frac{n}{k} \cdot \frac{dR}{R} \quad (179)$$

Das Verhältnis der analogen Ausgangsspannung $U_{A2}$ zur Versorgungsspannung $U_1$ zeigt also im eingeschwungenen Zustand unmittelbar das gesuchte Widerstandsverhältnis an. In Fig. 20 ist angenommen, daß sich der eingeschwungene Zustand im Zeitpunkt $t_E$ am Ende des zweiten dargestellten Zyklus Z eingestellt hat. Von diesem Zeitpunkt an ändert sich die Spannung $U_{A2}$ nicht mehr, solange wie die Widerstände 141, 142 ihre Werte beibehalten. Bei einer Änderung des Widerstandsverhältnisses dR/R geht die Ausgangsspannung $U_{A2}$ mit einer bestimmten Zeitkonstante auf einen anderen Wert über.

Der Kapazitätswert des Kondensators 152 geht nicht in die Übertragungsfunktion ein, er bestimmt jedoch die Größe der Ladungspakete und somit die Dimensionierung der Kondensatoren 66, 72. Desgleichen gehen wieder deren Kapazitätswerte, die Offsetspannungen der Operationsverstärker, die Versorgungsspannung der Schaltungen und die Frequenz, mit der die Steuerschaltung getaktet wird, nicht in das Endergebnis ein.

Der Wert der Spannung $U_1$ wird nur durch den Arbeitsbereich der Schaltung begrenzt. Wählt man als Speisespannung $U_1$ die Stromversorgung der Schaltung, so erhält man gemäß Gleichung (179) ein Ausgangssignal, das der Stromversorgungsspannung proportional ist. Wählt man als Speisespannung $U_1$ eine feste Referenzspannung $U_{ref}$, so erhält man gemäß Gleichung (179) ein absolutes Ausgangssignal.

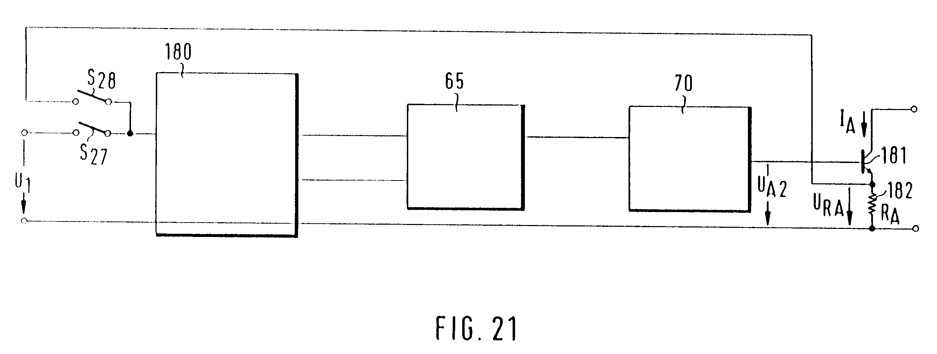

Fig. 21 zeigt eine Abwandlung der Schaltungen von Fig. 14 und 19, die anstelle einer analogen Ausgangsspannung $U_{A2}$ einen analogen Ausgangsstrom $I_A$ liefern. In Fig. 21 sind der Zwischenspeicher 65 und der Integrator 70 von Fig. 14 und 19 jeweils durch einen Schaltungsblock dargestellt. Der Schaltungsblock 180 von Fig. 21 entspricht der aus dem Meßsensor und dem Funktionsblock bestehenden Schaltungsgruppe der Schaltungen von Fig. 14 und 19, also dem Sensor 50 und dem Funktionsblock 53 von Fig. 14 oder der Widerstands-Halbbrücke 140 und dem Funktionsblock 150 von Fig. 19.

Der Ausgang des Integrators 70 ist in Fig. 21 mit der Basis eines npn-Transistors 181 verbunden, der als Emitterfolger mit einem im Emitterkreis liegenden Widerstand 182 des Wertes $R_A$ geschaltet ist. Die zum Schalter $S_{28}$ führende Rückkopplung ist an den Emitter des Transistors 181 angeschlossen. Die Ausgangsspannung $U_{A2}$ des Integrators 70 läßt über den KollektorEmitter-Kreis des Transistors 181 den Ausgangsstrom $I_A$ fließen. Somit wird bei dieser Schaltung die Spannung

$$U_{RA} = R_A \cdot I_A \quad (180)$$

auf den Eingang rückgekoppelt.

Damit gilt für das Kompensationsladungspaket $dQ_K$ im Fall der Schaltung von Fig. 14 anstelle der Gleichung (141):

$$dQ_K = -(V_2 - V_3) \cdot U_{RA} \cdot C_{ref} \quad (181)$$

und im Fall der Schaltung von Fig. 19 anstelle der Gleichung (175):

$$dQ_K = U_{RA} \cdot C_m \quad (182)$$

Demzufolge erhält man für die Schaltung von Fig. 14 anstelle der Gleichung (158) die Übertragungsfunktion

$$\frac{I_A}{U_1} = \frac{n}{k \cdot R_A} \cdot \frac{C_x - C_{ref}}{C_{ref}} \quad (183)$$

und für die Schaltung von Fig. 19 anstelle der Gleichung (179) die Übertragungsfunktion

$$\frac{I_A}{U_1} = \frac{n}{k \cdot R_A} \cdot \frac{dR}{R} \quad (184)$$

Die Schaltung von Fig. 21 eignet sich insbesondere für Meßanordnungen, bei denen über eine einzige Zweidrahtleitung das Meßsignal in Form eines Gleichstroms übertragen wird, der beispielsweise zwischen 4 mA und 20 mA veränderlich ist und in den auch der Versorgungsstrom für den Sensor und die Signalverarbeitungsschaltung eingeschlossen ist.

## Tabelle I

| Konden-sator | Steuer-signal | Ladungspakete | Korrektur-koeffizient |
|---|---|---|---|
| 91 | $S_{11+}$ <br> $S_{11-}$ | $dQ_{91+} = + C_{91}/C \cdot (C_x - C_{ref}) \cdot (U_2 - U_3)$ <br> $dQ_{91-} = - C_{91}/C \cdot (C_x - C_{ref}) \cdot (U_2 - U_3)$ | $B_{21} = \pm\, C_{91}/C$ |
| 92 | $S_{12+}$ <br> $S_{12-}$ | $dQ_{92+} = + C_{92}/C \cdot (C_x - C_{ref}) \cdot (U_2 - U_3)$ <br> $dQ_{92-} = - C_{92}/C \cdot (C_x - C_{ref}) \cdot (U_2 - U_3)$ | $C_{21} = \pm\, C_{92}/C$ |
| 93 | $S_{13+}$ <br> $S_{13-}$ | $dQ_{93+} = + C_{93}/C \cdot C_{ref} \cdot (U_2 - U_3)$ <br> $dQ_{93-} = - C_{93}/C \cdot C_{ref} \cdot (U_2 - U_3)$ | $B_{11} = \pm\, C_{93}/C$ |
| 94 | $S_{14+}$ <br> $S_{14-}$ | $dQ_{94+} = + C_{94}/C \cdot C_{ref} \cdot (U_2 - U_3)$ <br> $dQ_{94-} = - C_{94}/C \cdot C_{ref} \cdot (U_2 - U_3)$ | $C_{11} = \pm\, C_{94}/C$ |
| 95 | $S_{15+}$ <br> $S_{15-}$ | $dQ_{95+} = + C_{95}/C \cdot (C_x - C_{ref}) \cdot (U_2 - U_3)$ <br> $dQ_{95-} = - C_{95}/C \cdot (C_x - C_{ref}) \cdot (U_2 - U_3)$ | $B_{22} = \pm\, C_{95}/C$ |
| 96 | $S_{16+}$ <br> $S_{16-}$ | $dQ_{96+} = + C_{96}/C \cdot (C_x - C_{ref}) \cdot (U_2 - U_3)$ <br> $dQ_{96-} = - C_{96}/C \cdot (C_x - C_{ref}) \cdot (U_2 - U_3)$ | $C_{22} = \pm\, C_{96}/C$ |
| 97 | $S_{17+}$ <br> $S_{17-}$ | $dQ_{97+} = + C_{97}/C \cdot C_{ref} \cdot (U_2 - U_3)$ <br> $dQ_{97-} = - C_{97}/C \cdot C_{ref} \cdot (U_2 - U_3)$ | $B_{12} = \pm\, C_{97}/C$ |
| 98 | $S_{18+}$ <br> $S_{18-}$ | $dQ_{98+} = + C_{98}/C \cdot C_{ref} \cdot (U_2 - U_3)$ <br> $dQ_{98-} = - C_{98}/C \cdot C_{ref} \cdot (U_2 - U_3)$ | $C_{12} = \pm\, C_{98}/C$ |

## Tabelle II

| Häufigkeit | Ladungspaketeinheiten | |
|---|---|---|
| | $(C_x - C_{ref}) \cdot (U_2 - U_3)$ | $C_{ref} \cdot (U_2 - U_3)$ |
| n | $\cdot (-1)$ | $\cdot 0$ |
| n − k | $\cdot (B_{21} + B_{22} \cdot V_T)$ | $\cdot (B_{11} + B_{12} \cdot V_T)$ |
| k | $\cdot (C_{21} + C_{22} \cdot V_T)$ | $\cdot (C_{11} + C_{12} \cdot V_T)$ |

## Tabelle III

| Kondensator | Steuersignal | Ladungspakete | Korrekturkoeffizient |
|---|---|---|---|
| 91 | $S_{11+}$ $S_{11-}$ | $dQ_{91+} = + C_{91}/C \cdot dR/R \cdot C_m \cdot U_1$ $dQ_{91-} = - C_{91}/C \cdot dR/R \cdot C_m \cdot U_1$ | $B_{21} = \pm C_{91}/C$ |
| 92 | $S_{12+}$ $S_{12-}$ | $dQ_{92+} = + C_{92}/C \cdot dR/R \cdot C_m \cdot U_1$ $dQ_{92-} = - C_{92}/C \cdot dR/R \cdot C_m \cdot U_1$ | $C_{21} = \pm C_{92}/C$ |
| 93 | $S_{13+}$ $S_{13-}$ | $dQ_{93+} = + C_{93}/C \cdot C_m \cdot U_1$ $dQ_{93-} = - C_{93}/C \cdot C_m \cdot U_1$ | $B_{11} = \pm C_{93}/C$ |
| 94 | $S_{14+}$ $S_{14-}$ | $dQ_{94+} = + C_{94}/C \cdot C_m \cdot U_1$ $dQ_{94-} = - C_{94}/C \cdot C_m \cdot U_1$ | $C_{11} = \pm C_{94}/C$ |
| 95 | $S_{15+}$ $S_{15-}$ | $dQ_{95+} = + C_{95}/C \cdot dR/R \cdot C_m \cdot U_1$ $dQ_{95-} = - C_{95}/C \cdot dR/R \cdot C_m \cdot U_1$ | $B_{22} = \pm C_{95}/C$ |
| 96 | $S_{16+}$ $S_{16-}$ | $dQ_{96+} = + C_{96}/C \cdot dR/R \cdot C_m \cdot U_1$ $dQ_{96-} = - C_{96}/C \cdot dR/R \cdot C_m \cdot U_1$ | $C_{22} = \pm C_{96}/C$ |
| 97 | $S_{17+}$ $S_{17-}$ | $dQ_{97+} = + C_{97}/C \cdot C_m \cdot U_1$ $dQ_{97-} = - C_{97}/C \cdot C_m \cdot U_1$ | $B_{12} = \pm C_{97}/C$ |
| 98 | $S_{18+}$ $S_{18-}$ | $dQ_{98+} = + C_{98}/C \cdot C_m \cdot U_1$ $dQ_{98-} = - C_{98}/C \cdot C_m \cdot U_1$ | $C_{12} = \pm C_{98}/C$ |

Tabelle IV

| Häufigkeit | Ladungspaketeinheiten | |
|---|---|---|
| | $dR/R \cdot C_m \cdot U_1$ | $C_m \cdot U_1$ |
| $2n$ | $\cdot (-1)$ | $\cdot 0$ |
| $n - k$ | $\cdot (B_{21} + B_{22} \cdot V_T)$ | $\cdot (B_{11} + B_{12} \cdot V_T)$ |
| $k$ | $\cdot (C_{21} + C_{22} \cdot V_T)$ | $\cdot (C_{11} + C_{12} \cdot V_T)$ |

**Patentansprüche**

1. Anordnung zur Verarbeitung von Sensorsignalen,
   - die sowohl von einem Meßsensor (1),
     - -der als Reaktion auf die physikalische Einwirkung einer zu erfassenden physikalischen Meßgröße und einer oder mehrerer physikalischer Störgrößen einen von der zu erfassenden physikalischen Meßgröße und von den physikalischen Störgrößen abhängigen Meßeffekt $M_1$ erzeugt,
   - als auch von einem oder mehreren weiteren Sensoren (4) geliefert werden,
     - -die im wesentlichen nur von den physikalischen Störgrößen abhängige Meßeffekte $M_2...M_n$ erzeugen,

   bei welcher Anordnung
   - der Meßsensor (1) und jeder Sensor (4) jeweils ein analoges Ausgangssignal liefern, das dem Produkt eines Meßeffekts mit einem ihnen zugeführten Versorgungssignal proportional (V) ist,
   - das Ausgangssignal des Meßsensors (1) und wenigstens ein Signal, das in Beziehung zu dessen Versorgungssignal (V) steht, in ersten Wichtungsschaltungen (30, 32, 33) mit in Abhängigkeit von den Eigenschaften des Meßsensors (1) einstellbaren ersten Koeffizienten ($b_{11}$, $b_{21}$, $c_{21}$) gewichtet sind,
   - die Ausgangssignale der weiteren Sensoren (4) und wenigstens ein Signal, das in Beziehung zu deren Versorgungssignalen (V) steht, in zweiten Wichtungsschaltungen (31, 34, 35) mit in Abhängigkeit von den Eigenschaften des Meßsensors (1) einstellbaren zweiten Koeffizienten ($c_{11}$, $b_{12}$, $b_{1n}$, $b_{22}$, $b_{2n}$, $c_{12}$, $c_{1n}$, $c_{22}$, $c_{2n}$) gewichtet sind,
   - die Ausgangssignale der ersten Wichtungsschaltungen (30, 32, 33) mittels einer ersten Summmierschaltung (36) zu einer ersten Summe
     $$S = b_{11} + b_{12} \cdot M_2 + ... + b_{1n} \cdot M_n + (b_{21} + b_{22} \cdot M_2 + ... + b_{2n} \cdot M_n) \cdot M_1$$
     summiert und
   - die Ausgangssignale der zweiten Wichtungsschaltungen (31, 34, 35) mittels einer zweiten Summmierschaltung (37) zu einer zweiten Summe
     $$S_{ref} = c_{11} + c_{12} \cdot M_2 + ... + c_{1n} \cdot M_n + (c_{21} + c_{22} \cdot M_2 + ... + c_{2n} \cdot M_n) \cdot M_1$$
     summiert sind, und
   - ein Analog-Digital-Wandler (38) mit einem Signaleingang (38a) und einem Referenzeingang (38b),
     - -der am Signaleingang das Ausgangssignal der ersten Summierschaltung (36) und am Referenzeingang das Ausgangssignal der zweiten Summierschaltung (37) empfängt,
   - an seinem Ausgang (38c) ein digitales Signal liefert, das dem Verhältnis zwischen den dem Signaleingang und den dem Referenzeingang zugeführten Analogsignalen und damit einer Übertragungsfunktion der Form
     $$\frac{S}{S_{ref}} = \frac{b_{11} + b_{12} \cdot M_2 + ... + b_{1n} \cdot M_n + (b_{21} + b_{22} \cdot M_2 + ... + b_{2n} \cdot M_n) \cdot M_1}{c_{11} + c_{12} \cdot M_2 + ... + c_{1n} \cdot M_n + (c_{21} + c_{22} \cdot M_2 + ... + c_{2n} \cdot M_n) \cdot M_1}$$
   entspricht.

2. Anordnung nach Anspruch 1, bei der wenigstens einer der weiteren Sensoren (4) ein temperaturabhängiger Widerstand (81) und der von ihm erzeugte Meßeffekt ein temperaturabhängiges Spannungsverhältnis ($V_T$) ist.

3. Anordnung nach Anspruch 1, bei der das Ausgangssignal wenigstens eines Sensors zur Bildung des Versorgungssignals wenigstens eines weiteren Sensors dient.

4. Anordnung nach Anspruch 1, bei der der Analog-Digital-Wandler (38) nach dem Prinzip der Strombalance zwischen den dem Signaleingang (38a) und dem Referenzeingang (38b) zugeführten Strömen arbeitet.

5. Anordnung zur Verarbeitung von Sensorsignalen,
   - die sowohl von einem Meßsensor (1),
      -- der als Reaktion auf die physikalische Einwirkung einer zu erfassenden physikalischen Meßgröße und einer oder mehrerer physikalischer Störgrößen einen von der zu erfassenden physikalischen Meßgröße und von den physikalischen Störgrößen abhängigen Meßeffekt $M_1$ erzeugt,
   - als auch von einem oder mehreren weiteren Sensoren (4) geliefert werden,
      -- die im wesentlichen nur von den physikalischen Störgrößen abhängige Meßeffekte $M_2...M_n$ erzeugen,
   
   bei welcher Anordnung
   - die Sensorsignale durch quantisierten Ladungstransport und Ladungsbalance mittels Schalter-Kondensator-Strukturen derart analog verarbeitet und
   - in die Ladungsbalance aus einem gewichteten Meßeffekt oder aus der Summe mehrerer gewichteter Meßeffekte gebildete Ladungspakete derart einbezogen sind,
      -- daß eine Ausgangsgröße S gebildet ist, deren Verhältnis zu einer Referenzgröße $S_{ref}$ in Abhängigkeit von den die Eingangsgrößen bildenden Meßeffekten $M_1$, $M_2$... $M_n$ durch die Übertragungsfunktion:

$$\frac{S}{S_{ref}} = \frac{b_{11} + b_{12}{\cdot}M_2 + ... + b_{1n}{\cdot}M_n + (b_{21} + b_{22}{\cdot}M_2 + ... + b_{2n}{\cdot}M_n){\cdot}M_1}{c_{11} + c_{12}{\cdot}M_2 + ... + c_{1n}{\cdot}M_n + (c_{21} + c_{22}{\cdot}M_2 + ... + c_{2n}{\cdot}M_n){\cdot}M_1}$$

bestimmt ist, deren Koeffizienten $b_{11}$ ... $b_{2n}$, $c_{11}$ ... $c_{2n}$ zur Erzielung des gewünschten Übertragungsverhaltens in Abhängigkeit von den Eigenschaften des Meßsensors (1) einstellbar sind.

6. Anordnung nach Anspruch 5, bei der in die Ladungsbalance Ladungspakete einbezogen sind die aus in festem Bezug zu den Versorgungssignalen der Sensoren stehenden Signalen gebildet sind.

7. Anordnung nach Anspruch 5 oder 6 mit
   - einem Funktionsblock (53) mit zyklisch betätigten Schaltern (55), die in Verbindung mit wenigstens einem Kondensator zur Bildung von Meßladungspaketen dienen,
   - einer Korrekturschaltung (73) mit Schalter-Kondensator-Strukturen zur Bildung von Korrekturladungspaketen, die entsprechend den Koeffizienten der Übertragungsfunktion gewichtet sind, und
   - einem Integrator (70) zur Integration der Meßladungspakete und der Korrekturladungspakete, der fortlaufend ein das Integrationsergebnis darstellendes Ausgangssignal ($U_{A2}$) liefert.

8. Anordnung nach Anspruch 7 mit einer Anordnung (71), die bei jedem Über- bzw. Unterschreiten eines vorgegebenen Schwellenwerts durch das Ausgangssignal des Integrators (70) einen Kompensationszyklus auslöst, in dessen Verlauf dem Integrator ein Kompensationsladungspaket zugeführt wird, durch das er wieder in einen Ausgangszustand zurückgestellt wird.

9. Anordnung nach Anspruch 7 oder 8 mit einer Steuerschaltung (67) zur zyklischen Betätigung der Schalter des Funktionsblocks (53) und der Korrekturschaltung (73).

10. Anordnung nach den Ansprüchen 7 und 9, bei der die Steuerschaltung (67) bei jeder Auslösung eines Kompensationszyklus die zyklische Betätigung der Schalter zur Bildung eines Kompensationsladungspakets verändert.

11. Anordnung nach einem der Ansprüche 7 bis 10, bei der die Kompensationsladungspakete mittels Schalter-Kondensator-Strukturen (75) der Korrekturschaltung (73) oder mittels des Funktionsblocks (53) gebildet sind.

12. Anordnung nach einem der Ansprüche 7 bis 11, bei der die durch die Steuerungsschaltung (67) bestimm-

EP 0 445 267 B1

ten Schaltphasen der zyklischen Schalterbetätigung zur Wahl der Vorzeichen der Korrekturladungspakete und/oder zur Verarbeitung unterschiedlicher Meßeffekte einstellbar sind.

13. Anordnung nach einem der Ansprüche 7 bis 12, bei der die Kapazitätswerte der Kondensatoren der Korrekturschaltung (73) zur Wichtung der Ladungspakete entsprechend den Koeffizienten der Übertragungsfunktion einstellbar sind.

14. Anordnung nach einem der Ansprüche 7 bis 12, bei der die Wichtung der durch die Schalter-Kondensator-Strukturen der Korrekturschaltung (73) zur Erzeugung der Ladungspakete abgetasteten Spannung entsprechend den Koeffizienten der Übertragungsfunktion einstellbar ist.

15. Anordnung nach Anspruch 14, bei der jeder Schalter-Kondensator-Struktur der Korrekturschaltung (73) ein einstellbarer Widerstands-Spannungteiler (82) zugeordnet ist.

16. Anordnung nach einem der Ansprüche 7 bis 15, bei der der bzw. jeder mit den Schaltern des Funktionsblocks (53) zur Bildung der Meßladungspakete zusammenwirkende Kondensator (51, 52) ein Kondensator des den Meßeffekt $M_1$ liefernden kapazitiven Sensors ist.

17. Anordnung nach Anspruch 16, bei der der Funktionsblock einen Spannungsteiler (54) enthält, an welchem die zur Bildung der Meßladungspakete dienenden Spannungen ($U_2$, $U_3$) abgegriffen werden und der zur Anpassung der Meßladungspakete an den Betriebsbereich der Signalverarbeitungsschaltung (2) eingestellt ist.

18. Anordnung nach einem der Ansprüche 7 bis 15, bei der der Meßsensor (1) eine Widerstands-Halbbrücke (140) bzw. eine Widerstands-Vollbrücke (160) ist und der Funktionsblock (150, 170) wenigstens einen mit den Schaltern zur Bildung der Meßladungspakete zusammenwirkenden Kondensator (152, 172) enthält.

19. Anordnung nach Anspruch 8, bei der zur Anpassung der Meßladungspakete an den Betriebsbereich der Schaltung der Kondensator (152, 172) eingestellt ist.

20. Anordnung nach Anspruch 7 und einem der Ansprüche 9 bis 19, bei der die Signalverarbeitungsschaltung (2) ein der Meßgröße entsprechendes analoges Ausgangssignal liefert und die Speisung des Meßsensors (1) durch Rückkopplung eines in fester Beziehung zum analogen Ausgangssignal stehenden Rückkopplungssignals zur Erzielung der Ladungsbalance beeinflußt ist.

21. Anordnung nach Anspruch 20, bei der das Rückkopplungssignal periodisch abwechselnd mit einem Versorgungssignal zur Speisung des Meßsensors (1) verwendet ist.

22. Anordnung nach Anspruch 21, bei der die Schalter-Kondensator-Strukturen so gesteuert sind, daß sie die vom Meßeffekt abhängigen Meßladungspakete bei Speisung des Meßsensors (1) mit dem Versorgungssignal (V) und die vom Meßeffekt unabhängigen Konpensationsladungspakete bei Speisung des Sensors mit dem Rückkopplungssignal erzeugen.

23. Anordnung nach einem der Ansprüche 20 bis 22, bei der das Versorgungssignal (V) eine Spannung ($U_1$) ist und das analoge Ausgangssignal der Signalverarbeitungsschaltung (2) gleichfalls eine Spannung ($U_{A2}$) ist, die zugleich als Rückkopplungssignal verwendet ist.

24. Anordnung nach einem der Ansprüche 20 bis 22, bei der das Versorgungssignal (V) eine Spannung ($U_1$) ist, das analoge Ausgangssignal der Signalverarbeitungsschaltung (2) ein Strom ($I_A$) ist und das Rückkopplungssignal eine dem Strom proportionale Spannung ($U_{RA}$) ist.

25. Anordnung nach Anspruch 23 oder 24, bei der das Versorgungssignal (V) die Stromversorgungsspannung oder eine feste Referenzspannung ist.

## Claims

1. An arrangement for processing sensor signals which are furnished
   - both by a measuring sensor (1)
      -- which, in response to the physical action of a physical quantity to be determined and of one

38

or more physical disturbance variables, produces a measuring effect $M_1$ dependent on the physical quantity to be determined and on the physical disturbance variables,

- and by one or more further sensors (4)

    -- which produce measuring effects $M_2...M_n$ dependent essentially only on the physical disturbance variables,

in which arrangement

- the measuring sensor (1) and each of the sensors (4) provide an analog output signal proportional to the product of a measuring effect and a supply signal (V) applied to them,
- the output signal of the measuring sensor (1) and at least one signal related to the supply signal (V) of the measuring sensor (1) are weighted in first weighting circuits (30, 32, 33) with first coefficients ($b_{11}$, $b_{21}$, $c_{21}$) adjustable in accordance with the characteristics of the measuring sensor (1),
- the output signals of the further sensors (4) and at least one signal related to the supply signals (V) of the further sensors (4) are weighted in second weighting circuits (31, 34, 35) with second coefficients ($c_{11}$, $b_{12}$, $b_{1n}$, $b_{22}$, $b_{2n}$, $c_{12}$, $c_{1n}$, $c_{22}$, $c_{2n}$) adjustable in accordance with the characteristics of the measuring sensor (1),
- the output signals of the first weighting circuits (30, 32, 33) are summed by means of a first summing circuit (36) to form a first sum

$$S = b_{11} + b_{12} \cdot M_2 + ... + b_{1n} \cdot M_n + (b_{21} + b_{22} \cdot M_2 + ... + b_{2n} \cdot M_n) \cdot M_1,$$

and

- the output signals of the second weighting circuits (31, 34, 35) are summed by means of a second summing circuit (37) to form a second sum

and

- an analog-to-digital converter (38) having a signal input (38a) and a reference input (38b)

    -- which receives the output signal from the first summing circuit (36) at the signal input and the output signal from the second summing circuit (37) at the reference input

- provides at its output (38c) a digital signal corresponding to the ratio between the analog signals applied to the signal input and those applied to the reference input, and thus to a transfer function of the form

$$\frac{S}{S_{ref}} = \frac{b_{11} + b_{12} \cdot M_2 + ... + b_{1n} \cdot M_n + (b_{21} + b_{22} \cdot M_2 + ... + b_{2n} \cdot M_n) \cdot M_1}{c_{11} + c_{12} \cdot M_2 + ... + c_{1n} \cdot M_n + (c_{21} + c_{22} \cdot M_2 + ... + c_{2n} \cdot M_n) \cdot M_1}$$

2. An arrangement as claimed in claim 1 wherein at least one of the further sensors (4) is a temperature-dependent resistor (81), and wherein the measuring effect produced by said temperature-dependent resistor (81) is a temperature-dependent voltage ratio ($V_T$).

3. An arrangement as claimed in claim 1 wherein the output signal of at least one sensor serves to form the supply signal for at least one further sensor.

4. An arrangement as claimed in claim 1 wherein the analog-to-digital converter (38) operates on the principle of current balance between the currents supplied to the signal input (38a) and the reference input (38b).

5. An arrangement for processing sensor signals which are furnished

- both by a measuring sensor (1)

    -- which, in response to the physical action of a physical quantity to be determined and of one or more physical disturbance variables, produces a measuring effect $M_1$ dependent on the physical quantity to be determined and on the physical disturbance variables,

- and by one or more further sensors (4)

    -- which produce measuring effects $M_2...M_n$ dependent essentially only on the physical disturbance variables,

in which arrangement

- the sensor signals are processed in analog form by quantized charge transport and charge balancing using switch-capacitor structures, and
- charge packets formed from a weighted measuring effect or from the sum of two or more weighted measuring effects are incorporated into the charge balancing, such

    -- that an output quantity S is formed whose ratio to a reference quantity $S_{ref}$ as a function of the measuring effects $M_1$, $M_2...M_n$ forming the input quantities is determined by the transfer function

$$\frac{S}{S_{ref}} = \frac{b_{11} + b_{12}\cdot M_2 + ... + b_{1n}\cdot M_n + (b_{21} + b_{22}\cdot M_2 + ... + b_{2n}\cdot M_n)\cdot M_1}{c_{11} + c_{12}\cdot M_2 + ... + c_{1n}\cdot M_n + (c_{21} + c_{22}\cdot M_2 + ... + c_{2n}\cdot M_n)\cdot M_1},$$

whose coefficients $b_{11}$ ... $b_{2n}$, $c_{11}$ ... $c_{2n}$ are adjustable in accordance with the characteristics of the measuring sensor (1) to achieve the desired transfer characteristic.

6. An arrangement as claimed in claim 5 wherein charge packets are incorporated into the charge balancing which are formed from signals having a fixed relationship to the supply signals for the sensors.

7. An arrangement as claimed in claim 5 or 6, comprising
   - a functional block (53) with cyclically actuated switches (55) which, in conjunction with at least one capacitor, serve to form measurement charge packets,
   - a correction circuit (73) with switch-capacitor structures for forming correction charge packets which are weighted in accordance with the coefficients of the transfer function, and
   - an integrator (70) for integrating the measurement charge packets and correction charge packets which continuously provides an output signal ($U_{A2}$) representative of the result of the integration.

8. An arrangement as claimed in claim 7, comprising an arrangement (71) which, whenever the output signal of the integrator (70) rises above or falls below a predetermined threshold value, initiates a compensation cycle in the course of which the integrator is supplied with a compensation charge packet by which it is restored to an initial state.

9. An arrangement as claimed in claim 7 or 8, comprising a control circuit (67) for cyclically actuating the switches of the functional block (53) and the correction circuit (73).

10. An arrangement as claimed in claims 7 and 9 wherein upon each initiation of a compensation cycle, the control circuit (67) changes the cyclic actuation of the switches to form a compensation charge packet.

11. An arrangement as claimed in any one of claims 7 to 10 wherein the compensation charge packets are formed by means of switch-capacitor structures (75) of the correction circuit (73) or by means of the functional block (53).

12. An arrangement as claimed in any one of claims 7 to 11 wherein the switching phases of the cyclic switch actuation, which are determined by the control circuit (67),are adjustable for selecting the sign of the correction charge packets and/or for processing different measuring effects.

13. An arrangement as claimed in any one of claims 7 to 12 wherein the values of the capacitors of the correction circuit (73) are adjustable for weighting the charge packets in accordance with the coefficients of the transfer function.

14. An arrangement as claimed in any one of claims 7 to 12 wherein the weighting of the voltage sampled by the switch-capacitor structures of the correction circuit (73) for generating the charge packets is adjustable in accordance with the coefficients of the transfer function.

15. An arrangement as claimed in claim 14 wherein each switch-capacitor structure of the correction circuit (73) has an adjustable resistive voltage divider (82) associated therewith.

16. An arrangement as claimed in any one of claims 7 to 15 wherein the capacitor or each of the capacitors (51, 52) cooperating with the switches of the functional block (53) for forming the measurement charge packets is a capacitor of the capacitive sensor providing the measuring effect $M_1$.

17. An arrangement as claimed in claim 16 wherein the functional block includes a voltage divider (54) from which the voltages ($U_2$, $U_3$) serving to form the measurement charge packets are obtained and which is adjusted to adapt the measurement charge packets to the operating range of the signal-processing circuit (2).

18. An arrangement as claimed in any one of claims 7 to 15 wherein the measuring sensor (1) is a half bridge (140) or a full bridge (160), and wherein the functional block (150, 170) includes at least one capacitor (152, 172) cooperating with the switches to form the measurement charge packets.

19. An arrangement as claimed in claim 18 wherein the capacitor (152, 172) is adjusted to adapt the meas-

EP 0 445 267 B1

urement charge packets to the operating range of the circuit.

20. An arrangement as claimed in claim 7 and in any one of claims 9 to 19 wherein the signal-processing circuit (2) provides an analog output signal corresponding to the physical quantity, and wherein the feeding of the measuring sensor (1) is influenced by a feedback signal having a fixed relationship to the analog output signal to achieve the charge balance.

21. An arrangement as claimed in claim 20 wherein the feedback signal is used in periodic alternation with a supply signal for feeding the measuring sensor (1).

22. An arrangement as claimed in claim 21 wherein the switch-capacitor structures are controlled to generate the measuring-effect-dependent measurement charge packets when the measuring sensor (1) is fed with the supply signal (V), and the measuring-effect-independent compensation charge packets when the sensor is fed with the feedback signal.

23. An arrangement as claimed in any one of claims 20 to 22 wherein the supply signal (V) is a voltage ($U_1$), and wherein the analog output signal of the signal-processing circuit (2) is also a voltage ($U_{A2}$), which is also used as the feedback signal.

24. An arrangement as claimed in any one of claims 20 to 22 wherein the supply signal (V) is a voltage ($U_1$), the analog output signal of the signal-processing circuit (2) is a current ($I_A$), and the feedback signal is a voltage ($U_{RA}$) proportional to the current.

25. An arrangement as claimed in claim 23 or 24 wherein the supply signal (V) is the power supply voltage or a fixed reference voltage.

**Revendications**

1. Dispositif pour le traitement de signaux de capteur,
   - qui sont fournis aussi bien par un capteur de mesure (1),
     -- qui génère, en réaction à l'effet physique d'une grandeur physique mesurée à enregistrer et d'une ou plusieurs grandeurs physiques perturbatrices, un effet de mesure $M_1$ qui dépend de la grandeur physique mesurée à enregistrer et des grandeurs physiques perturbatrices,
   - que par un ou plusieurs autres capteurs (4),
     -- qui génèrent des effets de mesure $M_2 ... M_n$ qui dépendent dans l'ensemble seulement des grandeurs physiques perturbatrices,
     dispositif selon lequel
   - le capteur de mesure (1) et chaque capteur (4) fournit un signal de sortie analogique qui est proportionnel au produit d'un effet de mesure avec un signal d'alimentation (V) amené jusqu'à eux,
   - le signal de sortie du capteur de mesure (1) et au moins un signal en rapport avec son signal d'alimentation (V) sont pondérés dans des premiers circuits de pondération (30, 32, 33) avec des premiers coefficients ($b_{11}$, $b_{21}$, $c_{21}$) ajustables en fonction des propriétés du capteur de mesure (1),
   - les signaux de sortie des autres capteurs (4) et au moins un signal en rapport avec leurs signaux d'alimentation (V) sont pondérés dans des deuxièmes circuits de pondération (31, 34, 35) avec des deuxièmes coefficients ($c_{11}$, $b_{12}$, $b_{1n}$, $b_{22}$, $b_{2n}$, $c_{12}$, $c_{1n}$, $c_{22}$, $c_{2n}$) ajustables en fonction des propriétés du capteur de mesure (1),
   - les signaux de sortie des premiers circuits de pondération (30, 32, 33) sont totalisés au moyen d'un premier circuit totalisateur (36) en une première somme
     $$S = b_{11} + b_{12} \cdot M_2 + ... + b_{1n} \cdot M_n + (b_{21} + b_{22} \cdot M_2 + ... + b_{2n} \cdot M_n) \cdot M_1$$
     et
   - les signaux de sortie des deuxièmes circuits de pondération (31, 34, 35) sont totalisés au moyen d'un deuxième circuit totalisateur (37) en une deuxième somme
     $$S_{ref} = c_{11} + c_{12} \cdot M_2 + ... + c_{1n} \cdot M_n + (c21 + c_{22} \cdot M_2 + ... + c_{2n} \cdot M_n) \cdot M_1$$
     et
   - un convertisseur analogique-numérique (38) avec une entrée de signal (38a) et une entrée de référence (38b),
     -- qui reçoit sur l'entrée de signal le signal de sortie du premier circuit totalisateur (36) et sur l'entrée de référence le signal de sortie du deuxième circuit totalisateur (37),

41

- fournit sur sa sortie (38c) un signal numérique qui correspond au rapport entre les signaux analogiques amenés à l'entrée de signal et les signaux analogiques amenés à l'entrée de référence et donc à une fonction de transfert de la forme

$$\frac{S}{S_{ref}} = \frac{b_{11} + b_{12} \cdot M_2 + \ldots + b_{1n} \cdot M_n + (b_{21} + b_{22} \cdot M_2 + \ldots + b_{2n} \cdot M_n) \cdot M_1}{c_{11} + c_{12} \cdot M_2 + \ldots + c_{1n} \cdot M_n + (c_{21} + c_{22} \cdot M_2 + \ldots + c_{2n} \cdot M_n) \cdot M_1}$$

2. Dispositif selon la revendication 1, selon lequel au moins l'un des autres capteurs (4) est une résistance (81) dépendante de la température et l'effet de mesure qu'il engendre est un rapport de tensions ($V_T$) dépendant de la température.

3. Dispositif selon la revendication 1, selon lequel le signal de sortie d'au moins un capteur sert à la formation du signal d'alimentation d'au moins un autre capteur.

4. Dispositif selon la revendication 1, selon lequel le convertisseur analogique-numérique (38) travaille selon le principe de l'équilibre du courant entre les courants amenés à l'entrée de signal (38a) et à l'entrée de référence (38b).

5. Dispositif pour le traitement de signaux de capteur,
   - qui sont fournis aussi bien par un capteur de mesure (1),
     -- qui génère, en réaction à l'effet physique d'une grandeur physique mesurée à enregistrer et d'une ou plusieurs grandeurs physiques perturbatrices, un effet de mesure $M_1$ qui dépend de la grandeur physique mesurée à enregistrer et des grandeurs physiques perturbatrices,
   - que par un ou plusieurs autres capteurs (4),
     -- qui génèrent des effets de mesure $M_2 \ldots M_n$ qui dépendent dans l'ensemble seulement des grandeurs physiques perturbatrices, dispositif selon lequel
   - les capteurs de signaux sont traités de façon analogique par transport de charge quantifié et équilibre de charge au moyen de structures à capacités commutées et
   - des paquets de charge constitués d'un effet de mesure pondéré ou de la somme de plusieurs effets de mesure pondérés sont inclus dans l'équilibre de charge de telle façon
     -- une grandeur de sortie S est constituée dont la relation par rapport à une grandeur de référence $S_{ref}$ est déterminée en fonction des effets de mesure $M_1, M_2 \ldots M_n$ formant les grandeurs d'entrée par la fonction de transfert suivante :

$$\frac{S}{S_{ref}} = \frac{b_{11} + b_{12} \cdot M_2 + \ldots + b_{1n} \cdot M_n + (b_{21} + b_{22} \cdot M_2 + \ldots + b_{2n} \cdot M_n) \cdot M_1}{c_{11} + c_{12} \cdot M_2 + \ldots + c_{1n} \cdot M_n + (c_{21} + c_{22} \cdot M_2 + \ldots + c_{2n} \cdot M_n) \cdot M_1}$$

dont les coefficients $b_{11} \ldots b_{2n}$, $c_{11} \ldots c_{2n}$ peuvent être ajustés pour obtenir le comportement au transfert souhaité en fonction des propriétés du capteur de mesure (1).

6. Dispositif selon la revendication 5, selon lequel des paquets de charge sont pris en compte dans l'équilibre de charge qui sont formés de signaux en rapport fixe avec les signaux d'alimentation des capteurs

7. Dispositif selon la revendication 5 ou 6 avec
   - un bloc de fonctions (53) avec des interrupteurs (55) actionnés de façon cyclique qui servent, en liaison avec au moins un condensateur, à la formation de paquets de charge de mesure,
   - un circuit de correction (73) avec des structures à capacités commutées pour la formation de paquets de charge de correction qui sont pondérés en fonction des coefficients de la fonction de transfert, et
   - un intégrateur (70) pour l'intégration des paquets de charge de mesure et des paquets de charge de correction, qui fournit en permanence un signal de sortie ($U_{A2}$) représentant le résultat de l'intégration.

8. Dispositif selon la revendication 7 avec un dispositif (71) qui déclenche un cycle de compensation chaque fois que l'on est au-dessus ou au-dessous d'une valeur-seuil prédéfinie par le signal de sortie de l'intégrateur (70), cycle au cours duquel on amène à l'intégrateur un paquet de charge de compensation par lequel il est remis à un état initial.

9. Dispositif selon la revendication 7 ou 8 avec un circuit de commande (67) pour l'actionnement cyclique des interrupteurs du bloc de fonctions (53) et du circuit de correction (73).

10. Dispositif selon les revendications 7 et 9, dans lequel le circuit de commande (67) modifie à chaque déclenchement d'un cycle de compensation l'actionnement cyclique des interrupteurs pour la formation d'un paquet de charge de compensation.

11. Dispositif selon l'une des revendications 7 à 10, dans lequel les paquets de charge de compensation sont constitués au moyen de structures à capacités commutées (75) du circuit de correction (73) ou au moyen du bloc de fonctions (53).

12. Dispositif selon l'une des revendications 7 à 11 dans lequel les phases de commutation de l'actionnement cyclique des interrupteurs qui sont déterminées par le circuit de commande (67) peuvent être ajustées pour le choix des signes des paquets de charge de correction et/ou pour le traitement des effets de mesure différents.

13. Dispositif selon l'une des revendications 7 à 12, dans lequel les valeurs de capacité des condensateurs du circuit de correction (73) peuvent être ajustées pour la pondération des paquets de charge en fonction des coefficients de la fonction de transfert.

14. Dispositif selon l'une des revendications 7 à 12, dans lequel la pondération de la tension lue par les structures à capacités commutées du circuit de correction (73) pour la production des paquets de charge peut être ajustée en fonction des coefficients de la fonction de transfert.

15. Dispositif selon la revendication 14, dans lequel un diviseur de tension réglable à résistance (82) est associé à chaque structure de condensateur/interrupteurs du circuit de correction (73).

16. Dispositif selon l'une des revendications 7 à 15, dans lequel le condensateur ou chacun des condensateurs (51, 52) agissant de concert avec les interrupteurs du bloc de fonctions (53) pour la formation des paquets de charge de mesure est un condensateur du capteur capacitif qui fournit l'effet de mesure $M_1$.

17. Dispositif selon la revendication 16, dans lequel le bloc de fonctions contient un diviseur de tension (54) sur lequel on prélève les tensions ($U_2$, $U_3$) qui servent à la formation des paquets de charge de mesure et qui est réglé pour l'adaptation des paquets de charge de mesure à la plage de service du circuit de traitement de signaux (2).

18. Dispositif selon l'une des revendications 7 à 15, dans lequel le capteur de mesure (1) est un demi-pont à résistance (140) ou un pont intégral à résistance (160) et le bloc de fonctions (150, 170) contient au moins un condensateur (152, 172) qui agit de concert avec les interrupteurs pour la formation des paquets de charge de mesure.

19. Dispositif selon la revendication 18, dans lequel le condensateur (152, 172) est réglé pour l'adaptation des paquets de charge de mesure à la plage de service du circuit.

20. Dispositif selon la revendication 7 et l'une des revendications 9 à 19, dans lequel le circuit de traitement de signaux (2) fournit un signal de sortie analogique approprié à la grandeur mesurée et l'alimentation du capteur de mesure (1) est influencée par la réinjection d'un signal de rétroaction en relation fixe avec le signal de sortie analogique pour obtenir l'équilibre de charge.

21. Dispositif selon la revendication 20, dans lequel le signal de rétroaction est utilisé périodiquement en alternance avec un signal d'alimentation pour l'alimentation du capteur de mesure (1).

22. Dispositif selon la revendication 21, dans lequel les structures à capacités commutées sont commandées de telle façon qu'elles génèrent les paquets de charge de mesure dépendants de l'effet de mesure en cas d'alimentation du capteur de mesure (1) avec le signal d'alimentation (V) et les paquets de charge de compensation indépendants de l'effet de mesure en cas d'alimentation du capteur avec le signal de rétroaction.

23. Dispositif selon l'une des revendications 20 à 22, dans lequel le signal d'alimentation (V) est une tension ($U_1$) et le signal de sortie analogique du circuit de traitement de signaux (2) est également une tension ($U_{A2}$) qui est utilisée également comme signal de rétroaction.

24. Dispositif selon l'une des revendications 20 à 22, dans lequel le signal d'alimentation (V) est une tension ($U_1$), le signal de sortie analogique du circuit de traitement de signaux (2) un courant ($I_A$) et le signal de rétroaction une tension ($U_{RA}$) proportionnelle au courant.

25. Dispositif selon la revendication 23 ou 24, dans lequel le signal d'alimentation (V) est la tension d'alimentation électrique ou une tension de référence fixe.

FIG.1

FIG.2

FIG.3

FIG.4

FIG. 5

FIG. 6

EP 0 445 267 B1

FIG. 7

FIG. 8

FIG. 9

FIG.10

FIG. 11

FIG. 12

FIG. 13

EP 0 445 267 B1

FIG. 14

FIG. 15

FIG. 16

FIG. 17

FIG. 18

FIG. 19

FIG. 20

EP 0 445 267 B1

FIG. 21